# EUROPEAN PATENT APPLICATION

(11) **EP 4 539 193 A1**
(43) Date of publication of application: **16.04.2025**
(21) Application number: 23819889.9
(22) Date of filing: 08.06.2023
(51) Int. Cl.: H01M 10/0567, H01M 4/13, H01M 4/133, H01M 4/36, H01M 4/38, H01M 4/48, H01M 4/587, H01M 10/052, H01M 10/054

(54) **ELECTROLYTE SOLUTION AND SECONDARY BATTERY USING SAME**

(30) Priority: 10.06.2022 JP 2022094162
(71) Applicant: DAIKIN INDUSTRIES, LTD., Osaka-shi, Osaka 530-0001 (JP)
(72) Inventor: HIDAKA, Tomoya, Osaka-shi, Osaka 530-0001 (JP); TERADA, Junpei, Osaka-shi, Osaka 530-0001 (JP); YAMAZAKI, Shigeaki, Osaka-shi, Osaka 530-0001 (JP); SHIMOOKA, Toshiharu, Osaka-shi, Osaka 530-0001 (JP); FUJI, Mariko, Osaka-shi, Osaka 530-0001 (JP); FUJIWARA, Kae, Osaka-shi, Osaka 530-0001 (JP)
(74) Representative: Hoffmann Eitle
(86) International application number: PCT/JP2023/021346
(87) International publication number: WO 2023/238909

(57) **Abstract**

Provided are an electrolytic solution that can allow a secondary battery comprising a silicon negative electrode to be improved in life and suppressed in an increase in resistance, and a secondary battery using the electrolytic solution. An electrolytic solution for use in a battery comprising an electrode having a negative electrode material containing a silicon element and a carbon element, wherein the electrolytic solution comprises less than 10% by mass of a fluorinated ether represented by the following general formula (1):

HCF₂CF₂-0-R (1)

wherein R is a fluorinated alkyl group.

## Description

### Technical Field

The present disclosure relates to electrolytic solutions and secondary batteries using the same.

### Background Art

There is reported improvement of the life in a high-voltage region by using fluoroether including 1,1,2,2-tetrafluoroethyl-2,2,3,3-tetrafluoropropyl ether, as a solvent of an electrolytic solution for lithium ion batteries (Non-Patent Literature 1). Specifically, there is disclosed improvement of high-voltage operation characteristics by using a lithium metal as a negative electrode and LiNi_{0.5}Mn_{1.5}O₄ as a positive electrode, and mixing various fluoroethers such as 1,1,2,2-tetrafluoroethyl-2,2,3,3-tetrafluoropropyl ether and propylene carbonate and using the resulting mixture as a solvent.

There is also reported improvement of life by using fluoroethylene carbonate as an additive in a silicon negative electrode (Non-Patent Literature 2).

### Citation List

### Non Patent Literature

Non Patent Literature 1: Journal of the Electrochemical Society, 164 (1) A6412-A6416 (2017)
Non Patent Literature 2: Journal of the Electrochemical Society, 163 (8) A1705-A1716 (2016)

### Summary of Invention

### Technical Problem

The present disclosure aims to provide an electrolytic solution that can allow a secondary battery comprising a silicon negative electrode to be improved in life and suppressed in an increase in resistance, and a secondary battery using the electrolytic solution.

### Solution to Problem

The present disclosure relates to an electrolytic solution for use in a battery comprising an electrode having a negative electrode material containing a silicon element and a carbon element, wherein the electrolytic solution comprises less than 10% by mass of a fluorinated ether represented by the following general formula (1):

HCF₂CF₂-O-R (1)

wherein R is a fluorinated alkyl group.

The fluorinated ether represented by the general formula (1) is preferably at least one fluorinated ether selected from the group consisting of fluoroethers represented by the following general formulas (2) to (4).

HCF₂CF₂-O-CH₂CF₂CF₂H (2)

HCF₂CF₂-O-CH₂CF₂CF₃ (3)

HCF₂CF₂-O-CH₂CF₃ (4)

The negative electrode material preferably contains Si and/or SiOa (0 < a < 2), and a carbon compound.

The present disclosure also relates to a secondary battery comprising the above electrolytic solution.

The negative electrode material in the secondary battery preferably contains Si and/or SiOa (0 < a < 2), and a carbon compound.

### Advantageous Effect of Invention

The present disclosure can provide an electrolytic solution that can allow a secondary battery comprising a silicon negative electrode to be improved in life and suppressed in an increase in resistance. A secondary battery using the electrolytic solution of the present disclosure is also improved in battery life and is suppressed in an increase in resistance.

### Description of Embodiments

Hereinafter, the present disclosure will be concretely described.

An electrolytic solution of the present disclosure is an electrolytic solution to be suitably used in a battery comprising an electrode including a negative electrode material having a silicon element and a carbon element, and includes less than 10% by mass of a fluorinated ether represented by the following general formula (1):

HCF₂CF₂-O-R (1)

wherein R is a fluorinated alkyl group.

The present disclosure relates to an electrolytic solution for use in a secondary battery including a silicon negative electrode described above.

In the present disclosure, the above specific fluorinated ether is used in a specific amount as an additive for an electrolytic solution for a lithium ion secondary battery, and thus lithium fluoride (LiF) is formed as a reducing film on the silicon negative electrode and such formation allows a more significant improvement in life and suppression of an increase in resistance to be achieved.

The lower limit of the amount of LiF formed above is preferably 3.0 µg/cm², further preferably 3.1 µg/cm², particularly preferably 3.2 µg/cm². The upper limit is preferably 4.1 µg/cm², further preferably 3.9 µg/cm². If the amount of LiF formed on the negative electrode is too small, improvements in life characteristics are not sufficiently obtained in some cases, and if the amount is too large, resistance tends to be increased.

### (Fluorinated Ether)

The electrolytic solution of the present disclosure includes less than 10% by mass of a fluorinated ether represented by the following general formula (1):

HCF₂CF₂-O-R (1)

wherein R is a fluorinated alkyl group.

The alkyl fluoride group is preferably a fluorinated alkyl group having 1 to 10 carbon atoms. In particular, a fluorinated alkyl group having 2 to 6 carbon atoms is more preferred.

An excessively small number of carbon atoms in the alkyl fluoride group tends to lead to a lower boiling point, and an excessively large number of carbon atoms in the alkyl fluoride group tends to lead to an increased viscosity.

The fluorinated ether preferably has a fluorine content of 40 to 75% by mass. The fluorinated ether, when having a fluorine content in this range, is especially excellent in balance between non-flammability and miscibility. This range is preferred also in terms of favorable oxidation resistance and safety.

The lower limit of the fluorine content is more preferably 45% by mass, further preferably 50% by mass, particularly preferably 55% by mass. The upper limit is more preferably 70% by mass, further preferably 69% by mass.

The fluorine content of the fluorinated ether (I) is a value calculated based on the structural formula of the fluorinated ether (I) **by:** {(Number of fluorine atoms × 19)/Molecular weight of fluorinated ether (I)} × 100(%).

Examples of R include -CH₂CF₂CF₃, -CF₂CFHCF₃, - CF₂CF₂CF₂H, -CH₂CF₂CF₂H, -CH₂CH₂CF₂CF₃, -CH₂CF₂CFHCF₃, - CF₂CF₂CF₂CF₂H, -CH₂CF₂CF₂CF₂H, -CH₂CH₂CF₂CF₂H, -CH₂CF(CF₃)CF₂H, -CF₂CF₂H, -CH₂CF₂H, -CH₂CF₃, and -CF₂CH₃.

Specific examples of the fluorinated ether (I) include HCF₂CF₂-O-CH₂CF₂CF₂H, HCF₂CF₂-O-CH₂CF₂CF₃, HCF₂CF₂-O-CH₂CF₃, HCF₂CF₂-O-CF₂CFHCF₃, HCF₂CF₂-O-CF₂CF₂CF₂H, HCF₂CF₂-O-CH₂CH₂CF₂CF₃, HCF₂CF₂-O-CH₂CF₂CFHCF₃, HCF₂CF₂-O-CF₂CF₂CF₂CF₂H, HCF₂CF₂-O-CH₂CF₂CF₂CF₂H, HCF₂CF₂-O-CH₂CH₂CF₂CF₂H, HCF₂CF₂-O-CH₂CF(CF₃)CF₂H, HCF₂CF₂-O-CF₂CF₂H, and HCF₂CF₂-O-CH₂CF₂H.

The fluorinated ether represented by the general formula (1) is, in particular, preferably at least one fluorinated ether selected from the group consisting of fluorinated ethers represented by the following general formulas (2) to (4).

HCF₂CF₂-O-CH₂CF₂CF₂H (2)

HCF₂CF₂-O-CH₂CF₂CF₃ (3)

HCF₂CF₂-O-CH₂CF₃ (4)

In particular, any fluorinated ether represented by the general formulas (2) to (4) is included as an additive in the electrolytic solution, and thus an advantage is that lithium fluoride (LiF) is formed as a reducing film on the silicon negative electrode and such formation allows a more significant improvement in life and suppression of an increase in resistance.

The content of the fluorinated ether is needed to be less than 10% by mass in the electrolytic solution. The range can allow for use as a favorable electrolytic solution. In other words, if the content is higher, the electrolytic solution is increased in viscosity and decreased in ion conductivity, and thus the battery life is decreased.

The upper limit of the content of the above fluorinated ether is preferably 9.0% by mass, further preferably 5.0% by mass.

The lower limit of the content of the above fluorinated ether is preferably 0.001% by mass, further preferably 0.01% by mass.

The electrolytic solution of the present disclosure preferably includes a solvent.

The solvent preferably contains at least one selected from the group consisting of a carbonate and a carboxylate.

The carbonate may be a cyclic carbonate or a chain carbonate.

The cyclic carbonate may be a non-fluorinated cyclic carbonate or a fluorinated cyclic carbonate.

An example of the non-fluorinated cyclic carbonate includes a non-fluorinated saturated cyclic carbonate. Preferred is a non-fluorinated saturated alkylene carbonate having an alkylene group having 2 to 6 carbon atoms, and more preferred is a non-fluorinated saturated alkylene carbonate having an alkylene group having 2 to 4 carbon atoms.

Of these, in respect of high permittivity and a suitable viscosity, the non-fluorinated saturated cyclic carbonate is preferably at least one selected from the group consisting of ethylene carbonate, propylene carbonate, cis-2,3-pentylene carbonate, cis-2,3-butylene carbonate, 2,3-pentylene carbonate, 2,3-butylene carbonate, 1,2-pentylene carbonate, 1,2-butylene carbonate, and butylene carbonate.

One of the non-fluorinated saturated cyclic carbonates may be used singly, or two or more thereof may be used in any combination at any ratio.

When the non-fluorinated saturated cyclic carbonate is contained, the content of the non-fluorinated saturated cyclic carbonate is preferably 5 to 90% by volume, more preferably, 10 to 60% by volume, further preferably, 15 to 40% by volume with respect to the solvent.

The fluorinated cyclic carbonate is a cyclic carbonate having a fluorine atom. A solvent containing a fluorinated cyclic carbonate can be suitably used also at a high voltage.

The term "high voltage" herein means a voltage of 4.2 V or more. The upper limit of the "high voltage" is preferably 4.9 V.

The fluorinated cyclic carbonate may be a fluorinated saturated cyclic carbonate or a fluorinated unsaturated cyclic carbonate.

The fluorinated saturated cyclic carbonate is a saturated cyclic carbonate having a fluorine atom. Specific examples thereof include a compound represented by the following general formula (A): 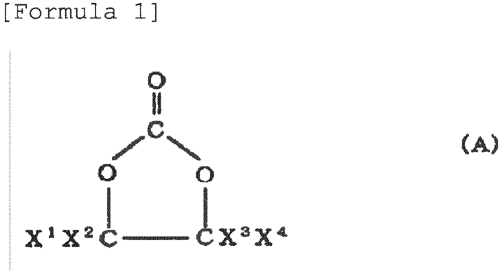 wherein X¹ to X⁴ are the same as or different from each other, and are each -H, -CH₃, -C₂H₅, -F, a fluorinated alkyl group optionally having an ether bond, or a fluorinated alkoxy group optionally having an ether bond; provided that at least one of X¹ to X⁴ is -F, a fluorinated alkyl group optionally having an ether bond, or a fluorinated alkoxy group optionally having an ether bond. Examples of the fluorinated alkyl group include - CF₃, -CF₂H, and -CH₂F.

In the case where the electrolytic solution of the present disclosure, when containing the fluorinated saturated cyclic carbonate, is applied to a high-voltage lithium ion secondary battery or the like, the oxidation resistance of the electrolytic solution can be improved, and stable and excellent charge and discharge characteristics can be provided.

The term "ether bond" herein means a bond represented by -O-.

In respect of favorable permittivity and oxidation resistance, one or two of X¹ to X⁴ is/are each preferably -F, a fluorinated alkyl group optionally having an ether bond, or a fluorinated alkoxy group optionally having an ether bond.

In anticipation of decrease in a viscosity at low temperature, increase in the flash point, and improvement in the solubility of an electrolyte salt, X¹ to X⁴ are each preferably -H, -F, a fluorinated alkyl group (a), a fluorinated alkyl group having an ether bond (b), or a fluorinated alkoxy group (c).

The fluorinated alkyl group (a) is a group obtainable by replacing at least one hydrogen atom of an alkyl group by a fluorine atom. The fluorinated alkyl group (a) has preferably 1 to 20 carbon atoms, more preferably 1 to 17 carbon atoms, further preferably 1 to 7 carbon atoms, particularly preferably 1 to 5 carbon atoms.

An excessively large number of carbon atoms may lead to deterioration of the low-temperature characteristics and decrease in the solubility of an electrolyte salt, and an excessively small number of carbon atoms may lead to decrease in the solubility of an electrolyte salt, decrease in discharge efficiency, and furthermore increase in viscosity, and the like.

Examples of the fluorinated alkyl group (a) having 1 carbon atom include CFH₂-, CF₂H-, and CF₃-. In respect of high-temperature storage characteristics, particularly preferred is CF₂H- or CF₃-, and most preferred is CF₃-.

In respect of favorable solubility of an electrolyte salt, among the above fluorinated alkyl groups (a), a preferred example of the group (a) having 2 or more carbon atoms includes a fluorinated alkyl group represented by the following general formula (a-1):

R¹-R²- (a-1)

wherein R¹ is an alkyl group having one or more carbon atoms and optionally having a fluorine atom; R² is an alkylene group having 1 to 3 carbon atoms and optionally having a fluorine atom; provided that at least one of R¹ and R² has a fluorine atom.

R¹ and R² each may further have an atom other than carbon, hydrogen, and fluorine atoms.

R¹ is an alkyl group having one or more carbon atoms and optionally having a fluorine atom. R¹ is preferably a linear or branched chain alkyl group having 1 to 16 carbon atoms. R¹ has more preferably 1 to 6 carbon atoms, further preferably 1 to 3 carbon atoms.

Specific examples of linear or branched chain alkyl groups for R¹ include CH₃-, CH₃CH₂-, CH₃CH₂CH₂-, CH₃CH₂CH₂CH₂-, and

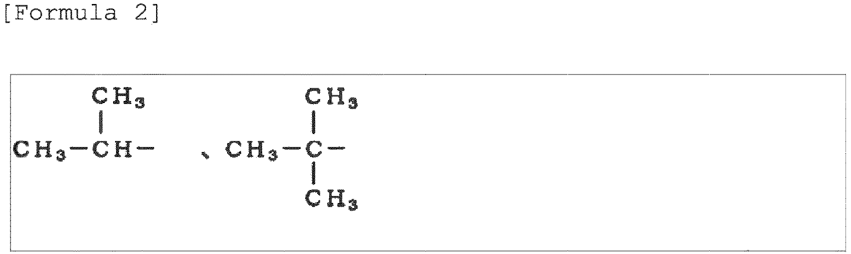

When R¹ is a linear alkyl group having a fluorine atom, examples of R¹ include CF₃-, CF₃CH₂-, CF₃CF₂-, CF₃CH₂CH₂-, CF₃CF₂CH₂-, CF₃CF₂CF₂-, CF₃CH₂CF₂-, CF₃CH₂CH₂CH₂-, CF₃CF₂CH₂CH₂-, CF₃CH₂CF₂CH₂-, CF₃CF₂CF₂CH₂-, CF₃CF₂CF₂CF₂-, CF₃CF₂CH₂CF₂-, CF₃CH₂CH₂CH₂CH₂-, CF₃CF₂CH₂CH₂CH₂-, CF₃CH₂CF₂CH₂CH₂-, CF₃CF₂CF₂CH₂CH₂-, CF₃CF₂CF₂CF₂CH₂-, CF₃CF₂CH₂CF₂CH₂-, CF₃CF₂CH₂CH₂CH₂CH₂-, CF₃CF₂CF₂CF₂CH₂CH₂-, CF₃CF₂CH₂CF₂CH₂CH₂-, HCF₂-, HCF₂CH₂-, HCF₂CF₂-, HCF₂CH₂CH₂-, HCF₂CF₂CH₂-, HCF₂CH₂CF₂-, HCF₂CF₂CH₂CH₂-, HCF₂CH₂CF₂CH₂-, HCF₂CF₂CF₂CF₂-, HCF₂CF₂CH₂CH₂CH₂-, HCF₂CH₂CF₂CH₂CH₂-, HCF₂CF₂CF₂CF₂CH₂-, HCF₂CF₂CF₂CF₂CH₂CH₂-, FCH₂-, FCH₂CH₂-, FCH₂CF₂-, FCH₂CF₂CH₂-, FCH₂CF₂CF₂-, CH₃CF₂CH₂-, CH₃CF₂CF₂-, CH₃CF₂CH₂CF₂-, CH₃CF₂CF₂CF₂-, CH₃CH₂CF₂CF₂-, CH₃CF₂CH₂CF₂CH₂-, CH₃CF₂CF₂CF₂CH₂-, CH₃CF₂CF₂CH₂CH₂-, CH₃CH₂CF₂CF₂CH₂-, CH₃CF₂CH₂CF₂CH₂CH₂-, CH₃CF₂CH₂CF₂CH₂CH₂-, HCFClCF₂CH₂-, HCF₂CFClCH₂-, HCF₂CFClCF₂CFClCH₂-, and HCFClCF₂CFClCF₂CH₂.

When R¹ is a branched chain alkyl group having a fluorine atom, preferred examples of R¹ include:

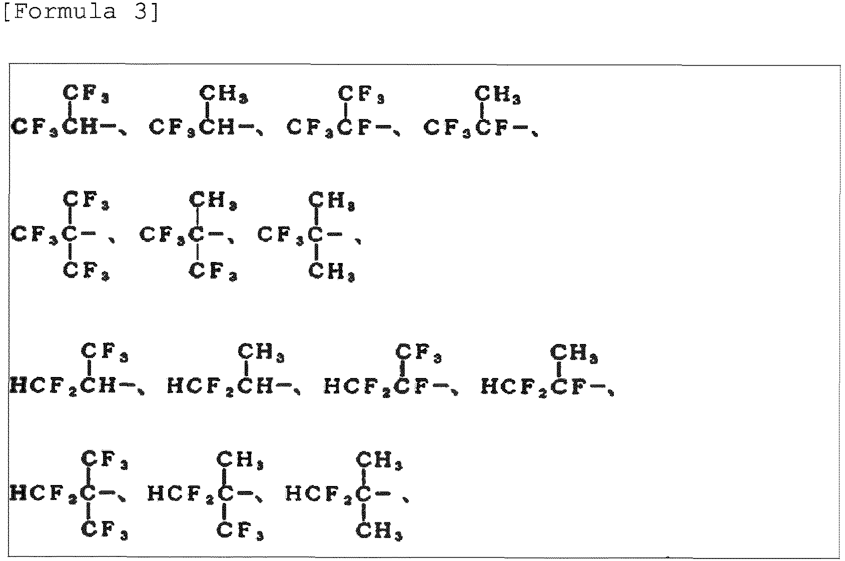

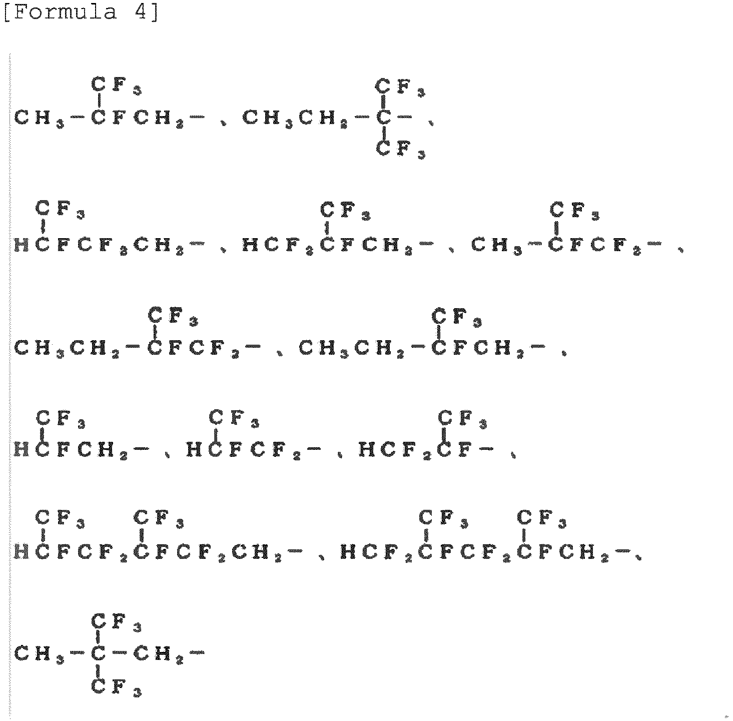

However, if a branch such as CH₃- or CF₃- is contained, the viscosity is likely to increase. Thus, the number of such branches is more preferably small (one) or zero.

R² is an alkylene group having 1 to 3 carbon atoms and optionally having a fluorine atom. R² may be linear or branched chain. Examples of a minimum structural unit constituting such a linear or branched chain alkylene group are shown below. R² is constituted by one or combination of these units.
(i) Linear Minimum Structural Units:
   -CH₂-, -CHF-, -CF₂-, -CHCl-, -CFCl-, -CCl₂-
(ii) Branched Chain Minimum Structural Units:

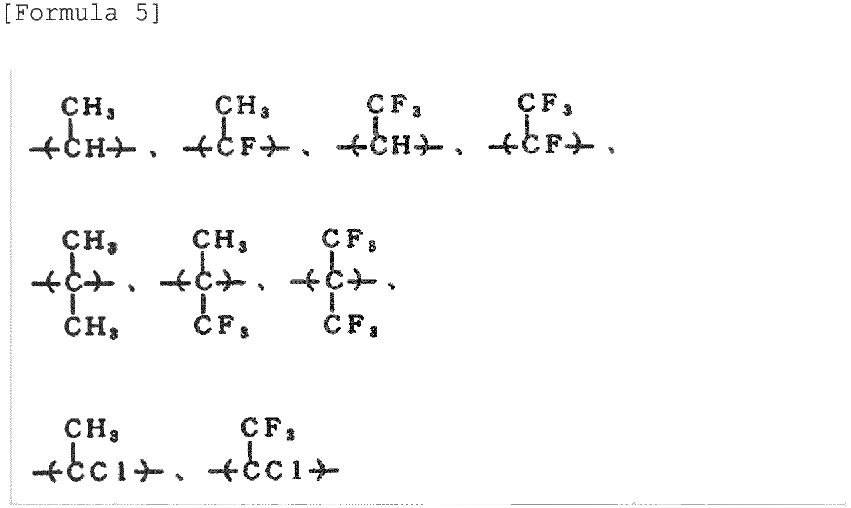

R² is preferably constituted by Cl-free structural units among these examples, because such units may not be dehydrochlorinated by a base and thus may be more stable.

When being linear, R² is composed only of any of the above linear minimum structural units, and is preferably -CH₂-, -CH₂CH₂-, or CF₂- among these. Since the solubility of an electrolyte salt can be further improved, -CH₂- or -CH₂CH₂- is more preferred.

When being branched chain, R² includes at least one of the above branched chain minimum structural units. A preferred example thereof is a group represented by the general formula: -(CX^{a}X^{b})-, wherein X² is H, F, CH₃, or CF₃; X^{b} is CH₃ or CF₃; provided that, when X^{b} is CF₃, X² is H or CH₃. Such groups can much further particularly improve the solubility of an electrolyte salt.

Preferred examples of the fluorinated alkyl group (a) include CF₃CF₂-, HCF₂CF₂-, H₂CFCF₂-, CH₃CF₂-, CF₃CHF-, CH₃CF₂-, CF₃CF₂CF₂-, HCF₂CF₂CF₂-, H₂CFCF₂CF₂-, CH₃CF₂CF₂-, 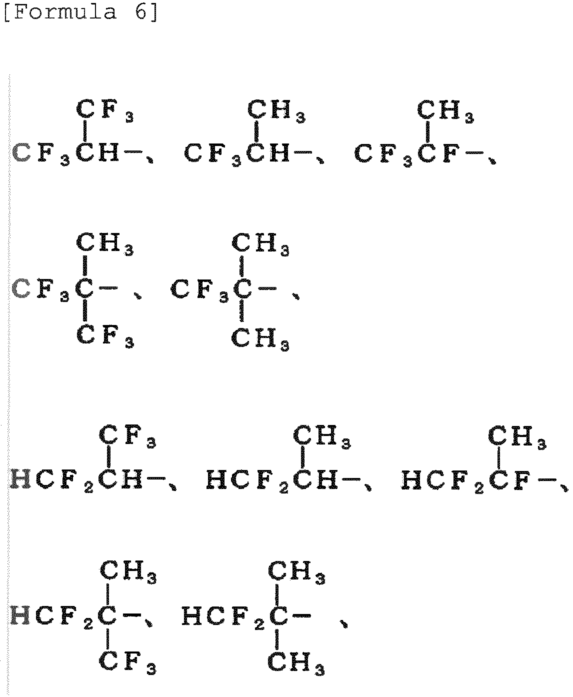 and 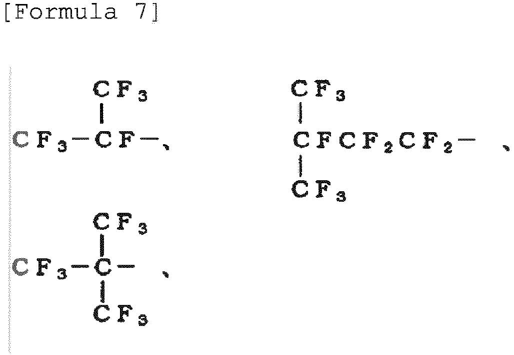 •

The above fluorinated alkyl group having an ether bond (b) is a group obtainable by replacing at least one hydrogen atom of an alkyl group having an ether bond by a fluorine atom. The fluorinated alkyl group having an ether bond (b) preferably has 2 to 17 carbon atoms. An excessively large number of carbon atoms may lead to increase in the viscosity of the fluorinated saturated cyclic carbonate and also increase of fluorine-containing groups. Thus, there may be observed decrease in the solubility of an electrolyte salt due to reduction in permittivity, and decrease in miscibility with other solvents. From this viewpoint, the fluorinated alkyl group having an ether bond (b) has more preferably 2 to 10 carbon atoms, further preferably 2 to 7 carbon atoms.

The alkylene group which constitutes the ether moiety of the fluorinated alkyl group having an ether bond (b) may be a linear or branched chain alkylene group. Examples of a minimum structural unit constituting such a linear or branched chain alkylene group are shown below.
(i) Linear Minimum Structural Units:
   -CH₂-, -CHF-, -CF₂-, -CHCl-, -CFCl-, -CCl₂-
(ii) Branched chain Minimum Structural Units:

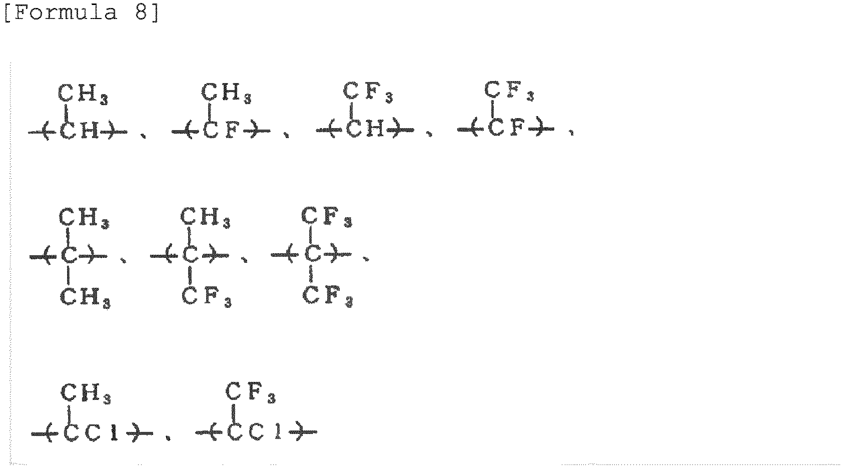

The alkylene group may be constituted by one of these minimum structural units, or may be constituted by linear units (i), by branched chain units (ii), or by a combination of a linear unit (i) and a branched chain unit (ii). Preferred specific examples will be described below in detail.

The alkylene group is preferably constituted by Cl-free structural units among these examples, because such units may not be dehydrochlorinated by a base and thus may be more stable.

A further preferred example of the fluorinated alkyl group having an ether bond (b) includes a group represented by the general formula (b-1):

R³-(OR⁴ )ₙ₁- (b-1)

wherein R³ is preferably an alkyl group having 1 to 6 carbon atoms and optionally having a fluorine atom; R⁴ is preferably an alkylene group having 1 to 4 carbon atoms and optionally having a fluorine atom; n1 is an integer of 1 to 3; provided that at least one of R³ and R⁴ has a fluorine atom.

Examples of R³ and R⁴ include the following groups, and any appropriate combination of these groups can provide, but not limited to, the fluorinated alkyl group having an ether bond (b) represented by the general formula (b-1).
(1) R³ is preferably an alkyl group represented by the general formula: X^{c}₃C-(R⁵)ₙ₂-, wherein three X^{c}'s are the same as or different from each other, and are each H or F; R⁵ is an alkylene group having 1 to 5 carbon atoms and optionally having a fluorine atom; and n2 is 0 or 1.

When n2 is 0, examples of R³ include CH₃-, CF₃-, HCF₂-, and H₂CF-.

When n2 is 1, specific examples of R³ which is a linear group include CF₃CH₂-, CF₃CF₂-, CF₃CH₂CH₂-, CF₃CF₂CH₂-, CF₃CF₂CF₂-, CF₃CH₂CF₂-, CF₃CH₂CH₂CH₂-, CF₃CF₂CH₂CH₂-, CF₃CH₂CF₂CH₂-, CF₃CF₂CF₂CH₂-, CF₃CF₂CF₂CF₂-, CF₃CF₂CH₂CF₂-, CF₃CH₂CH₂CH₂CH₂-, CF₃CF₂CH₂CH₂CH₂-, CF₃CH₂CF₂CH₂CH₂-, CF₃CF₂CF₂CH₂CH₂-, CF₃CF₂CF₂CF₂CH₂-, CF₃CF₂CH₂CF₂CH₂-, CF₃CF₂CH₂CH₂CH₂CH₂-, CF₃CF₂CF₂CF₂CH₂CH₂-, CF₃CF₂CH₂CF₂CH₂CH₂-, HCF₂CH₂-, HCF₂CF₂-, HCF₂CH₂CH₂-, HCF₂CF₂CH₂-, HCF₂CH₂CF₂-, HCF₂CF₂CH₂CH₂-, HCF₂CH₂CF₂CH₂-, HCF₂CF₂CF₂CF₂-, HCF₂CF₂CH₂CH₂CH₂-, HCF₂CH₂CF₂CH₂CH₂-, HCF₂CF₂CF₂CF₂CH₂-, HCF₂CF₂CF₂CF₂CH₂CH₂-, FCH₂CH₂-, FCH₂CF₂-, FCH₂CF₂CH₂-, CH₃CF₂-, CH₃CH₂-, CH₃CF₂CH₂-, CH₃CF₂CF₂-, CH₃CH₂CH₂-, CH₃CF₂CH₂CF₂-, CH₃CF₂CF₂CF₂-, CH₃CH₂CF₂CF₂-, CH₃CH₂CH₂CH₂-, CH₃CF₂CH₂CF₂CH₂-, CH₃CF₂CF₂CF₂CH₂-, CH₃CF₂CF₂CH₂CH₂-, CH₃CH₂CF₂CF₂CH₂-, CH₃CF₂CH₂CF₂CH₂CH₂-, CH₃CH₂CF₂CF₂CH₂CH₂-, and CH₃CF₂CH₂CF₂CH₂CH₂-.

Examples thereof in which n2 is 1 and R³ is a branched chain group include:

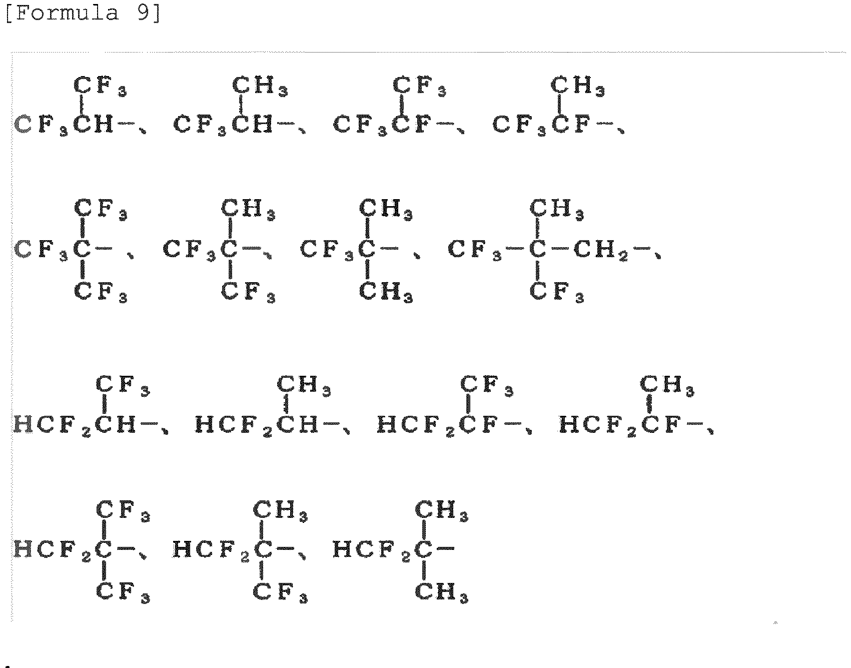

However, if a branch such as CH₃- or CF₃- is contained, the viscosity is likely to increase. Thus, those in which R³ is a linear group are more preferred.

(2) In -(OR⁴)ₙ₁- of the general formula (b-1), n1 is an integer of 1 to 3, preferably 1 or 2. When n1 is 2 or 3, R⁴'s may be the same as or different from each other.

Preferred specific examples of R⁴ include the following linear or branched chain groups.

Examples of R⁴ which is a linear group include -CH₂-, -CHF-, -CF₂-, -CH₂CH₂-, -CF₂CH₂-, -CF₂CF₂-, -CH₂CF₂-, - CH₂CH₂CH₂-, -CH₂CH₂CF₂-, -CH₂CF₂CH₂-, -CH₂CF₂CF₂-, -CF₂CH₂CH₂-, -CF₂CF₂CH₂-, -CF₂CH₂CF₂-, and -CF₂CF₂CF₂-.

Examples of R⁴ which is a branched chain group include:

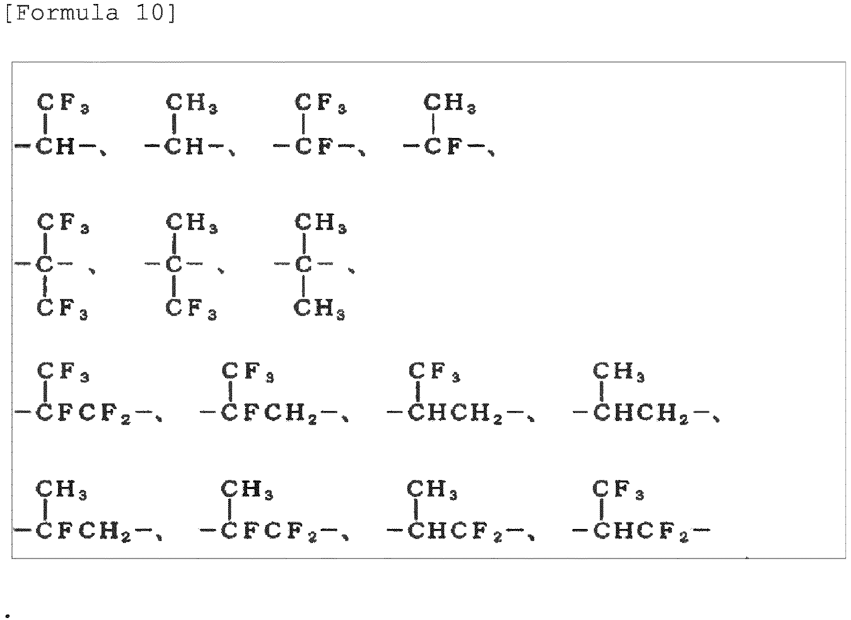

The fluorinated alkoxy group (c) is a group obtainable by replacing at least one hydrogen atom of an alkoxy group by a fluorine atom. The fluorinated alkoxy group (c) has preferably 1 to 17 carbon atoms, more preferably 1 to 6 carbon atoms.

The fluorinated alkoxy group (c) is particularly preferably a fluorinated alkoxy group represented by the general formula: X^{d}₃C-(R⁶)ₙ₃-O-, wherein three X^{d}'s are the same as or different from each other, and are each H or F; R⁶ is an alkylene group having 1 to 5 carbon atoms and optionally having a fluorine atom; n3 is 0 or 1; provided that any of the three X^{d}'s contains a fluorine atom.

Specific examples of the fluorinated alkoxy group (c) include fluorinated alkoxy groups in which an oxygen atom binds to an end of an alkyl group, mentioned as an example for R¹ in the general formula (a-1).

The fluorinated alkyl group (a), the fluorinated alkyl group having an ether bond (b), and the fluorinated alkoxy group (c) in the fluorinated saturated cyclic carbonate each preferably have a fluorine content of 10% by mass or more. An excessively low fluorine content may not sufficiently achieve an effect of reducing the viscosity at low temperature and an effect of increasing the flash point. From this viewpoint, the fluorine content is more preferably 12% by mass or more, further preferably 15% by mass or more. The upper limit thereof is usually 76% by mass.

The fluorine content of each of the fluorinated alkyl group (a), the fluorinated alkyl group having an ether bond (b), and the fluorinated alkoxy group (c) is a value calculated based on each structural formula thereof by: [(Number of fluorine atoms × 19)/(Formula weight of each group)] × 100 (%).

In view of favorable permittivity and oxidation resistance, the fluorine content in the total fluorinated saturated cyclic carbonate is preferably 10% by mass or more, more preferably 15% by mass or more. The upper limit thereof is usually 76% by mass.

The fluorine content in the fluorinated saturated cyclic carbonate is a value calculated based on the structural formula of the fluorinated saturated cyclic carbonate by: [(Number of fluorine atoms × 19)/(Molecular weight of fluorinated saturated cyclic carbonate)] × 100 (%).

Specific examples of the fluorinated saturated cyclic carbonate include the following.

Specific examples of the fluorinated saturated cyclic carbonate in which at least one of X¹ to X⁴ is -F include: 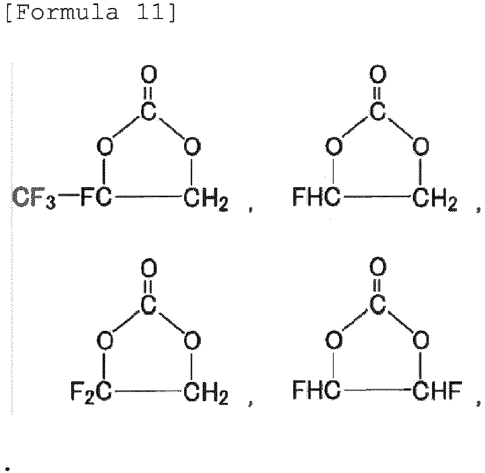 These compounds have a high withstand voltage and also give favorable solubility of an electrolyte salt.

Alternatively, 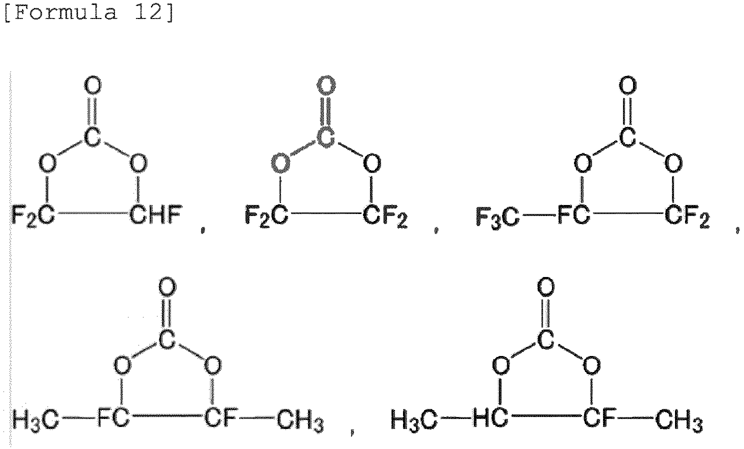 and the like may be used.

Specific examples of the fluorinated saturated cyclic carbonate in which at least one of X¹ to X⁴ is a fluorinated alkyl group (a) and the others are -H include 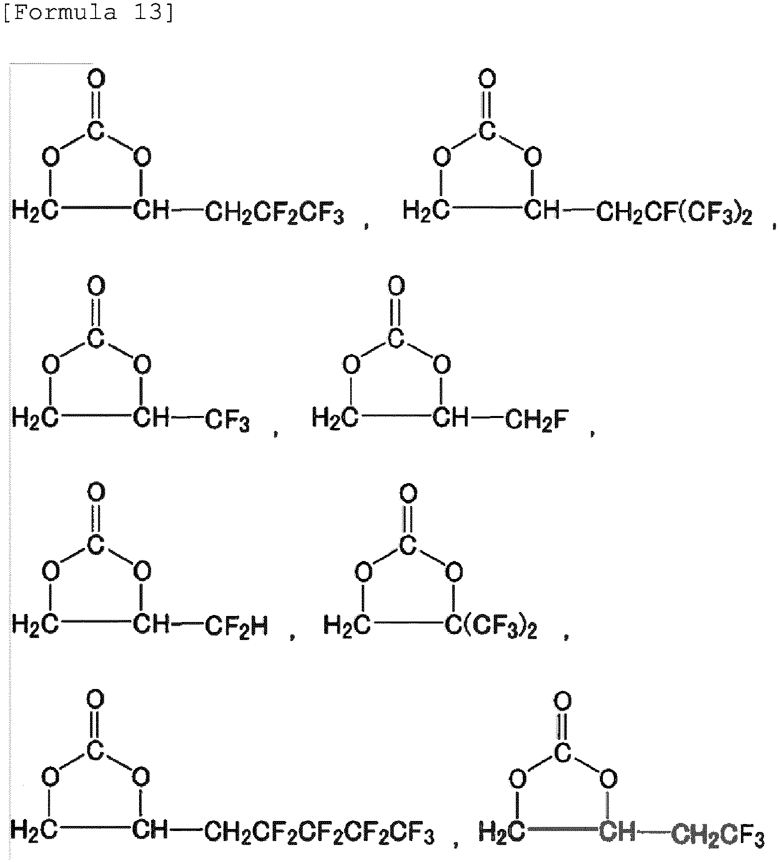 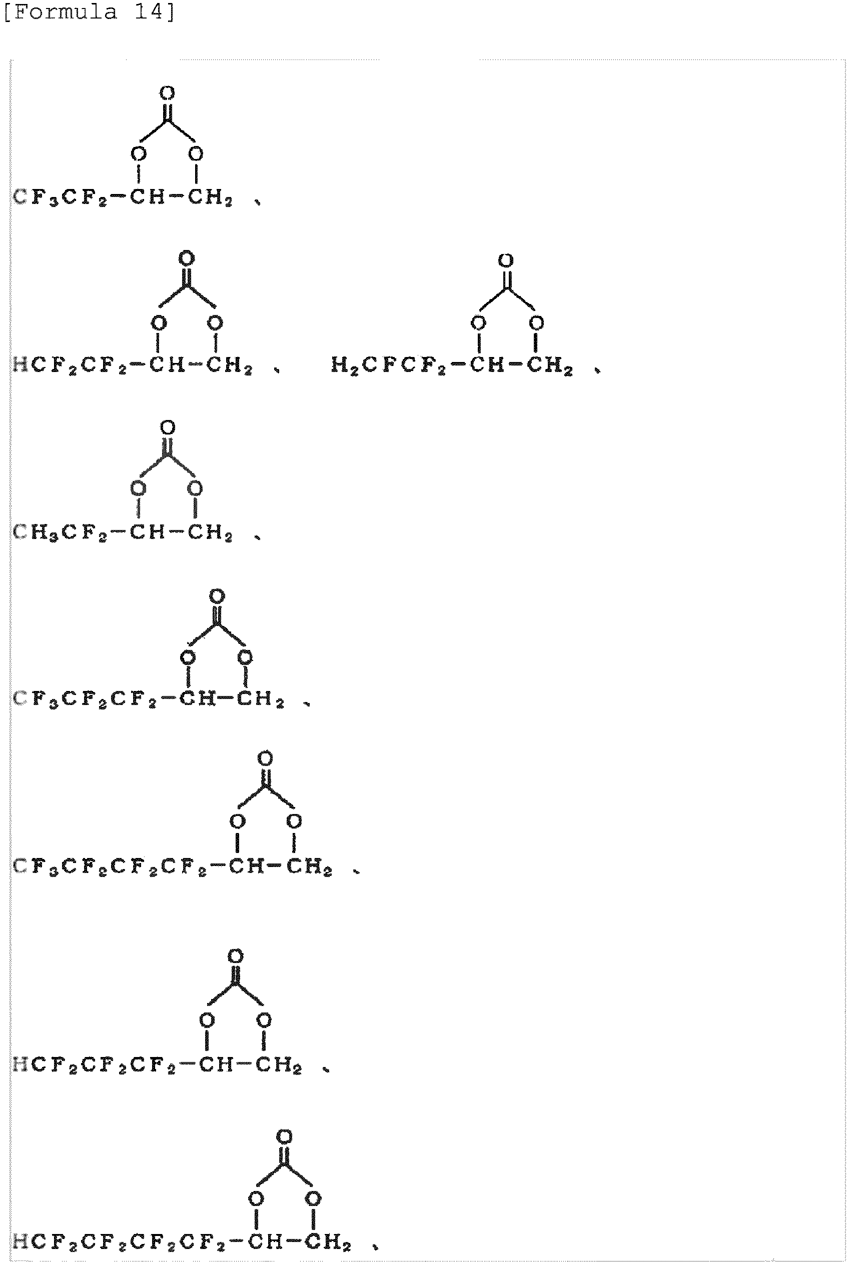 and

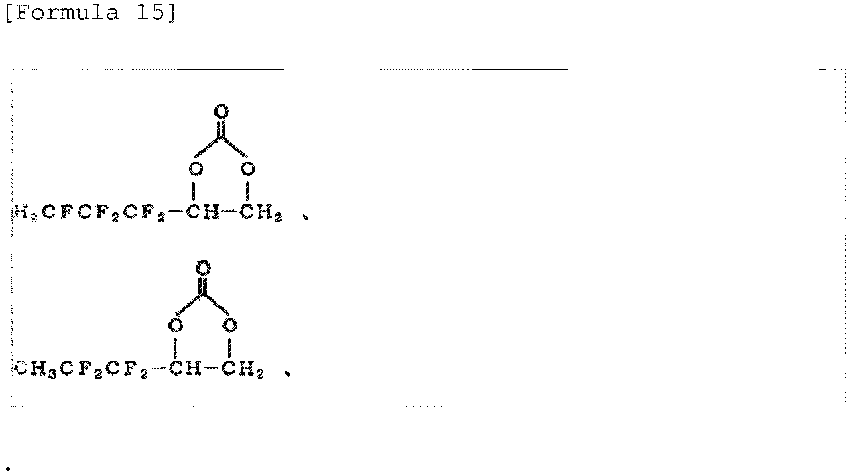

Specific examples of the fluorinated saturated cyclic carbonate in which at least one of X¹ to X⁴ is a fluorinated alkyl group having an ether bond (b) or a fluorinated alkoxy group (c) and the others are -H include 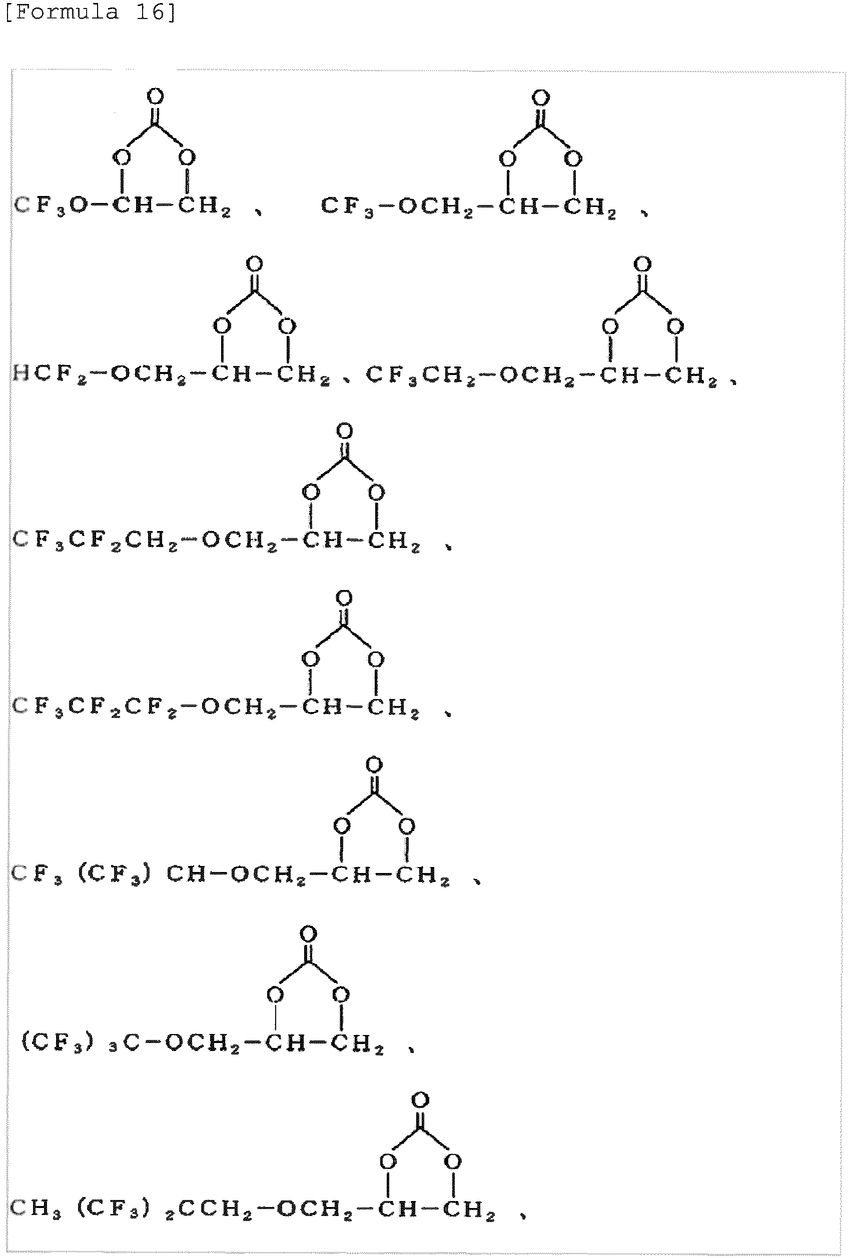 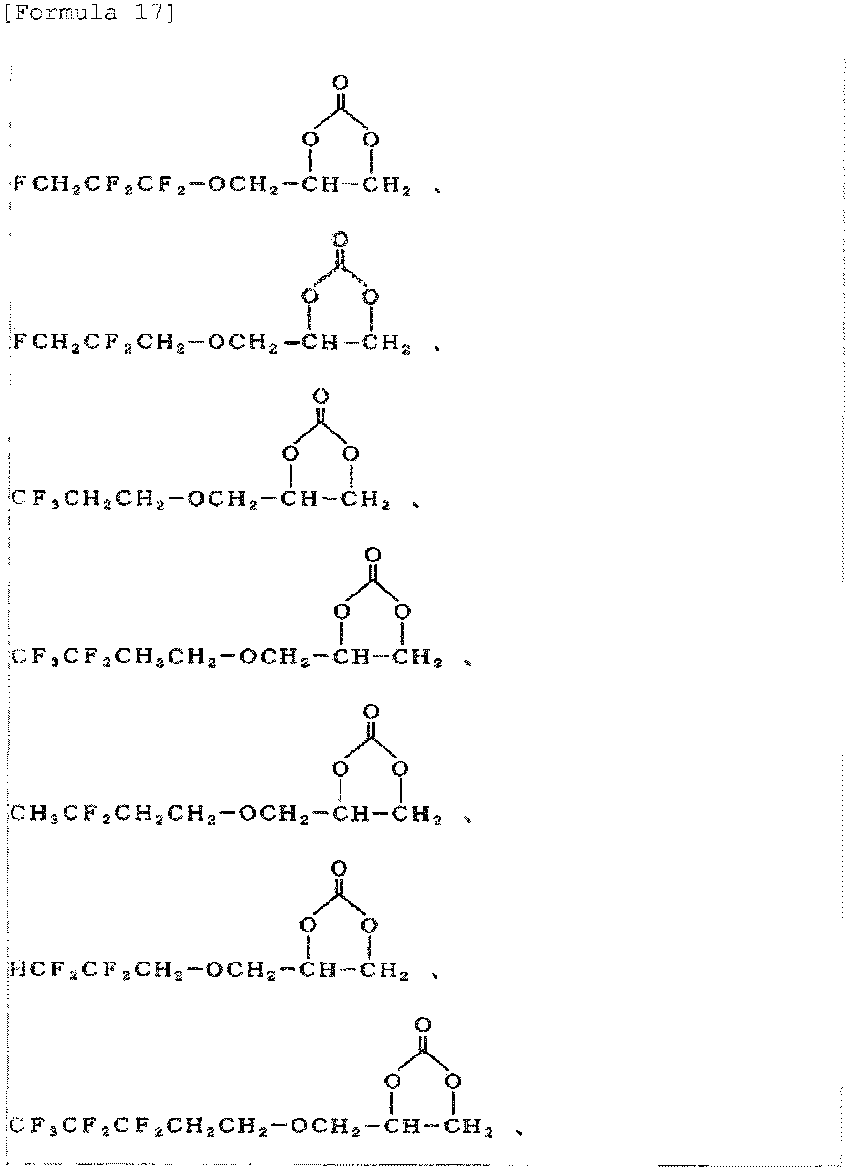 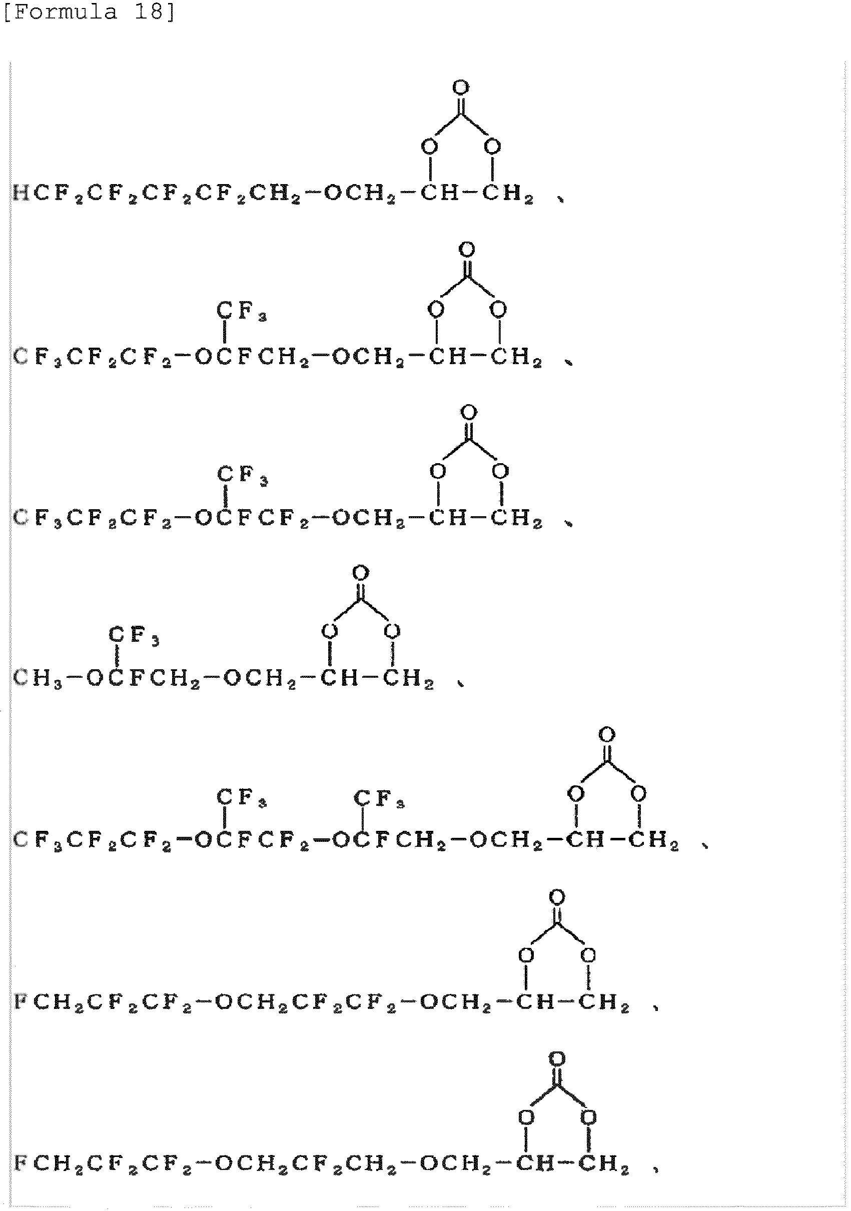 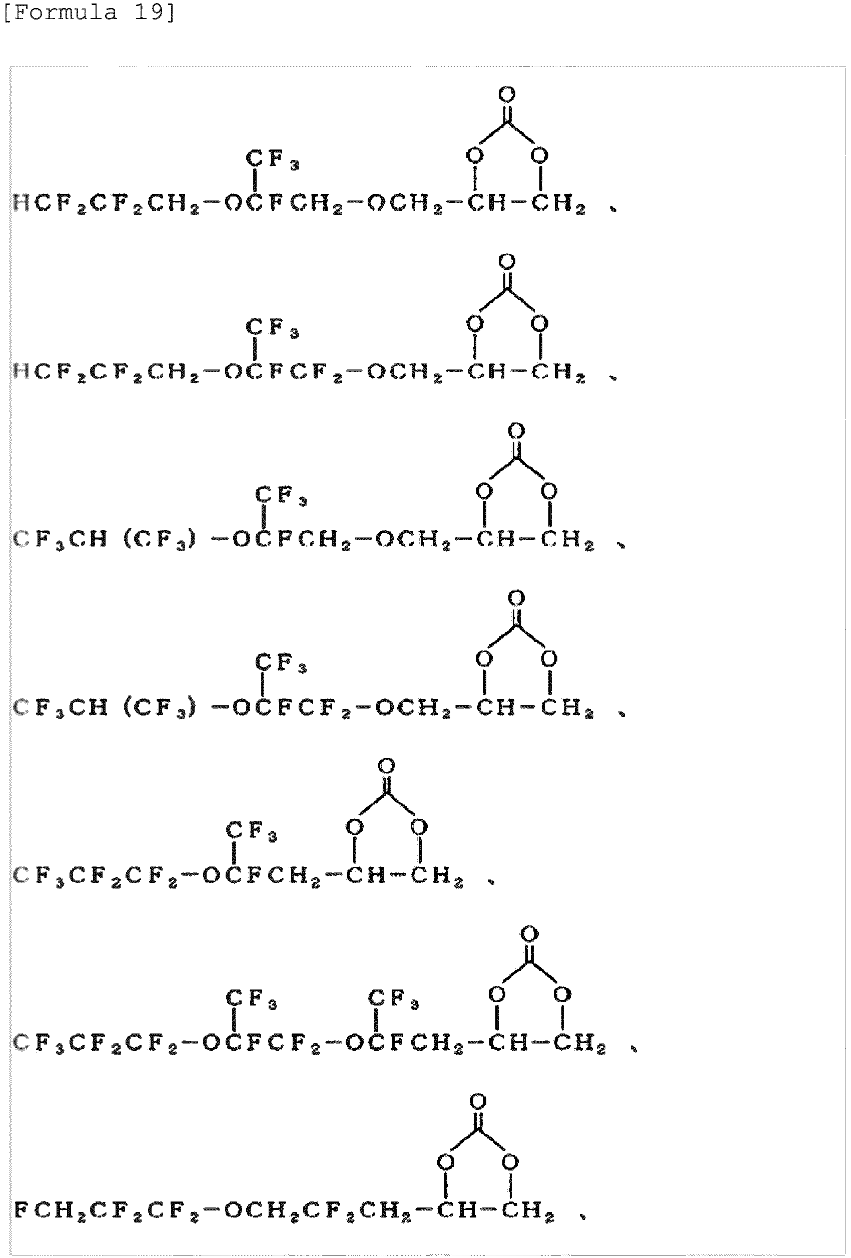 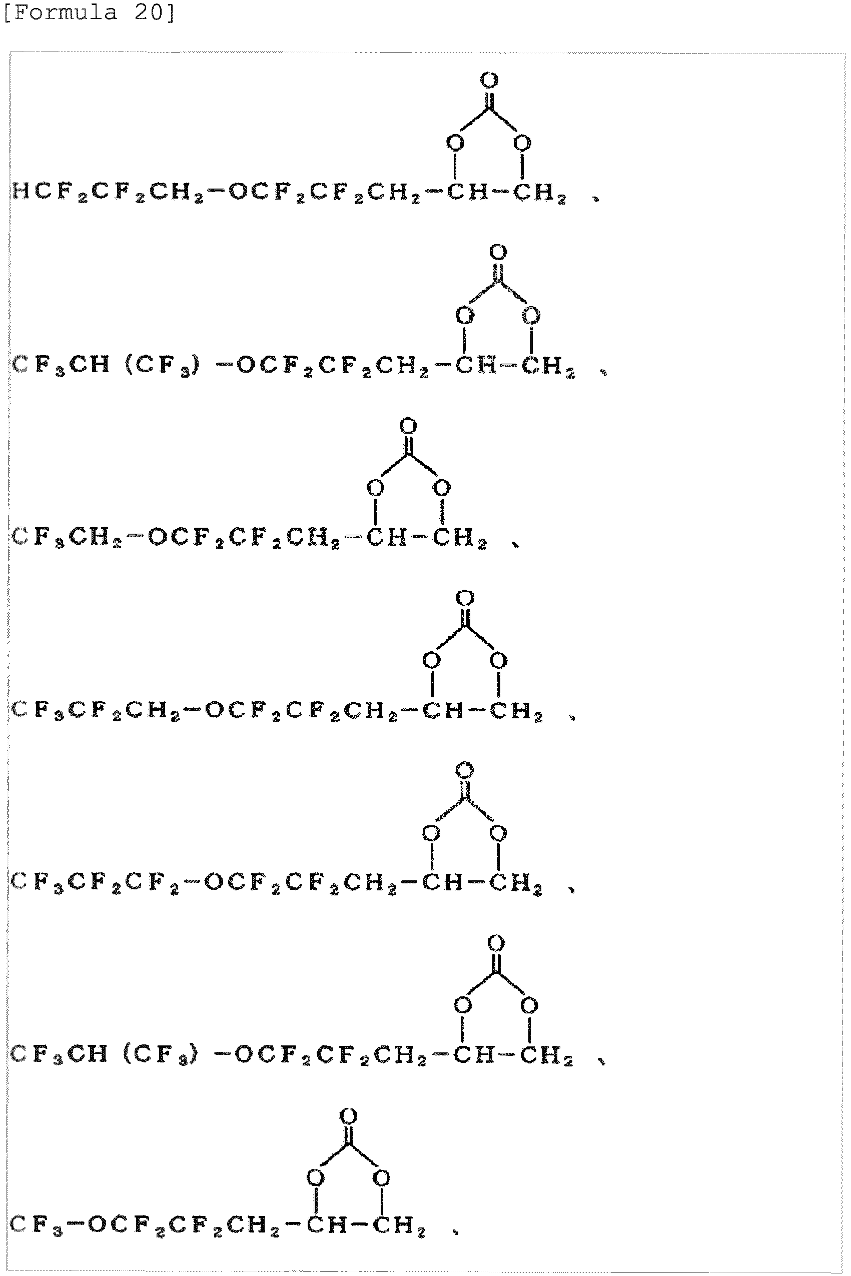 and

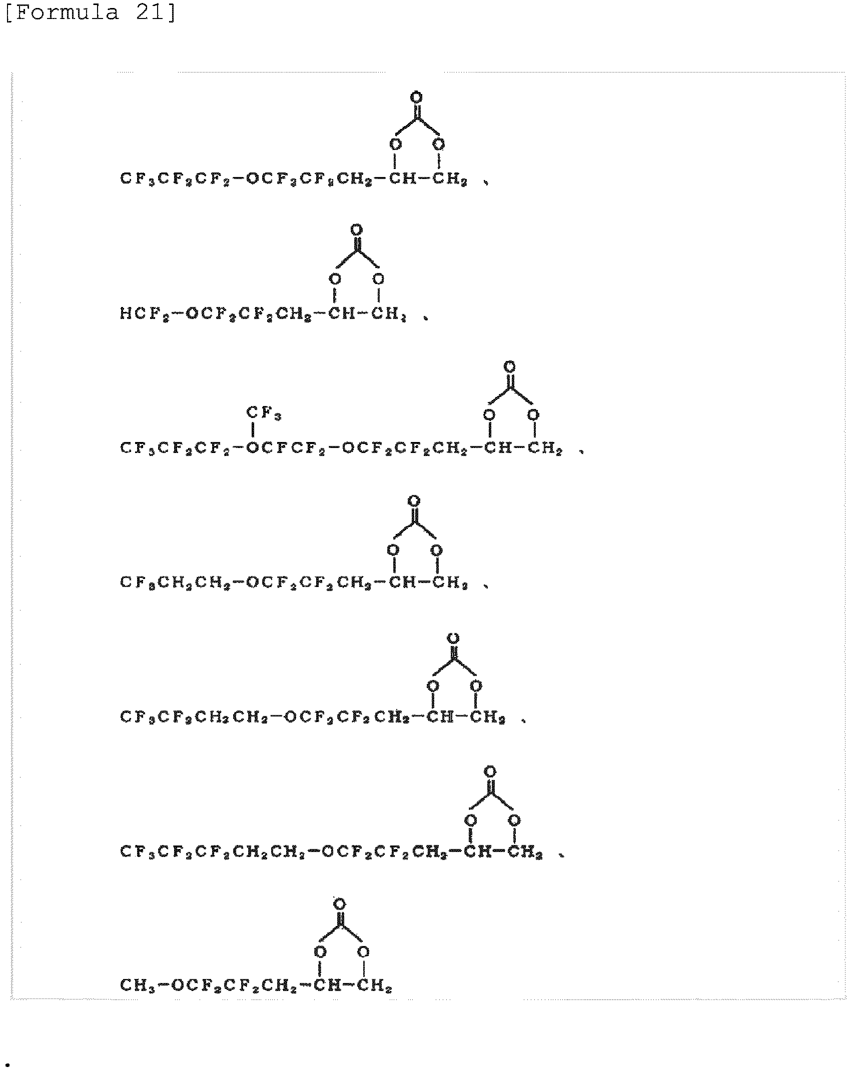

Among these, the fluorinated saturated cyclic carbonate is preferably any of the following compounds.

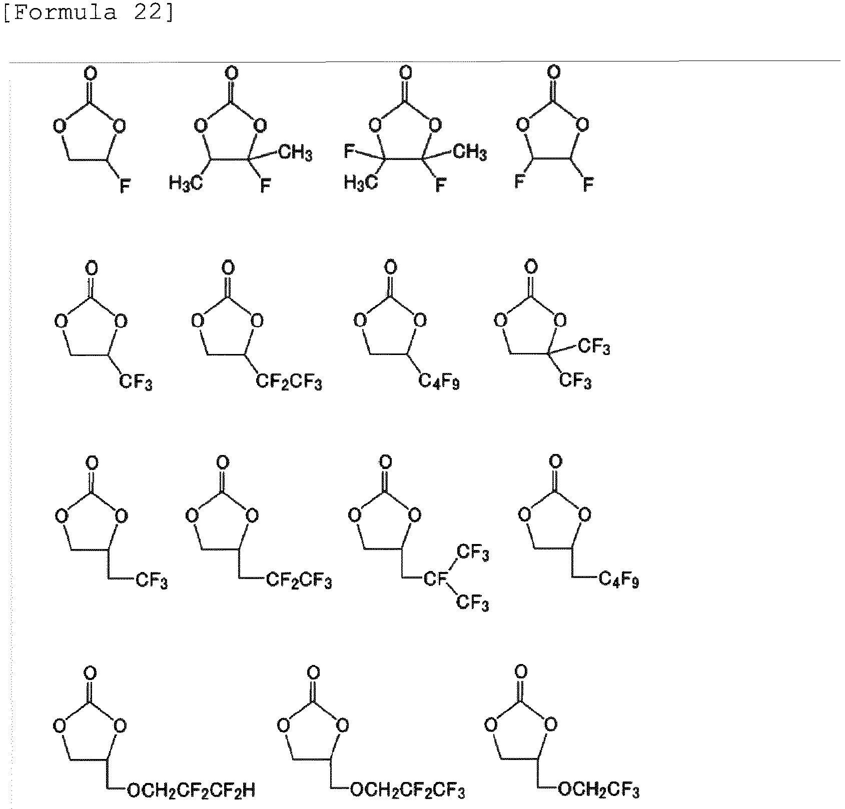

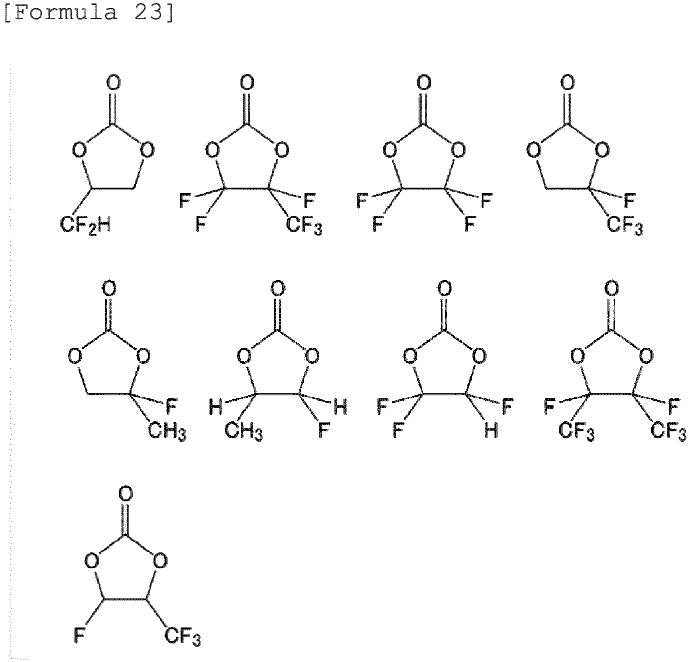

Examples of the fluorinated saturated cyclic carbonate also include trans-4,5-difluoro-1,3-dioxolan-2-one, 5-(1,1-difluoroethyl)-4,4-difluoro-1,3-dioxolan-2-one, 4-methylene-1,3-dioxolan-2-one, 4-methyl-5-trifluoromethyl-1,3-dioxolan-2-one, 4-ethyl-5-fluoro-1,3-dioxolan-2-one, 4-ethyl-5,5-difluoro-1,3-dioxolan-2-one, 4-ethyl-4,5-difluoro-1,3-dioxolan-2-one, 4-ethyl-4,5,5-trifluoro-1,3-dioxolan-2-one, 4,4-difluoro-5-methyl-1,3-dioxolan-2-one, 4-fluoro-5-methyl-1,3-dioxolan-2-one, 4-fluoro-5-trifluoromethyl-1,3-dioxolan-2-one, and 4,4-difluoro-1,3-dioxolan-2-one.

More preferred among these as the fluorinated saturated cyclic carbonate are fluoroethylene carbonate, difluoroethylene carbonate, trifluoromethylethylene carbonate (3,3,3-trifluoropropylene carbonate), and 2,2,3,3,3-pentafluoropropylethylene carbonate.

The fluorinated unsaturated cyclic carbonate is a cyclic carbonate having an unsaturated bond and a fluorine atom, and is preferably a fluorinated ethylene carbonate derivative substituted with a substituent having an aromatic ring or a carbon-carbon double bond. Specific examples thereof include 4,4-difluoro-5-phenyl ethylene carbonate, 4,5-difluoro-4-phenyl ethylene carbonate, 4-fluoro-5-phenyl ethylene carbonate, 4-fluoro-5-vinyl ethylene carbonate, 4-fluoro-4-phenyl ethylene carbonate, 4,4-difluoro-4-vinyl ethylene carbonate, 4,4-difluoro-4-allyl ethylene carbonate, 4-fluoro-4-vinyl ethylene carbonate, 4-fluoro-4,5-diallyl ethylene carbonate, 4,5-difluoro-4-vinyl ethylene carbonate, 4,5-difluoro-4,5-divinyl ethylene carbonate, and 4,5-difluoro-4,5-diallyl ethylene carbonate.

One of the fluorinated cyclic carbonates may be used singly, or two or more thereof may be used in any combination at any ratio.

When the fluorinated cyclic carbonate is contained, the content of the fluorinated cyclic carbonate is preferably 5 to 90% by volume, more preferably 10 to 60% by volume, further preferably 15 to 45% by volume with respect to the solvent.

The chain carbonate may be a non-fluorinated chain carbonate or a fluorinated chain carbonate.

Examples of the non-fluorinated chain carbonate include hydrocarbon-based chain carbonates such as CH₃OCOOCH₃ (dimethyl carbonate, DMC), CH₃CH₂OCOOCH₂CH₃ (diethyl carbonate, DEC), CH₃CH₂OCOOCH₃ (ethyl methyl carbonate, EMC), CH₃OCOOCH₂CH₂CH₃ (methyl propyl carbonate), methyl butyl carbonate, ethyl propyl carbonate, ethyl butyl carbonate, dipropyl carbonate, dibutyl carbonate, methyl isopropyl carbonate, methyl-2-phenyl phenyl carbonate, phenyl-2-phenyl phenyl carbonate, trans-2,3-pentylene carbonate, trans-2,3-butylene carbonate, and ethyl phenyl carbonate. Preferred among these is at least one selected from the group consisting of ethyl methyl carbonate, diethyl carbonate, and dimethyl carbonate.

One of the non-fluorinated chain carbonates may be used singly, or two or more thereof may be used in any combination at any ratio.

When the non-fluorinated chain carbonate is contained, the content of the non-fluorinated chain carbonate is preferably 10 to 90% by volume, more preferably 20 to 85% by volume, further preferably 30 to 80% by volume with respect to the solvent.

The fluorinated chain carbonate is a chain carbonate having a fluorine atom. A solvent containing a fluorinated chain carbonate can be suitably used also at a high voltage.

An example of the fluorinated chain carbonate can include a compound represented by the general formula (B) :

Rf²OCOOR⁷ (B)

wherein Rf² is a fluorinated alkyl group having 1 to 7 carbon atoms, and R⁷ is an alkyl group having 1 to 7 carbon atoms and optionally containing a fluorine atom.

Rf² is a fluorinated alkyl group having 1 to 7 carbon atoms, and R⁷ is an alkyl group having 1 to 7 carbon atoms and optionally containing a fluorine atom.

The fluorinated alkyl group is a group obtainable by replacing at least one hydrogen atom of an alkyl group by a fluorine atom. When R⁷ is an alkyl group containing a fluorine atom, the group is a fluorinated alkyl group.

Rf² and R⁷ preferably have 1 to 7 carbon atoms, more preferably 1 to 2 carbon atoms, in view of giving a low viscosity.

An excessively large number of carbon atoms may lead to deterioration of the low-temperature characteristics and decrease in the solubility of an electrolyte salt, and an excessively small number of carbon atoms may lead to decrease in the solubility of an electrolyte salt, decrease in discharge efficiency, and furthermore increase in viscosity, and the like.

Examples of the fluorinated alkyl group having 1 carbon atom include CFH₂-, CF₂H-, and CF₃-. In respect of high-temperature storage characteristics, particularly preferred is CFH₂- or CF₃-.

In respect of favorable solubility of an electrolyte salt, a preferred example of the fluorinated alkyl group having 2 or more carbon atoms includes a fluorinated alkyl group represented by the following general formula (d-1) :

R¹-R²- (d-1)

wherein R¹ is an alkyl group having one or more carbon atoms and optionally having a fluorine atom; R² is an alkylene group having 1 to 3 carbon atoms and optionally having a fluorine atom; provided that at least one of R¹ and R² has a fluorine atom.

R¹ and R² each may further have an atom other than carbon, hydrogen, and fluorine atoms.

R¹ is an alkyl group having one or more carbon atoms and optionally having a fluorine atom. R¹ is preferably a linear or branched chain alkyl group having 1 to 6 carbon atoms. R¹ has more preferably 1 to 3 carbon atoms.

Specific examples of linear or branched chain alkyl groups for R¹ include CH₃-, CF₃-, CH₃CH₂-, CH₃CH₂CH₂-, CH₃CH₂CH₂CH₂-,

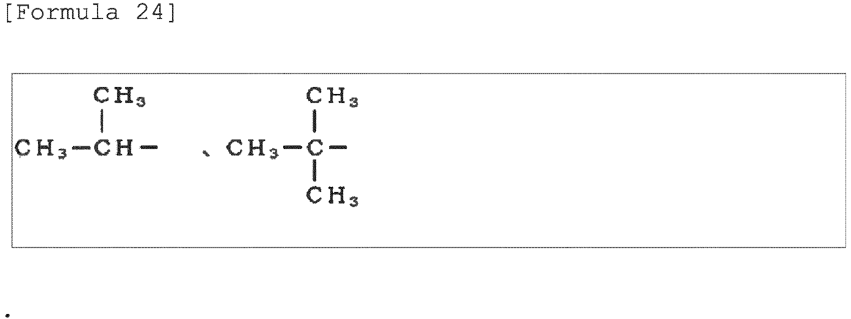

When R¹ is a linear alkyl group having a fluorine atom, examples of R¹ include CF₃-, CF₃CH₂-, CF₃CF₂-, CF₃CH₂CH₂-, CF₃CF₂CH₂-, CF₃CF₂CF₂-, CF₃CH₂CF₂-, CF₃CH₂CH₂CH₂-, CF₃CF₂CH₂CH₂-, CF₃CH₂CF₂CH₂-, CF₃CF₂CF₂CH₂-, CF₃CF₂CF₂CF₂-, CF₃CF₂CH₂CF₂-, CF₃CH₂CH₂CH₂CH₂-, CF₃CF₂CH₂CH₂CH₂-, CF₃CH₂CF₂CH₂CH₂-, CF₃CF₂CF₂CH₂CH₂-, CF₃CF₂CF₂CF₂CH₂-, CF₃CF₂CH₂CF₂CH₂-, CF₃CF₂CH₂CH₂CH₂CH₂-, CF₃CF₂CF₂CF₂CH₂CH₂-, CF₃CF₂CH₂CF₂CH₂CH₂-, HCF₂-, HCF₂CH₂-, HCF₂CF₂-, HCF₂CH₂CH₂-, HCF₂CF₂CH₂-, HCF₂CH₂CF₂-, HCF₂CF₂CH₂CH₂-, HCF₂CH₂CF₂CH₂-, HCF₂CF₂CF₂CF₂-, HCF₂CF₂CH₂CH₂CH₂-, HCF₂CH₂CF₂CH₂CH₂-, HCF₂CF₂CF₂CF₂CH₂-, HCF₂CF₂CF₂CF₂CH₂CH₂-, FCH₂-, FCH₂CH₂-, FCH₂CF₂-, FCH₂CF₂CH₂-, FCH₂CF₂CF₂-, CH₃CF₂CH₂-, CH₃CF₂CF₂-, CH₃CF₂CH₂CF₂-, CH₃CF₂CF₂CF₂-, CH₃CH₂CF₂CF₂-, CH₃CF₂CH₂CF₂CH₂-, CH₃CF₂CF₂CF₂CH₂-, CH₃CF₂CF₂CH₂CH₂-, CH₃CH₂CF₂CF₂CH₂-, CH₃CF₂CH₂CF₂CH₂CH₂-, CH₃CF₂CH₂CF₂CH₂CH₂-, HCFClCF₂CH₂-, HCF₂CFClCH₂-, HCF₂CFClCF₂CFClCH₂-, and HCFClCF₂CFClCF₂CH₂-.

When R¹ is a branched chain alkyl group having a fluorine atom, preferred examples of R¹ include 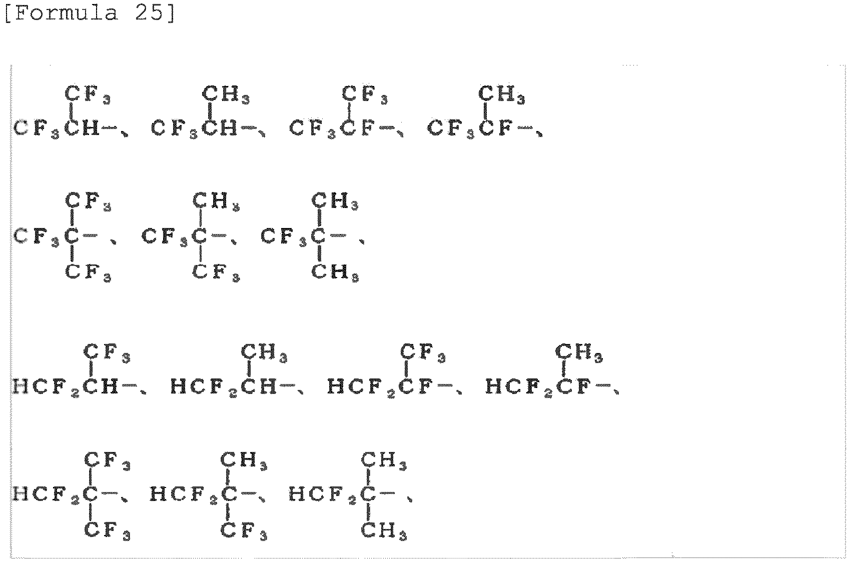 and

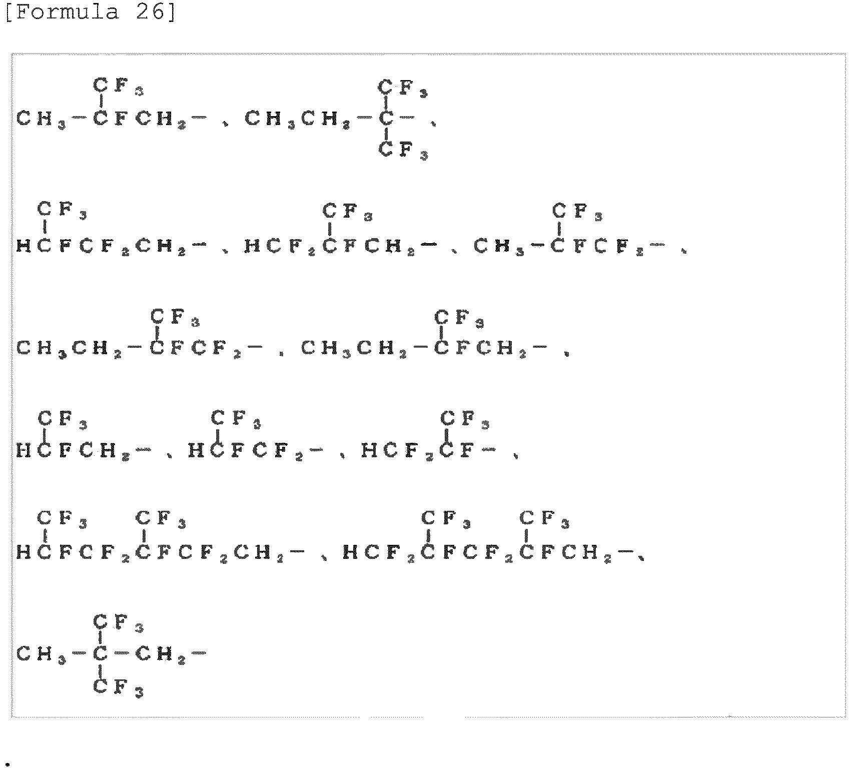

However, if a branch such as CH₃- or CF₃- is contained, the viscosity is likely to increase. Thus, the number of such branches is more preferably small (one) or zero.

R² is an alkylene group having 1 to 3 carbon atoms and optionally having a fluorine atom. R² may be linear or branched chain. Examples of a minimum structural unit constituting such a linear or branched chain alkylene group are shown below. R² is constituted by one or a combination of these units.
(i) Linear Minimum Structural Units:
   -CH₂-, -CHF-, -CF₂-, -CHCl-, -CFCl-, -CCl₂-
(ii) Branched chain Minimum Structural Units:

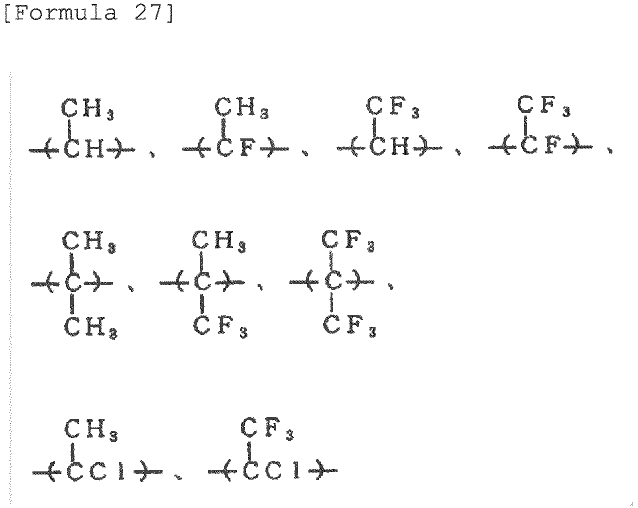

R² is preferably constituted by Cl-free structural units among these examples, because such units may not be dehydrochlorinated by a base and thus may be more stable.

When being linear, R² is composed only of any of the above linear minimum structural units, and is preferably -CH₂-, -CH₂CH₂-, or CF₂- among these. Since the solubility of an electrolyte salt can be further improved, -CH₂- or -CH₂CH₂- is more preferred.

When being branched chain, R² includes at least one of the above branched chain minimum structural units. A preferred example thereof is a group represented by the general formula: -(CX^{a}X^{b})-, wherein X^{a} is H, F, CH₃, or CF₃; X^{b} is CH₃ or CF₃; provided that, when X^{b} is CF₃, X^{a} is H or CH₃. Such groups can much further particularly improve the solubility of an electrolyte salt.

Preferred specific examples of the fluorinated alkyl group include CF₃CF₂-, HCF₂CF₂-, H₂CFCF₂-, CH₃CF₂-, CF₃CH₂-, CF₃CF₂CF₂-, HCF₂CF₂CF₂-, H₂CFCF₂CF₂-, CH₃CF₂CF₂-, 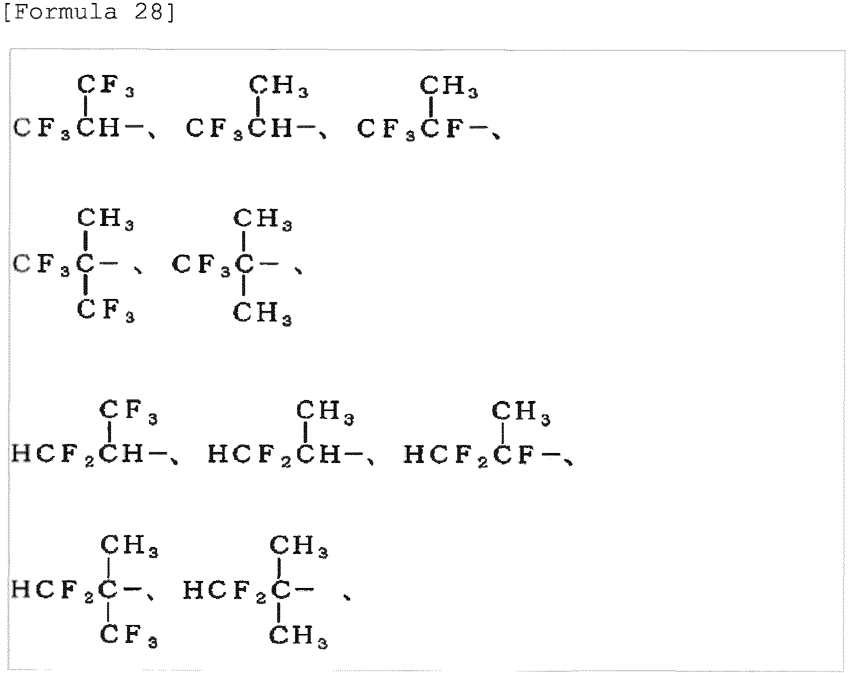 and

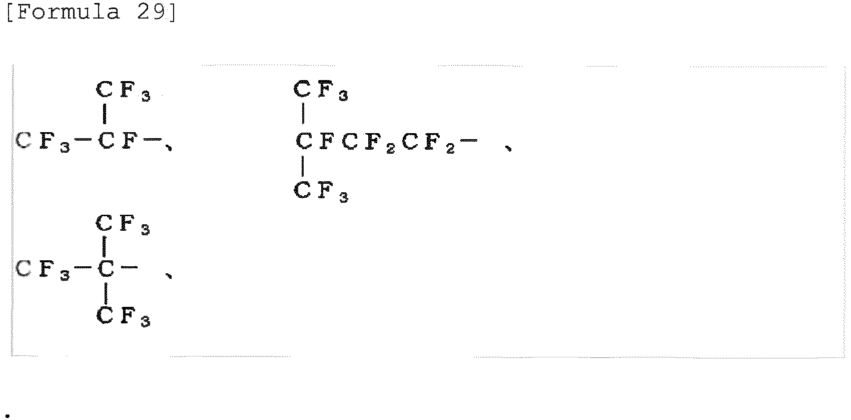

Among these, the fluorinated alkyl group for Rf² and R⁷ is preferably CF₃-, CF₃CF₂-, (CF₃)₂CH-, CF₃CH₂-, C₂F₅CH₂-, CF₃CF₂CH₂-, HCF₂CF₂CH₂-, CF₃CFHCF₂CH₂-, CFH₂-, or CF₂H-, more preferably CF₃CH₂-, CF₃CF₂CH₂-, HCF₂CF₂CH₂-, CFH₂-, or CF₂H-, in view of high flame retardancy and favorable rate characteristics and oxidation resistance.

When R⁷ is an alkyl group containing no fluorine atom, the group is an alkyl group having 1 to 7 carbon atoms. R⁷ has preferably 1 to 4 carbon atoms, more preferably 1 to 3 carbon atoms, in view of giving a low viscosity.

Examples of the alkyl group containing no fluorine atom include CH₃-, CH₃CH₂-, (CH₃)₂CH-, and C₃H₇-. Among these, CH₃- and CH₃CH₂- are preferred, in view of giving a low viscosity and favorable rate characteristics.

The fluorinated chain carbonate preferably has a fluorine content of 15 to 70% by mass. The fluorinated chain carbonate, when having a fluorine content in the range described above, can maintain the miscibility with a solvent and the solubility of a salt. The fluorine content is more preferably 20% by mass or more, further preferably 30% by mass or more, particularly preferably 35% by mass or more, and more preferably 60% by mass or less, further preferably 50% by mass or less. In the present disclosure, the fluorine content is a value calculated based on the structural formula of the fluorinated chain carbonate by: [(Number of fluorine atoms × 19)/(Molecular weight of fluorinated chain carbonate)] × 100 (%).

The fluorinated chain carbonate is preferably any of the following compounds, in view of giving a low viscosity.

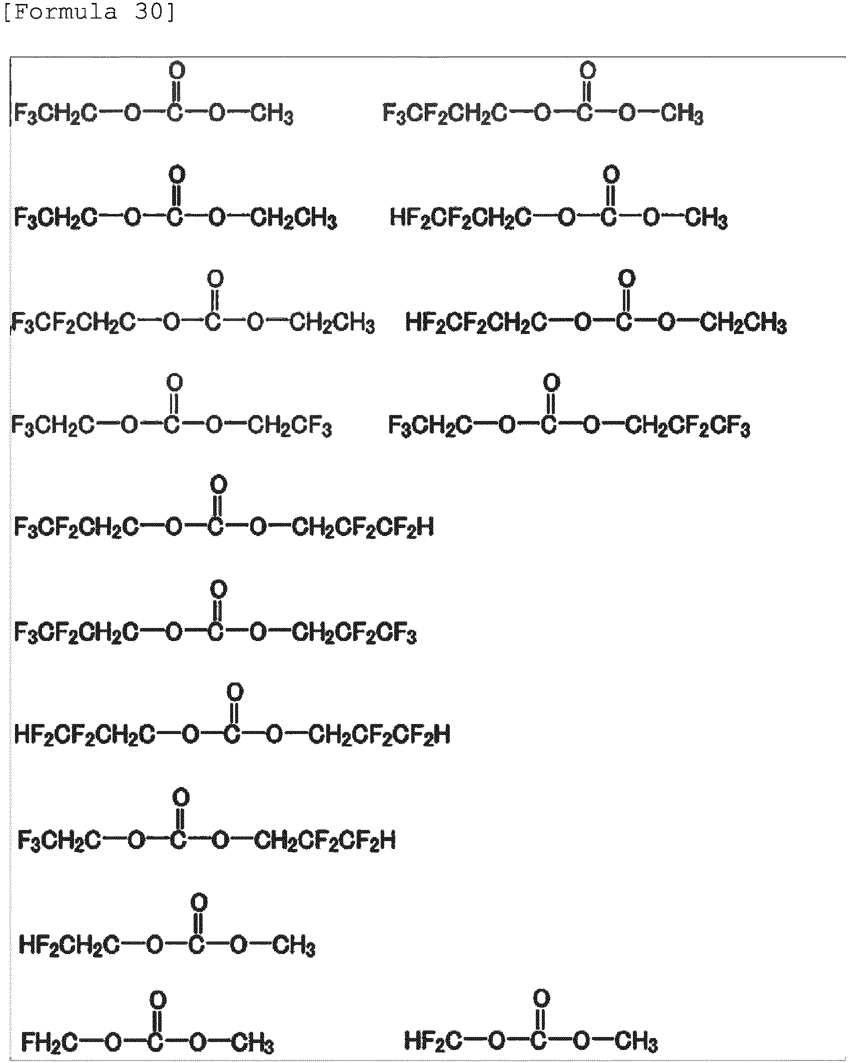

The fluorinated chain carbonate is particularly preferably methyl 2,2,2-trifluoroethyl carbonate (F₃CH₂COC(=O)OCH₃).

One of the fluorinated chain carbonates may be used singly, or two or more thereof may be used in any combination at any ratio.

When the fluorinated chain carbonate is contained, the content of the fluorinated chain carbonate is preferably 10 to 90% by volume, more preferably 20 to 85% by volume, further preferably 30 to 80% by volume with respect to the solvent.

The carboxylate may be a cyclic carboxylate or a chain carboxylate.

The cyclic carboxylate may be a non-fluorinated cyclic carboxylate or a fluorinated cyclic carboxylate.

An example of the non-fluorinated cyclic carboxylate includes a non-fluorinated saturated cyclic carboxylate. Preferred is a non-fluorinated saturated cyclic carboxylate having an alkylene group having 2 to 4 carbon atoms.

Specific examples of the non-fluorinated saturated cyclic carboxylate having an alkylene group having 2 to 4 carbon atoms include β-propiolactone, γ-butyrolactone, ε-caprolactone, δ-valerolactone, and α-methyl-γ-butyrolactone. Among these, γ-butyrolactone and δ-valerolactone are particularly preferred, in view of improvement of the degree of dissociation of lithium ions and improvement of the load characteristics.

One of the non-fluorinated saturated cyclic carboxylates may be used singly, or two or more thereof may be used in any combination at any ratio.

When the non-fluorinated saturated cyclic carboxylate is contained, the content of the non-fluorinated saturated cyclic carboxylate is preferably 0 to 90% by volume, more preferably 0.001 to 90% by volume, further preferably 1 to 60% by volume, particularly preferably 5 to 40% by volume with respect to the solvent.

The chain carboxylate may be a non-fluorinated chain carboxylate or a fluorinated chain carboxylate. When containing the chain carboxylate, the solvent enables the electrolytic solution to have a further suppressed increase in resistance after high-temperature storage.

Examples of the non-fluorinated chain carboxylate include methyl acetate, ethyl acetate, propyl acetate, butyl acetate, methyl propionate, ethyl propionate, propyl propionate, butyl propionate, tert-butyl propionate, tert-butyl butyrate, sec-butyl propionate, sec-butyl butyrate, n-butyl butyrate, methyl pyrophosphate, ethyl pyrophosphate, tert-butyl formate, tert-butyl acetate, sec-butyl formate, sec-butyl acetate, n-hexyl pivalate, n-propyl formate, n-propyl acetate, n-butyl formate, n-butyl pivalate, n-octyl pivalate, ethyl 2-(dimethoxyphosphoryl)acetate, ethyl 2-(dimethylphosphoryl)acetate, ethyl 2-(diethoxyphosphoryl)acetate, ethyl 2-(diethylphosphoryl)acetate, isopropyl propionate, isopropyl acetate, ethyl formate, ethyl 2-propynyl oxalate, isopropyl formate, isopropyl butyrate, isobutyl formate, isobutyl propionate, isobutyl butyrate, and isobutyl acetate.

Among these, butyl acetate, methyl propionate, ethyl propionate, propyl propionate, and butyl propionate are preferred, and ethyl propionate and propyl propionate are particularly preferred.

One of the non-fluorinated chain carboxylates may be used singly, or two or more thereof may be used in any combination at any ratio.

When the non-fluorinated chain carboxylate is contained, the content of the non-fluorinated chain carboxylate is preferably 0 to 90% by volume, more preferably 0.001 to 90% by volume, further preferably 1 to 60% by volume, particularly preferably 5 to 50% by volume with respect to the solvent.

The fluorinated chain carboxylate is a chain carboxylate having a fluorine atom. A solvent containing a fluorinated chain carboxylate can be suitably used also at a high voltage.

In view of favorable miscibility with other solvents and favorable oxidation resistance, the fluorinated chain carboxylate is preferably a fluorinated chain carboxylate represented by the following general formula:

R³¹COOR³²

wherein R³¹ and R³² are each independently an alkyl group having 1 to 4 carbon atoms and optionally having a fluorine atom, and at least one of R³¹ and R³² contains a fluorine atom.

Examples of R³¹ and R³² include non-fluorinated alkyl groups such as a methyl group (-CH₃), an ethyl group **(-**CH₂CH₃), a propyl group (-CH₂CH₂CH₃), an isopropyl group (-CH(CH₃)₂), a n-butyl group (-CH₂CH₂CH₂CH₃), and a tertiary butyl group (-C(CH₃)₃); and fluorinated alkyl groups such as -CF₃, -CF₂H, -CFH₂, -CF₂CF₃, -CF₂CF₂H, - CF₂CFH₂, -CH₂CF₃, -CH₂CF₂H, -CH₂CFH₂, -CF₂CF₂CF₃, -CF₂CF₂CF₂H, -CF₂CF₂CFH₂, -CH₂CF₂CF₃, -CH₂CF₂CF₂H, -CH₂CF₂CFH₂, -CH₂CH₂CF₃, -CH₂CH₂CF₂H, -CH₂CH₂CFH₂, -CF(CF₃)₂, -CF(CF₂H)₂, -CF(CFH₂)₂, -CH(CF₃)₂, -CH(CF₂H)₂, -CH(CFH₂)₂, -CF(OCH₃)CF₃, - CF₂CF₂CF₂CF₃, -CF₂CF₂CF₂CF₂H, -CF₂CF₂CF₂CFH₂, -CH₂CF₂CF₂CF₃, - CH₂CF₂CF₂CF₂H, -CH₂CF₂CF₂CFH₂, -CH₂CH₂CF₂CF₃, -CH₂CH₂CF₂CF₂H, -CH₂CH₂CF₂CFH₂, -CH₂CH₂CH₂CF₃, -CH₂CH₂CH₂CF₂H, -CH₂CH₂CH₂CFH₂, -CF (CF₃) CF₂CF₃, -CF (CF₂H) CF₂CF₃, -CF(CFH₂) CF₂CF₃, - CF(CF₃) CF₂CF₂H, -CF (CF₃) CF₂CFH₂, -CF(CF₃) CH₂CF₃, - CF(CF₃) CH₂CF₂H, -CF (CF₃) CH₂CFH₂, -CH(CF₃) CF₂CF₃, - CH(CF₂H) CF₂CF₃, -CH (CFH₂) CF₂CF₃, -CH(CF₃)CF₂CF₂H, - CH(CF₃)CF₂CFH₂, -CH (CF₃)CH₂CF₃, -CH (CF₃)CH₂CF₂H, - CH(CF₃)CH₂CFH₂, -CF₂CF(CF₃)CF₃, -CF₂CF(CF₂H)CF₃, - CF₂CF(CFH₂)CF₃, -CF₂CF(CF₃)CF₂H, -CF₂CF(CF₃)CFH₂, - CH₂CF(CF₃)CF₃, -CH₂CF(CF₂H)CF₃, -CH₂CF(CFH₂)CF₃, - CH₂CF(CF₃)CF₂H, -CH₂CF(CF₃)CFH₂, -CH₂CH(CF₃)CF₃, - CH₂CH(CF₂H)CF₃, -CH₂CH(CFH₂)CF₃, -CH₂CH(CF₃)CF₂H, - CH₂CH(CF₃)CFH₂, -CF₂CH(CF₃)CF₃, -CF₂CH(CF₂H) CF₃, - CF₂CH(CFH₂)CF₃, -CF₂CH(CF₃)CF₂H, -CF₂CH(CF₃)CFH₂, -C (CF₃)₃, -C(CF₂H)₃, and -C(CFH₂)₃. Particularly preferred among these are a methyl group, an ethyl group, -CF₃, -CF₂H, - CF₂CF₃, -CH₂CF₃, -CH₂CF₂H, -CH₂CFH₂, -CH₂CH₂CF₃, -CH₂CF₂CF₃, -CH₂CF₂CF₂H, and -CH₂CF₂CFH₂, in view of favorable miscibility with other solvents, viscosities, and oxidation resistance.

Specific examples of the fluorinated chain carboxylate include one or two or more of CF₃CH₂C(=O)OCH₃ (methyl 3,3,3-trifluoropropionate), HCF₂C(=O)OCH₃ (methyl difluoroacetate), HCF₂C(=O)OC₂H₅ (ethyl difluoroacetate), CF₃C(=O)OCH₂CH₂CF₃, CF₃C(=O)OCH₂C₂F₅, CF₃C(=O)OCH₂CF₂CF₂H (2,2,3,3-tetrafluoropropyl trifluoroacetate), CF₃C(=O)OCH₂CF₃, CF₃C(=O)OCH(CF₃)₂, ethyl pentafluorobutyrate, methyl pentafluoropropionate, ethyl pentafluoropropionate, methyl heptafluoroisobutyrate, isopropyl trifluorobutyrate, ethyl trifluoroacetate, tert-butyl trifluoroacetate, n-butyl trifluoroacetate, methyl tetrafluoro-2-(methoxy)propionate, 2,2-difluoroethyl acetate, 2,2,3,3-tetrafluoropropyl acetate, CH₃C(=O)OCH₂CF₃ (2,2,2-trifluoroethyl acetate), 1H,1H-heptafluorobutyl acetate, methyl 4,4,4-trifluorobutyrate, ethyl 4,4,4-trifluorobutyrate, ethyl 3,3,3-trifluoropropionate, 3,3,3-trifluoropropyl 3,3,3-trifluoropropionate, ethyl 3-(trifluoromethyl)butyrate, methyl 2,3,3,3-tetrafluoropropionate, butyl 2,2-difluoroacetate, methyl 2,2,3,3-tetrafluoropropionate, methyl 2-(trifluoromethyl)-3,3,3-trifluoropropionate, and methyl heptafluorobutyrate.

Among these, preferred are CF₃CH₂C(=O)OCH₃, HCF₂C(=O)OCH₃, HCF₂C(=O)OC₂H₅, CF₃C(=O)OCH₂C₂F₅, CF₃C(=O)OCH₂CF₂CF₂H, CF₃C(=O)OCH₂CF₃, CF₃C(=O)OCH(CF₃)₂, ethyl pentafluorobutyrate, methyl pentafluoropropionate, ethyl pentafluoropropionate, methyl heptafluoroisobutyrate, isopropyl trifluorobutyrate, ethyl trifluoroacetate, tert-butyl trifluoroacetate, n-butyl trifluoroacetate, methyl tetrafluoro-2-(methoxy)propionate, 2,2-difluoroethyl acetate, 2,2,3,3-tetrafluoropropyl acetate, CH₃C(=O)OCH₂CF₃, 1H,1H-heptafluorobutyl acetate, methyl 4,4,4-trifluorobutyrate, ethyl 4,4,4-trifluorobutyrate, ethyl 3,3,3-trifluoropropionate, 3,3,3-trifluoropropyl 3,3,3-trifluoropropionate, ethyl 3-(trifluoromethyl)butyrate, methyl 2,3,3,3-tetrafluoropropionate, butyl 2,2-difluoroacetate, methyl 2,2,3,3,-tetrafluoropropionate, methyl 2-(trifluoromethyl)-3,3,3-trifluoropropionate, and methyl heptafluorobutyrate, in view of favorable miscibility with other solvents and rate characteristics, more preferred are CF₃CH₂C(=O)OCH₃, HCF₂C(=O)OCH₃, HCF₂C(=O)OC₂H₅, and CH₃C(=O)OCH₂CF₃, and particularly preferred are HCF₂C(=O)OCH₃, HCF₂C(=O)OC₂H₅, and CH₃C(=O)OCH₂CF₃.

One of the fluorinated chain carboxylates may be used singly, or two or more thereof may be used in any combination at any ratio.

When the fluorinated chain carboxylate is contained, the content of the fluorinated chain carboxylate is preferably 10 to 90% by volume, more preferably 20 to 85% by volume, further preferably 30 to 80% by volume with respect to the solvent.

The above solvent preferably contains at least one selected from the group consisting of the above cyclic carbonate, the above chain carbonate, and the above chain carboxylate, more preferably contains the cyclic carbonate, and at least one selected from the group consisting of the chain carbonate and the chain carboxylate. The above cyclic carbonate is preferably a saturated cyclic carbonate.

An electrolytic solution containing a solvent of the compositional feature enables an electrochemical device to have further improved high-temperature storage characteristics and cycle characteristics.

When the above solvent contains the above cyclic carbonate and at least one selected from the group consisting of the above chain carbonate and the above chain carboxylate, the solvent contains the above cyclic carbonate and at least one selected from the group consisting of the above chain carbonate and the above chain carboxylate in a total amount of preferably 10 to 100% by volume, more preferably 30 to 100% by volume, further preferably 50 to 100% by volume.

When the above solvent contains the above cyclic carbonate and at least one selected from the group consisting of the above chain carbonate and the above chain carboxylate, the volume ratio of the cyclic carbonate to at least one selected from the group consisting of the chain carbonate and the chain carboxylate is preferably 5/95 to 95/5, more preferably 10/90 or more, further preferably 15/85 or more, particularly preferably 20/80 or more, and more preferably 90/10 or less, further preferably 60/40 or less, particularly preferably 50/50 or less.

The above solvent also preferably contains at least one selected from the group consisting of the above non-fluorinated saturated cyclic carbonate, the above non-fluorinated chain carbonate, and the above non-fluorinated chain carboxylate, more preferably contains the above non-fluorinated saturated cyclic carbonate and at least one selected from the group consisting of the above non-fluorinated chain carbonate and the above non-fluorinated chain carboxylate. An electrolytic solution containing a solvent having the above compositional feature can be suitably used for electrochemical devices used at a relatively low voltage.

When the above solvent contains the above non-fluorinated saturated cyclic carbonate and at least one selected from the group consisting of the above non-fluorinated chain carbonate and the above non-fluorinated chain carboxylate, the other solvent contains the non-fluorinated saturated cyclic carbonate and at least one selected from the group consisting of the non-fluorinated chain carbonate and the non-fluorinated chain carboxylate in a total amount of preferably 5 to 100% by volume, more preferably 20 to 100% by volume, further preferably 30 to 100% by volume.

When the electrolytic solution contains the above non-fluorinated saturated cyclic carbonate and at least one selected from the group consisting of the above non-fluorinated chain carbonate and the above non-fluorinated chain carboxylate, the volume ratio of the non-fluorinated saturated cyclic carbonate to at least one selected from the group consisting of the non-fluorinated chain carbonate and the non-fluorinated chain carboxylate is preferably 5/95 to 95/5, more preferably 10/90 or more, further preferably 15/85 or more, particularly preferably 20/80 or more, and more preferably 90/10 or less, further preferably 60/40 or less, particularly preferably 50/50 or less.

The above solvent also preferably contains at least one selected from the group consisting of the above fluorinated saturated cyclic carbonate, the above fluorinated chain carbonate, and the above fluorinated chain carboxylate, more preferably contains the above fluorinated saturated cyclic carbonate and at least one selected from the group consisting of the above fluorinated chain carbonate and the above fluorinated chain carboxylate. An electrolytic solution containing a solvent of the compositional feature can be suitably used not only for electrochemical devices used at a relatively low voltage but also for electrochemical devices used at a relatively high voltage.

When the above solvent contains the above fluorinated saturated cyclic carbonate and at least one selected from the group consisting of the above fluorinated chain carbonate and the above fluorinated chain carboxylate, the other solvent contains the fluorinated saturated cyclic carbonate and at least one selected from the group consisting of the fluorinated chain carbonate and the fluorinated chain carboxylate in a total amount of preferably 5 to 100% by volume, more preferably 10 to 100% by volume, further preferably 30 to 100% by volume.

When the other solvent contains the above fluorinated saturated cyclic carbonate and at least one selected from the group consisting of the above fluorinated chain carbonate and the above fluorinated chain carboxylate, the volume ratio of the fluorinated saturated cyclic carbonate to at least one selected from the group consisting of the fluorinated chain carbonate and the fluorinated chain carboxylate is preferably 5/95 to 95/5, more preferably 10/90 or more, further preferably 15/85 or more, particularly preferably 20/80 or more, and more preferably 90/10 or less, further preferably 60/40 or less, particularly preferably 50/50 or less.

The above solvent to be used may be an ion liquid. The "ion liquid" is a liquid composed of an ion containing an organic cation and an anion in combination.

Examples of the organic cation include, but are not limited to, imidazolium ions such as dialkyl imidazolium cations and trialkyl imidazolium cations; tetraalkyl ammonium ions; alkyl pyridinium ions; dialkyl pyrrolidinium ions; and dialkyl piperidinium ions.

Examples of the anion to be used as a counterion of any of these organic cations include, but are not limited to, a PF₆ anion, a PF₃(C₂F₅)₃ anion, a PF₃(CF₃)₃ anion, a BF₄ anion, a BF₂(CF₃)₂ anion, a BF₃(CF₃) anion, a bisoxalatoborate anion, a P(C₂O₄)F₂ anion, a Tf (trifluoromethanesulfonyl) anion, a Nf (nonafluorobutanesulfonyl) anion, a bis(fluorosulfonyl)imide anion, a bis(trifluoromethanesulfonyl)imide anion, a bis(pentafluoroethanesulfonyl)imide anion, a dicyanoamine anion, and halide anions.

The solvent is preferably a non-aqueous solvent, and the electrolytic solution of the present disclosure is preferably a non-aqueous electrolytic solution.

The content of the aqueous solvent is preferably 70 to 99.999% by mass, more preferably 80% by mass or more, more preferably 92% by mass or less relative to the electrolytic solution.

The electrolytic solution of the present disclosure may further contain a compound (5) represented by the general formula (5).
the general formula (5): 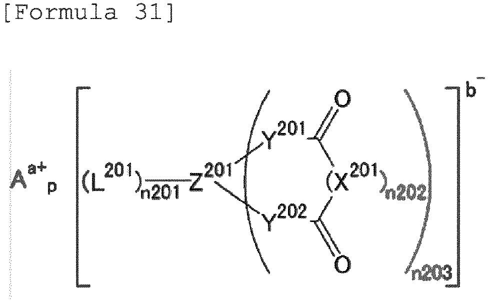
wherein A^{a+} is a metal ion, a hydrogen ion, or an onium ion; a is an integer of 1 to 3, b is an integer of 1 to 3, p is b/a, n203 is an integer of 1 to 4, n201 is an integer of 0 to 8, n202 is 0 or 1, Z²⁰¹ is a transition metal or an element in group III, group IV, or group V of the Periodic Table,
X²⁰¹ is O, S, an alkylene group having 1 to 10 carbon atoms, a halogenated alkylene group having 1 to 10 carbon atoms, an arylene group having 6 to 20 carbon atoms, or an halogenated arylene group having 6 to 20 carbon atoms, with the alkylene group, the halogenated alkylene group, the arylene group, and the halogenated arylene group each optionally having a substituent and/or a hetero atom in the structure thereof, and when n202 is 1 and n203 is 2 to 4, n203 X²⁰¹'s optionally bind to each other,
L²⁰¹ is a halogen atom, a cyano group, an alkyl group having 1 to 10 carbon atoms, a halogenated alkyl group having 1 to 10 carbon atoms, an aryl group having 6 to 20 carbon atoms, a halogenated aryl group having 6 to 20 carbon atoms, with the alkylene group, the halogenated alkylene group, the arylene group, and the halogenated arylene group each optionally having a substituent and/or a hetero atom in the structure thereof, and when n201 is 2 to 8, n201 L²⁰¹'s optionally bind to each other to form a ring, or -Z²⁰³Y²⁰³,
Y²⁰¹, Y²⁰², and Z²⁰³ are each independently O, S, NY²⁰⁴, a hydrocarbon group, or a fluorinated hydrocarbon group, and Y²⁰³ and Y²⁰⁴ are each independently H, F, an alkyl group having 1 to 10 carbon atoms, a halogenated alkyl group having 1 to 10 carbon atoms, an aryl group having 6 to 20 carbon atoms, or a halogenated aryl group having 6 to 20 carbon atoms, with the alkyl group, the halogenated alkyl group, the aryl group, and the halogenated aryl group each optionally having a substituent and/or a hetero atom in the structure thereof, and when multiple Y²⁰³'s or multiple Y²⁰⁴'s are present, they optionally bind to each other to form a ring.

Examples of A^{a+} include a lithium ion, a sodium ion, a potassium ion, a magnesium ion, a calcium ion, a barium ion, a cesium ion, a silver ion, a zinc ion, a copper ion, a cobalt ion, an iron ion, a nickel ion, a manganese ion, a titanium ion, a lead ion, a chromium ion, a vanadium ion, a ruthenium ion, an yttrium ion, lanthanoid ions, actinoid ions, a tetrabutyl ammonium ion, a tetraethyl ammonium ion, a tetramethyl ammonium ion, a triethyl methyl ammonium ion, a triethyl ammonium ion, a pyridinium ion, an imidazolium ion, a hydrogen ion, a tetraethyl phosphonium ion, a tetramethyl phosphonium ion, a tetraphenyl phosphonium ion, a triphenyl sulfonium ion, and a triethyl sulfonium ion.

In a case of using for applications such as electrochemical devices, A^{a+} is preferably a lithium ion, a sodium ion, a magnesium ion, a tetraalkyl ammonium ion, or a hydrogen ion, particularly preferably a lithium ion. The valence a of the cation A^{a+} is an integer of 1 to 3. If the valence a is greater than 3, the crystal lattice energy increases, and a problem occurs in that the compound (5) has difficulty in dissolving in a solvent. Thus, the valence a is more preferably 1 when solubility is needed. The valence b of the anion is also an integer of 1 to 3, particularly preferably 1. The constant p that represents the ratio between the cation and the anion is naturally defined by the ratio b/a between the valences thereof.

Next, ligands in the general formula (5) will be described. The ligands herein mean organic or inorganic groups binding to Z²⁰¹ in the general formula (5).

Z²⁰¹ is preferably Al, B, V, Ti, Si, Zr, Ge, Sn, Cu, Y, Zn, Ga, Nb, Ta, Bi, P, As, Sc, Hf, or Sb, more preferably Al, B, or P.

X²⁰¹ represents O, S, an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms. These alkylene groups and arylene groups each may have a substituent and/or a hetero atom in the structure thereof. Specifically, instead of a hydrogen atom in the alkylene group or the arylene group, the structure may have a halogen atom, a chain or cyclic alkyl group, an aryl group, an alkenyl group, an alkoxy group, an aryloxy group, a sulfonyl group, an amino group, a cyano group, a carbonyl group, an acyl group, an amide group, or a hydroxyl group as a substituent. Alternatively, instead of a carbon atom in the alkylene or the arylene, the structure may have nitrogen, sulfur, or oxygen introduced therein. When n202 is 1 and n203 is 2 to 4, n203 X²⁰¹'s may bind to each other. One such example thereof includes a ligand such as ethylenediaminetetraacetate.

L²⁰¹ represents a halogen atom, a cyano group, an alkyl group having 1 to 10 carbon atoms, a halogenated alkyl group having 1 to 10 carbon atoms, an aryl group having 6 to 20 carbon atoms, a halogenated aryl group having 6 to 20 carbon atoms, or -Z²⁰³Y²⁰³ (Z²⁰³ and Y²⁰³ will be described below). Similar to X²⁰¹, the alkyl groups and the aryl groups here each may have a substituent and/or a hetero atom in the structure thereof. When n201 is 2 to 8, n201 L²⁰¹'s may bind to each other to form a ring. L²⁰¹ is preferably a fluorine atom or a cyano group. This is because, in the case of a fluorine atom, the solubility and the degree of dissociation of a salt of an anion compound are improved thereby improving the ion conductivity. This is also because the oxidation resistance is improved to thereby enable occurrence of side reactions to be suppressed.

Y²⁰¹, Y²⁰², and Z²⁰³ each independently represent O, S, NY²⁰⁴, a hydrocarbon group, or a fluorinated hydrocarbon group. Y²⁰¹ and Y²⁰² are each preferably O, S, or NY²⁰⁴, more preferably O. The compound (5) characteristically has a bond between Y²⁰¹ and Z²⁰¹ and a bond between Y²⁰² and Z²⁰¹ in the same ligand. These ligands each form a chelate structure with Z²⁰¹. The effect of this chelate improves the heat resistance, the chemical stability, and the hydrolysis resistance of this compound. The constant n202 of the ligand is 0 or 1. In particular, n202 is preferably 0 because this chelate ring becomes a five-membered ring, leading to the most strongly exerted chelate effect and improved stability.

The fluorinated hydrocarbon group herein means a group obtainable by replacing at least one hydrogen atom of a hydrocarbon group by a fluorine atom.

Y²⁰³ and Y²⁰⁴ are each independently H, F, an alkyl group having 1 to 10 carbon atoms, a halogenated alkyl group having 1 to 10 carbon atoms, an aryl group having 6 to 20 carbon atoms, or a halogenated aryl group having 6 to 20 carbon atoms. These alkyl groups and aryl groups each may contain a substituent or a hetero atom in the structure thereof. When multiple Y²⁰³'s or multiple Y²⁰⁴'s are present, they may bind to each other to form a ring.

The constant n203 relating to the number of the aforementioned ligands is an integer of 1 to 4, preferably 1 or 2, more preferably 2. The constant n201 relating to the number of the aforementioned ligands is an integer of 0 to 8, preferably an integer of 0 to 4, more preferably 0, 2, or 4. Further, when n203 is 1, n201 is preferably 2, and when n203 is 2, n201 is preferably 0.

In the general formula (5), the alkyl group, the halogenated alkyl group, the aryl group, and the halogenated aryl group include those having any other functional groups such as branches, hydroxy groups, and ether bonds.

The compound (5) is preferably a compound represented by the general formula: 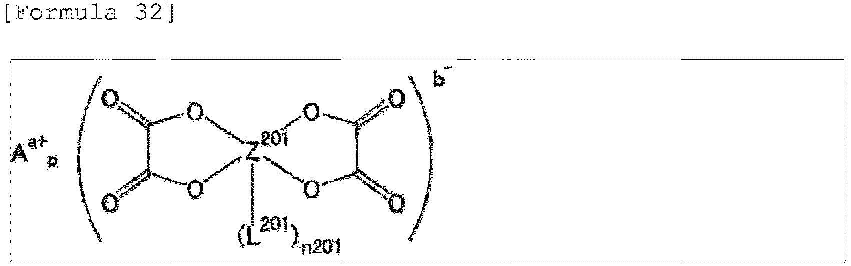
wherein A^{a+}, a, b, p, n201, Z²⁰¹, and L²⁰¹ are defined as described above, or a compound represented by the general formula: 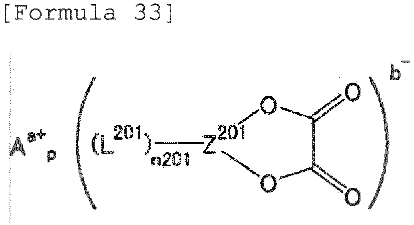
wherein A^{a+}, a, b, p, n201, Z²⁰¹, and L²⁰¹ are defined as described above.

The compound (5) may be a lithium oxalatoborate salt. Examples thereof include lithium bis(oxalato)borate (LIBOB) represented by the following formula: 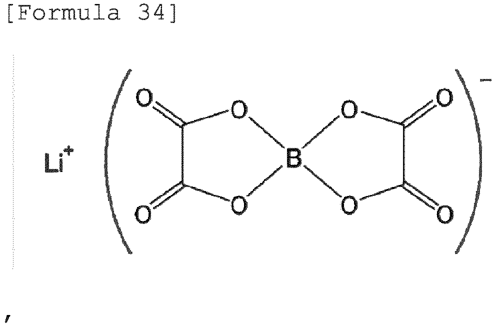
and lithium difluorooxalatoborate (LIDFOB) represented by the following formula: 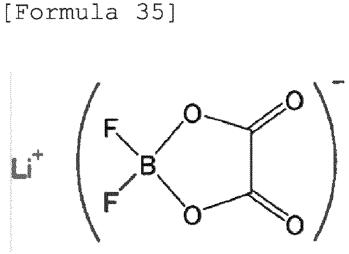
and examples of the compound (5) also include lithium difluorooxalatophosphanite (LIDFOP) represented by the following formula: 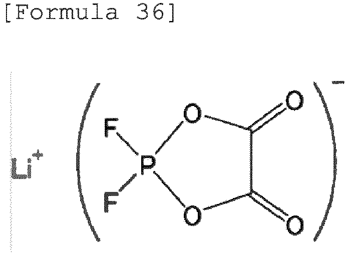
lithium tetrafluorooxalatophosphanite (LITFOP) represented by the following formula: 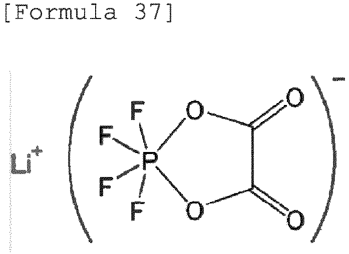
and lithium bis(oxalato)difluorophosphanite represented by the following formula:

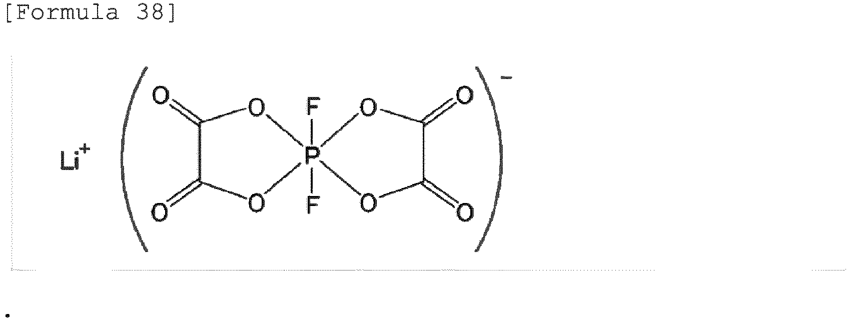

In addition, specific examples of dicarboxylic acid complex salts containing boron as a complex center element include lithium bis(malonato)borate, lithium difluoro(malonato)borate, lithium bis(methylmalonato)borate, lithium difluoro(methylmalonato)borate, lithium bis(dimethylmalonato)borate, and lithium difluoro(dimethylmalonato)borate.

Specific examples of dicarboxylic acid complex salts containing phosphorus as a complex center element include lithium tris(oxalato)phosphate, lithium tris(malonato)phosphate, lithium difluorobis(malonato)phosphate, lithium tetrafluoro(malonato)phosphate, lithium tris(methylmalonato)phosphate, lithium difluorobis(methylmalonato)phosphate, lithium tetrafluoro(methylmalonato)phosphate, lithium tris(dimethylmalonato)phosphate, lithium difluorobis(dimethylmalonato)phosphate, and lithium tetrafluoro(dimethylmalonato)phosphate.

Specific examples of dicarboxylic acid complex salts containing aluminum as a complex center element include LiAl(C₂O₄)₂ and LiAlF₂(C₂O₄).

In view of easy availability and ability to contribute to formation of a stable film-like structure, more suitably used among these are lithium bis(oxalato)borate, lithium difluoro(oxalato)borate, lithium tris(oxalato)phosphate, lithium difluorobis(oxalato)phosphate, and lithium tetrafluoro(oxalato)phosphate.

The compound (5) is particularly preferably lithium bis(oxalato)borate.

The content of the compound (5) is preferably 0.001% by mass or more, more preferably 0.01% by mass or more, and preferably 10% by mass or less, more preferably 3% by mass or less, with respect to the solvent, because further excellent cycle characteristics can be provided.

The electrolytic solution of the present disclosure preferably further contains an electrolyte salt (provided that excluding the compound (5)). Examples of the above electrolyte salt that can be employed include an alkali metal salt, an ammonium salt, and a metal salt other than an alkali metal salt (e.g., a light metal salt other than an alkali metal salt), and any of those that can be used for an electrolytic solution, such as a liquid salt (ionic salt), an inorganic polymer salt, and an organic polymer salt.

Examples of the electrolyte salt of the electrolytic solution for a secondary battery include the following compounds: MPF₆, MBF₄, MClO₄, MAsF₆, MB(C₆H₅)₄, MCH₃SO₃, MCF₃SO₃, MAlCl₄, M₂SiF₆, MCl, and MBr; wherein M is at least one metal selected from the group consisting of Li, Na and K, preferably one metal selected from the group consisting of Li, Na and K, more preferably Li or Na, further preferably Li. Use of such an alkali metal salt provides excellent battery capacity, cycle characteristics, and storage characteristics. In particular, at least one selected from MPF₆, MBF₄, MClO₄ and MAsF₆ is preferred, and MPF₆ is more preferred. Use of such an alkali metal salt provides more reduced internal resistance and a higher effect.

The electrolyte salt for the electrolytic solution for a secondary battery is preferably a lithium salt.

Any lithium salt may be used. Specific examples thereof include the following: inorganic lithium salts such as LiPF₆, LiBF₄, LiClO₄, LiAlF₄, LiSbF₆, LiTaF₆, LiWF₇, LiAsF₆, LiAlCl₄, LiI, LiBr, LiCl, LiB₁₀Cl₁₀, Li₂SiF₆, Li₂PFO₃, and LiPO₂F₂;
lithium tungstates such as LiWOFs;
lithium carboxylates such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li;
lithium salts having a S=O group such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, CF₃CF₂CF₂CF₂SO₃Li, lithium methylsulfate, lithium ethylsulfate (C₂H₅OSO₃Li), and lithium 2,2,2-trifluoroethylsulfate;
lithium imide salts such as LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, lithium bisperfluoroethanesulfonyl imide, lithium cyclic 1,2-perfluoroethanedisulfonyl imide, lithium cyclic 1,3-perfluoropropanedisulfonyl imide, lithium cyclic 1,2-ethanedisulfonyl imide, lithium cyclic 1,3-propanedisulfonyl imide, lithium cyclic 1,4-perfluorobutanedisulfonyl imide, LiN(CF₃SO₂)(FSO₂), LiN(CF₃SO₂)(C₃F₇SO₂), LiN(CF₃SO₂)(C₄F₉SO₂), and LiN(POF₂)₂;
lithium sulfamate compounds such as (CF₃CH₂)₂NSO₃Li, (CF₃CH₂)(CH₃)NSO₃Li, and (CNCH₂)₂NSO₃Li;
lithium methide salts such as LiC(FSO₂)₃, LiC(CF₃SO₂)₃, and LiC(C₂F₅SO₂)₃; and
fluorine-containing organic lithium salts such as salts represented by the formula: LiPFₐ(CₙF₂ₙ₊₁)₆₋ₐ, wherein a is an integer of 0 to 5; and n is an integer of 1 to 6, such as LiPF3(C₂F₅)₃, LiPF₃(CF₃)₃, LiPF₃(iso-C₃F₇)₃, LiPF₅(iso-C₃F₇), LiPF₄(CF₃)₂, LiPF₄(C₂F₅)₂), LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂, and LiSCN, LiB(CN)₄, LiB(C₆H₅)₄, Li₂(C₂O₄), LiP(C₂O₄)₃, Li₂B₁₂F_{b}H_{12-b}, wherein b is an integer of 0 to 3.

In view of having an effect of improving properties such as output characteristics, high-rate charge and discharge characteristics, high-temperature storage characteristics, and cycle characteristics, particularly preferred among these are LiPF₆, LiBF₄, LiSbF₆, LiTaF₆, LiPO₂F₂, FSO₃Li, CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC (CF₃SO₂)₃, LiC (C₂F₅SO₂)₃, LiBF₃CF₃, LiBF₃C₂F₅, LiPF₃(CF₃)₃, and LiPF₃(C₂F₅)₃, and most preferred is at least one lithium salt selected from the group consisting of LiPF₆, LiN(FSO₂)₂, and LiBF₄.

These electrolyte salts may be used singly or in combinations of two or more thereof. Preferred examples for combination use of two or more thereof include a combination of LiPF₆ and LiBF₄ and a combination of LiPF₆ and LiPO₂F₂, C₂H₅OSO₃Li, or FSO₃Li. These combinations have an effect of improving the high-temperature storage characteristics, load characteristics, and cycle characteristics.

In this case, the amount of LiBF₄, LiPO₂F₂, C₂H₅OSO₃Li, or FSO₃Li to be blended based on 100% by mass of the total electrolytic solution is not limited and optional as long as the effects of the present disclosure are not significantly impaired. The amount thereof is usually 0.01% by mass or more, preferably 0.1% by mass or more, while usually 30% by mass or less, preferably 20% by mass or less, more preferably 10% by mass or less, further preferably 5% by mass or less, with respect to the electrolytic solution of the present disclosure.

In another example, an inorganic lithium salt and an organic lithium salt are used in combination. Such a combination has an effect of suppressing deterioration due to high-temperature storage. The organic lithium salt is preferably CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC(CF₃SO₂)₃, LiC(C₂F₅SO₂)₃, LiBF₃CF₃, LiBF₃C₂F₅, LiPF₃(CF₃)₃, LiPF₃(C₂F₅)₃, or the like. In this case, the proportion of the organic lithium salt is preferably 0.1% by mass or more, particularly preferably 0.5% by mass or more, while preferably 30% by mass or less, particularly preferably 20% by mass or less, based on 100% by mass of the total electrolytic solution.

The concentration of the electrolyte salt in the electrolytic solution is not limited as long as the effects of the present disclosure is not impaired. In view of making the electric conductivity of the electrolytic solution within a favorable range and ensuring favorable battery performance, the lithium in the electrolytic solution preferably has a total mole concentration of 0.3 mol/L or more, more preferably 0.4 mol/L or more, further preferably 0.5 mol/L or more, while preferably 3 mol/L or less, more preferably 2.5 mol/L or less, further preferably 2.0 mol/L or less.

If the total mole concentration of lithium is excessively low, the electric conductivity of the electrolytic solution may be insufficient. On the other hand, if the total mole concentration thereof is excessively high, the electric conductivity may decrease due to increase in the viscosity, and the battery performance may deteriorate.

The electrolytic solution of the present disclosure may further contain a compound (6) represented by the general formula (6): 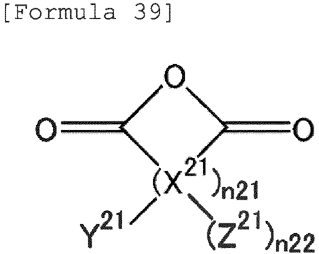 wherein X²¹ is a group containing at least H or C, n21 is an integer of 1 to 3, Y²¹ and Z²¹ are the same as or different from each other, and are each a group containing at least H, C, O, or F, n22 is 0 or 1, and Y²¹ and Z²¹ optionally bind to each other to form a ring. The electrolytic solution containing the compound (6) makes the capacity retention unlikely to further decrease and makes the amount of gas generated unlikely to further increase even when stored at high temperature.

When n21 is 2 or 3, the two or three X²¹'s may be the same as or different from each other.

When multiple Y²¹'s and multiple Z²¹'s are present, the multiple Y²¹'s may be the same as or different from each other and the multiple Z²¹'s may be the same as or different from each other.

X²¹ is preferably a group represented by -CY²¹Z²¹-, wherein Y²¹ and Z²¹ are defined as described above, or a group represented by -CY²¹=CZ²¹-, wherein Y²¹ and Z²¹ are defined as described above.

Y²¹ is preferably at least one selected from the group consisting of H-, F-, CH₃-, CH₃CH₂-, CH₃CH₂CH₂-, CF₃-, CF₃CF₂-, CH₂FCH₂-, and CF₃CF₂CF₂-.

Z²¹ is preferably at least one selected from the group consisting of H-, F-, CH₃-, CH₃CH₂-, CH₃CH₂CH₂-, CF₃-, CF₃CF₂-, CH₂FCH₂-, and CF₃CF₂CF₂-.

Alternatively, Y²¹ and Z²¹ may bind to each other to form a carbon ring or heterocycle that may contain an unsaturated bond and may have aromaticity. The ring preferably has 3 to 20 carbon atoms.

Next, specific examples of the compound (6) will be described. In the following examples, the term "analog" means an acid anhydride obtainable by replacing part of the structure of an acid anhydride mentioned as an example by another structure without departing from the spirit of the present disclosure. Examples thereof include dimers, trimers, and tetramers each composed of a plurality of acid anhydrides, structural isomers such as those having a substituent that has the same number of carbon atoms but also has a branch, and those having a different site at which a substituent binds to the acid anhydride.

Specific examples of an acid anhydride having a 5-membered cyclic structure include succinic anhydride, methylsuccinic anhydride (4-methylsuccinic anhydride), dimethylsuccinic anhydride (e.g., 4,4-dimethylsuccinic anhydride, 4,5-dimethylsuccinic anhydride), 4,4,5-trimethylsuccinic anhydride, 4,4,5,5-tetramethylsuccinic anhydride, 4-vinylsuccinic anhydride, 4,5-divinylsuccinic anhydride, phenylsuccinic anhydride (4-phenylsuccinic anhydride), 4,5-diphenylsuccinic anhydride, 4,4-diphenylsuccinic anhydride, citraconic anhydride, maleic anhydride, methylmaleic anhydride (4-methylmaleic anhydride), 4,5-dimethylmaleic anhydride, phenylmaleic anhydride (4-phenylmaleic anhydride), 4,5-diphenylmaleic anhydride, itaconic anhydride, 5-methylitaconic anhydride, 5,5-dimethylitaconic anhydride, phthalic anhydride, 3,4,5,6-tetrahydrophthalic anhydride, and analogs thereof.

Specific examples of an acid anhydride having a 6-membered cyclic structure include cyclohexanedicarboxylic anhydride (e.g., cyclohexane-1,2-dicarboxylic anhydride), 4-cyclohexene-1,2-dicarboxylic anhydride, glutaric anhydride, glutaconic anhydride, 2-phenylglutaric anhydride, and analogs thereof.

Specific examples of an acid anhydride having other cyclic structures include 5-norbornene-2,3-dicarboxylic anhydride, cyclopentanetetracarboxylic dianhydride, pyromellitic anhydride, diglycolic anhydride, and analogs thereof.

Specific examples of an acid anhydride having a cyclic structure and substituted with a halogen atom include monofluorosuccinic anhydride (e.g., 4-fluorosuccinic anhydride), 4,4-difluorosuccinic anhydride, 4,5-difluorosuccinic anhydride, 4,4,5-trifluorosuccinic anhydride, trifluoromethylsuccinic anhydride, tetrafluorosuccinic anhydride (4,4,5,5-tetrafluorosuccinic anhydride), 4-fluoromaleic anhydride, 4,5-difluoromaleic anhydride, trifluoromethylmaleic anhydride, 5-fluoroitaconic anhydride, 5,5-difluoroitaconic anhydride, and analogs thereof.

Preferred among these as the compound (6) are glutaric anhydride, citraconic anhydride, glutaconic anhydride, itaconic anhydride, diglycolic anhydride, cyclohexanedicarboxylic anhydride, cyclopentanetetracarboxylic dianhydride, 4-cyclohexene-1,2-dicarboxylic anhydride, 3,4,5,6-tetrahydrophthalic anhydride, 5-norbornene-2,3-dicarboxylic anhydride, phenylsuccinic anhydride, 2-phenylglutaric anhydride, maleic anhydride, methylmaleic anhydride, trifluoromethylmaleic anhydride, phenylmaleic anhydride, succinic anhydride, methylsuccinic anhydride, dimethylsuccinic anhydride, trifluoromethylsuccinic anhydride, monofluorosuccinic anhydride, and tetrafluorosuccinic anhydride. More preferred are maleic anhydride, methylmaleic anhydride, trifluoromethylmaleic anhydride, succinic anhydride, methylsuccinic anhydride, trifluoromethylsuccinic anhydride, and tetrafluorosuccinic anhydride. Further preferred are maleic anhydride and succinic anhydride.

The compound (6) is preferably at least one selected from the group consisting of a compound (7) represented by the general formula (7): 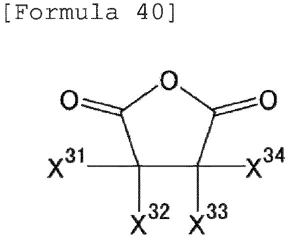
wherein X³¹ to X³⁴ are the same as or different from each other, and are each a group containing at least H, C, O, or F, and a compound (8) represented by the general formula (8): 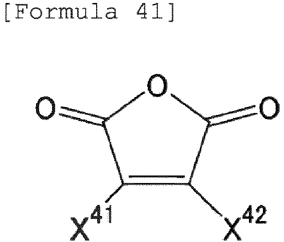
wherein X⁴¹ and X⁴² are the same as or different from each other, and are each a group containing at least H, C, O, or F.

X³¹ to X³⁴ are the same as or different from each other, and each are preferably at least one selected from the group consisting of an alkyl group, a fluorinated alkyl group, an alkenyl group, and a fluorinated alkenyl group. X³¹ to X³⁴ each have preferably 1 to 10 carbon atoms, more preferably 1 to 3 carbon atoms.

X³¹ to X³⁴ are the same as or different from each other, and each are more preferably at least one selected from the group consisting of H-, F-, CH₃-, CH₃CH₂-, CH₃CH₂CH₂-, CF₃-, CF₃CF₂-, CH₂FCH₂-, and CF₃CF₂CF₂-.

X⁴¹ and X⁴² are the same as or different from each other, and each are preferably at least one selected from the group consisting of an alkyl group, a fluorinated alkyl group, an alkenyl group, and a fluorinated alkenyl group. X⁴¹ and X⁴² each have preferably 1 to 10 carbon atoms, more preferably 1 to 3 carbon atoms.

X⁴¹ and X⁴² are the same as or different from each other, and each are more preferably at least one selected from the group consisting of H-, F-, CH₃-, CH₃CH₂-, CH₃CH₂CH₂-, CF₃-, CF₃CF₂-, CH₂FCH₂-, and CF₃CF₂CF₂-.

The compound (7) is preferably any of the following compounds.

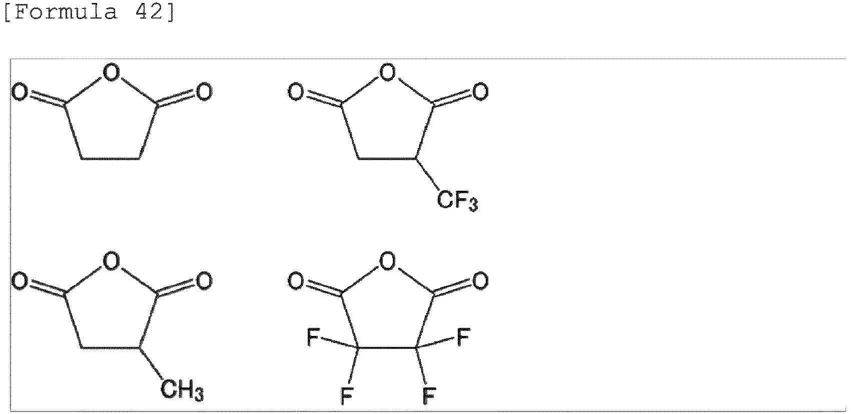

The compound (8) is preferably any of the following compounds.

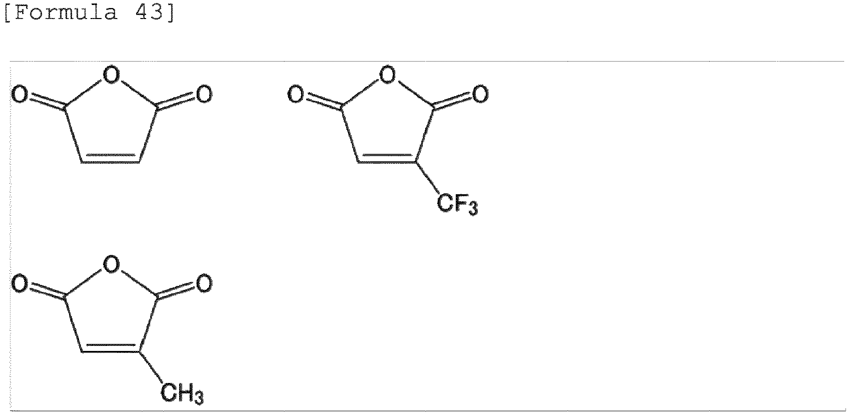

The electrolytic solution preferably contains 0.0001 to 15% by mass of the compound (6) because the capacity retention is unlikely to further decrease and the amount of gas generated is unlikely to further increase even when the electrolytic solution is stored at high temperature. The content of compound (6) is more preferably 0.01 to 10% by mass, further preferably 0.1 to 5% by mass, particularly preferably 0.1 to 3.0% by mass.

When the electrolytic solution contains both the compounds (7) and (8), the electrolytic solution preferably contains 0.08 to 2.50% by mass of the compound (7) and 0.02 to 1.50% by mass of the compound (8), more preferably 0.80 to 2.50% by mass of the compound (7) and 0.08 to 1.50% by mass of the compound (8) with respect to the electrolytic solution because the capacity retention is unlikely to further decrease and the amount of gas generated is unlikely to further increase even when the electrolytic solution is stored at high temperature.

The electrolytic solution of the present disclosure may contain at least one selected from the group consisting of nitrile compounds represented by the following general formulas (9a), (9b), and (9c): 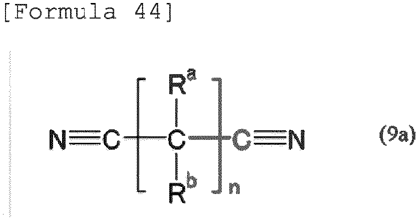
wherein R^{a} and R^{d} each independently represent a hydrogen atom, a cyano group (CN), a halogen atom, an alkyl group, or a group obtainable by replacing at least one hydrogen atom of an alkyl group by a halogen atom; and n represents an integer of 1 to 10; 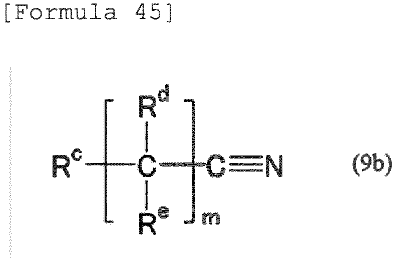
wherein R^{c} represents a hydrogen atom, a halogen atom, an alkyl group, a group obtainable by replacing at least one hydrogen atom of an alkyl group by a halogen atom, or a group represented by NC-R^{c1}-X^{c1}-, wherein R^{c1} is an alkylene group, and x^{c1} is an oxygen atom or a sulfur atom; R^{d} and R^{e} each independently represent a hydrogen atom, a halogen atom, an alkyl group, or a group obtainable by replacing at least one hydrogen atom of an alkyl group by a halogen atom; and m represents an integer of 1 to 10; 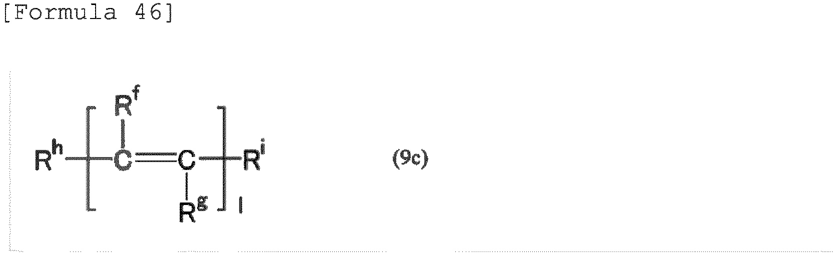
wherein R^{f}, R^{g}, R^{h}, and Rⁱ each independently represent a group containing a cyano group (CN), a hydrogen atom (H), a halogen atom, an alkyl group, or a group obtainable by replacing at least one hydrogen atom of an alkyl group by a halogen atom; provided that at least one selected from R^{f}, R^{g}, R^{h}, and Rⁱ is a group containing a cyano group; and 1 represents an integer of 1 to 3.

This can improve the high-temperature storage characteristics of an electrochemical device. One of the nitrile compounds may be used alone, or two or more thereof may be used in any combination at any ratio.

In the general formula (9a), R^{a} and R^{b} are each independently a hydrogen atom, a cyano group (CN), a halogen atom, an alkyl group, or a group obtainable by replacing at least one hydrogen atom of an alkyl group by a halogen atom.

Examples of the halogen atom include a fluorine atom, a chlorine atom, a bromine atom, and an iodine atom. Preferred among these is a fluorine atom.

The alkyl group is preferably an alkyl group having 1 to 5 carbon atoms. Specific examples of the alkyl group include a methyl group, an ethyl group, a propyl group, an isopropyl group, a butyl group, an isobutyl group, and a tert-butyl group.

An example of the group obtainable by replacing at least one hydrogen atom of an alkyl group by a halogen atom includes a group obtainable by replacing at least one hydrogen atom of the aforementioned alkyl group by the aforementioned halogen atom.

When R^{a} and R^{d} are alkyl groups or groups each obtainable by replacing at least one hydrogen atom of an alkyl group by a halogen atom, R^{a} and R^{b} may bind to each other to form a cyclic structure (e.g., a cyclohexane ring).

R^{a} and R^{d} are each preferably a hydrogen atom or an alkyl group.

In the general formula (9a), n is an integer of 1 to 10. When n is 2 or more, all of n R^{a}'s may be the same as each other, or at least one of them may be different from the others. The same applies to R^{b}. n is preferably an integer of 1 to 7, more preferably an integer of 2 to 5.

Preferred as the nitrile compound represented by the general formula (9a) are dinitriles and tricarbonitriles.

Specific examples of the dinitriles include malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, isopropylmalononitrile, tert-butylmalononitrile, methylsuccinonitrile, 2,2-dimethylsuccinonitrile, **2,3-**dimethylsuccinonitrile, 2,3,3-trimethylsuccinonitrile, 2,2,3,3-tetramethylsuccinonitrile, 2,3-diethyl-2,3-dimethylsuccinonitrile, 2,2-diethyl-3,3-dimethylsuccinonitrile, bicyclohexyl-1,1-dicarbonitrile, bicyclohexyl-2,2-dicarbonitrile, bicyclohexyl-3,3-dicarbonitrile, 2,5-dimethyl-2,5-hexanedicarbonitrile, 2,3-diisobutyl-2,3-dimethylsuccinonitrile, 2,2-diisobutyl-3,3-dimethylsuccinonitrile, 2-methylglutaronitrile, 2,3-dimethylglutaronitrile, 2,4-dimethylglutaronitrile, 2,2,3,3-tetramethylglutaronitrile, 2,2,4,4-tetramethylglutaronitrile, 2,2,3,4-tetramethylglutaronitrile, 2,3,3,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,3'-(ethylenedioxy)dipropionitrile, 3,3'-(ethylenedithio)dipropionitrile, 3,9-bis(2-cyanoethyl)-2,4,8,10-tetraoxaspiro[5,5]undecane, butanenitrile, and phthalonitrile. Particularly preferred among these are succinonitrile, glutaronitrile, and adiponitrile.

Specific examples of the tricarbonitriles include pentanetricarbonitrile, propanetricarbonitrile, 1,3,5-hexanetricarbonitrile, 1,3,6-hexanetricarbonitrile, heptanetricarbonitrile, 1,2,3-propanetricarbonitrile, 1,3,5-pentanetricarbonitrile, cyclohexanetricarbonitrile, triscyanoethylamine, triscyanoethoxypropane, tricyanoethylene, and tris(2-cyanoethyl)amine. Particularly preferred are 1,3,6-hexanetricarbonitrile and cyclohexanetricarbonitrile, and most preferred is cyclohexanetricarbonitrile.

In the general formula (9b), R^{c} is a hydrogen atom, a halogen atom, an alkyl group, a group obtainable by replacing at least one hydrogen atom of an alkyl group by a halogen atom, or a group represented by NC-R^{c1}-X^{c1}-, wherein R^{c1} represents an alkylene group, and X^{c1} represents an oxygen atom or a sulfur atom. R^{d} and R^{e} are each independently a hydrogen atom, a halogen atom, an alkyl group, or a group obtainable by replacing at least one hydrogen atom of an alkyl group by a halogen atom.

Examples of the halogen atom, the alkyl group, and the group obtainable by replacing at least one hydrogen atom of an alkyl group by a halogen atom include those mentioned as examples thereof for the general formula (9a).

R^{c1} in the NC-R^{c1}-X^{c1}- is an alkylene group. The alkylene group is preferably an alkylene group having 1 to 3 carbon atoms.

R^{c}, R^{d}, and R^{e} are each preferably independently a hydrogen atom, a halogen atom, an alkyl group, or a group obtainable by replacing at least one hydrogen atom of an alkyl group by a halogen atom.

At least one of R^{c}, R^{d}, and R^{e} is preferably a halogen atom or a group obtainable by replacing at least one hydrogen atom of an alkyl group by a halogen atom, more preferably a fluorine atom, or a group obtainable by replacing at least one hydrogen atom of an alkyl group by a fluorine atom.

When R^{d} and R^{e} are alkyl groups or groups each obtainable by replacing at least one hydrogen atom of an alkyl group by a halogen atom, R^{d} and R^{e} may bind to each other to form a cyclic structure (e.g., a cyclohexane ring).

In the general formula (9b), m is an integer of 1 to 10. When m is 2 or greater, m R^{d}'s may be the same as each other, or at least one of them may be different from the others. The same applies to R^{e}. m is preferably an integer of 2 to 7, more preferably an integer of 2 to 5.

Examples of the nitrile compound represented by the general formula (9b) include acetonitrile, propionitrile, butyronitrile, isobutyronitrile, valeronitrile, isovaleronitrile, lauronitrile, 3-methoxypropionitrile, 2-methylbutyronitrile, trimethylacetonitrile, hexanenitrile, cyclopentanecarbonitrile, cyclohexanecarbonitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3-difluoropropionitrile, 2,2,3-trifluoropropionitrile, 3,3,3-trifluoropropionitrile, 3,3'-oxydipropionitrile, 3,3'-thiodipropionitrile, pentafluoropropionitrile, methoxyacetonitrile, and benzonitrile. Particularly preferred among these is 3,3,3-trifluoropropionitrile.

In the general formula (9c), R^{f}, R^{g}, R^{h}, and Rⁱ are each independently a group containing a cyano group (CN), a hydrogen atom, a halogen atom, an alkyl group, or a group obtainable by replacing at least one hydrogen atom of an alkyl group by a halogen atom.

Examples of the halogen atom, the alkyl group, and the group obtainable by replacing at least one hydrogen atom of an alkyl group by a halogen atom include those mentioned as examples thereof for the general formula (9a).

Examples of the group containing a cyano group include a cyano group and a group obtainable by replacing at least one hydrogen atom of an alkyl group by a cyano group. Examples of the alkyl group in this case include those mentioned as examples thereof for the general formula (9a).

At least one of R^{f}, R^{g}, R^{h}, and Rⁱ is a group containing a cyano group. Preferably, at least two of R^{f}, R^{g}, R^{h}, and Rⁱ are each a group containing a cyano group. More preferably, R^{h} and Rⁱ are each a group containing a cyano group. When R^{h} and Rⁱ are each a group containing a cyano group, R^{f} and R^{g} are preferably hydrogen atoms.

In the general formula (9c), 1 is an integer of 1 to 3. When 1 is 2 or greater, 1 R^{f}'s may be the same as each other, or at least one of them may be different from the others. The same applies to R^{g}. 1 is preferably an integer of 1 to 2.

Examples of the nitrile compound represented by the general formula (9c) include 3-hexenedinitrile, mucononitrile, maleonitrile, fumaronitrile, acrylonitrile, methacrylonitrile, crotononitrile, 3-methylcrotononitrile, 2-methyl-2-butenenitrile, 2-pentenenitrile, 2-methyl-2-pentenenitrile, 3-methyl-2-pentenenitrile, and 2-hexenenitrile. Preferred are 3-hexenedinitrile and mucononitrile, and particularly preferred is 3-hexenedinitrile.

The content of the nitrile compound is preferably 0.2 to 7% by mass with respect to the electrolytic solution. This can further improve the high-temperature storage characteristics and safety of an electrochemical device at a high voltage. The lower limit of the total content of the nitrile compounds is more preferably 0.3% by mass, further preferably 0.5% by mass. The upper limit thereof is more preferably 5% by mass, further preferably 2% by mass, particularly preferably 1.0% by mass.

The electrolytic solution of the present disclosure may contain a compound having an isocyanate group (hereinafter, also abbreviated as "isocyanate"). The isocyanate is not limited, and any isocyanate may be used. Examples of the isocyanate include monoisocyanates, diisocyanates, and triisocyanates.

Specific examples of the monoisocyanates include isocyanatomethane, isocyanatoethane, 1-isocyanatopropane, 1-isocyanatobutane, 1-isocyanatopentane, 1-isocyanatohexane, 1-isocyanatoheptane, 1-isocyanatooctane, 1-isocyanatononane, 1-isocyanatodecane, isocyanatocyclohexane, methoxycarbonyl isocyanate, ethoxycarbonyl isocyanate, propoxycarbonyl isocyanate, butoxycarbonyl isocyanate, methoxysulfonyl isocyanate, ethoxysulfonyl isocyanate, propoxysulfonyl isocyanate, butoxysulfonyl isocyanate, fluorosulfonyl isocyanate, methyl isocyanate, butyl isocyanate, phenyl isocyanate, 2-isocyanatoethyl acrylate, 2-isocyanatoethyl methacrylate, and ethyl isocyanate.

Specific examples of the diisocyanates include 1,4-diisocyanatobutane, 1,5-diisocyanatopentane, 1,6-diisocyanatohexane, 1,7-diisocyanatoheptane, 1,8-diisocyanatooctane, 1,9-diisocyanatononane, 1,10-diisocyanatodecane, 1,3-diisocyanatopropene, 1,4-diisocyanato-2-butene, 1,4-diisocyanato-2-fluorobutane, 1,4-diisocyanato-2,3-difluorobutane, 1,5-diisocyanato-2-pentene, 1,5-diisocyanato-2-methylpentane, 1,6-diisocyanato-2-hexene, 1,6-diisocyanato-3-hexene, 1,6-diisocyanato-3-fluorohexane, 1,6-diisocyanato-3,4-difluorohexane, toluene diisocyanate, xylene diisocyanate, tolylene diisocyanate, 1,2-bis(isocyanatomethyl)cyclohexane, 1,3-bis(isocyanatomethyl)cyclohexane, 1,4-bis(isocyanatomethyl)cyclohexane, 1,2-diisocyanatocyclohexane, 1,3-diisocyanatocyclohexane, 1,4-diisocyanatocyclohexane, dicyclohexylmethane-1,1'-diisocyanate, dicyclohexylmethane-2,2'-diisocyanate, dicyclohexylmethane-3,3'-diisocyanate, dicyclohexylmethane-4,4'-diisocyanate, isophorone diisocyanate, bicyclo[2.2.1]heptane-2,5-diylbis(methyl=isocyanate), bicyclo[2.2.1]heptane-2,6-diylbis(methyl=isocyanate), 2,4,4-trimethylhexamethylene diisocyanate, 2,2,4-trimethylhexamethylene diisocyanate, hexamethylene diisocyanate, 1,4-phenylene diisocyanate, octamethylene diisocyanate, and tetramethylene diisocyanate.

Specific examples of the triisocyanates include 1,6,11-triisocyanatoundecane, 4-isocyanatomethyl-1,8-octamethylene diisocyanate, 1,3,5-triisocyanatomethylbenzene, 1,3,5-tris(6-isocyanatohex-1-yl)-1,3,5-triazine-2,4,6(1H,3H,5H)-trione, and 4-(isocyanatomethyl)octamethylene=diisocyanate.

Among these, 1,6-diisocyanatohexane, 1,3-bis(isocyanatomethyl)cyclohexane, 1,3,5-tris(6-isocyanatohex-1-yl)-1,3,5-triazine-2,4,6(1H,3H,5H)-trione, 2,4,4-trimethylhexamethylene diisocyanate, and 2,2,4-trimethylhexamethylene diisocyanate are industrially easily available, and preferred in view of holding down the production cost of an electrolytic solution. Also from the technical viewpoint, these isocyanates can contribute to formation of a stable film-like structure and thus are more suitably used.

The content of the isocyanate, which is not limited, is optional as long as the effects of the present disclosure are not significantly impaired, and is preferably 0.001% by mass or more and 1.0% by mass or less with respect to the electrolytic solution. A content of the isocyanate equivalent to or higher than this lower limit can give a sufficient effect of improving the cycle characteristics to a non-aqueous electrolytic solution secondary battery. A content thereof equivalent to or lower than this upper limit can avoid an initial increase in resistance of a non-aqueous electrolytic solution secondary battery. The content of the isocyanate is more preferably 0.01% by mass or more, further preferably 0.1% by mass or more, particularly preferably 0.2% by mass or more, while more preferably 0.8% by mass or less, further preferably 0.7% by mass or less, particularly preferably 0.6% by mass or less.

The electrolytic solution of the present disclosure may contain a cyclic sulfonate. The cyclic sulfonate is not limited, and any cyclic sulfonate may be used. Examples of the cyclic sulfonate include a saturated cyclic sulfonate, an unsaturated cyclic sulfonate, a saturated cyclic disulfonate, and an unsaturated cyclic disulfonate.

Specific examples of the saturated cyclic sulfonate include 1,3-propanesultone, 1-fluoro-1,3-propanesultone, 2-fluoro-1,3-propanesultone, 3-fluoro-1,3-propanesultone, 1-methyl-1,3-propanesultone, 2-methyl-1,3-propanesultone, 3-methyl-1,3-propanesultone, 1,3-butanesultone, 1,4-butanesultone, 1-fluoro-1,4-butanesultone, 2-fluoro-1,4-butanesultone, 3-fluoro-1,4-butanesultone, 4-fluoro-1,4-butanesultone, 1-methyl-1,4-butanesultone, 2-methyl-1,4-butanesultone, 3-methyl-1,4-butanesultone, 4-methyl-1,4-butanesultone, and 2,4-butanesultone.

Specific examples of the unsaturated cyclic sulfonate include 1-propene-1,3-sultone, 2-propene-1,3-sultone, 1-fluoro-1-propene-1,3-sultone, 2-fluoro-1-propene-1,3-sultone, 3-fluoro-1-propene-1,3-sultone, 1-fluoro-2-propene-1,3-sultone, 2-fluoro-2-propene-1,3-sultone, 3-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene-1,3-sultone, 2-methyl-2-propene-1,3-sultone, 3-methyl-2-propene-1,3-sultone, 1-butene-1,4-sultone, 2-butene-1,4-sultone, 3-butene-1,4-sultone, 1-fluoro-1-butene-1,4-sultone, 2-fluoro-1-butene-1,4-sultone, 3-fluoro-1-butene-1,4-sultone, 4-fluoro-1-butene-1,4-sultone, 1-fluoro-2-butene-1,4-sultone, 2-fluoro-2-butene-1,4-sultone, 3-fluoro-2-butene-1,4-sultone, 4-fluoro-2-butene-1,4-sultone, 1,3-propenesultone, 1-fluoro-3-butene-1,4-sultone, 2-fluoro-3-butene-1,4-sultone, 3-fluoro-3-butene-1,4-sultone, 4-fluoro-3-butene-1,4-sultone, 1-methyl-1-butene-1,4-sultone, 2-methyl-1-butene-1,4-sultone, 3-methyl-1-butene-1,4-sultone, 4-methyl-1-butene-1,4-sultone, 1-methyl-2-butene-1,4-sultone, 2-methyl-2-butene-1,4-sultone, 3-methyl-2-butene-1,4-sultone, 4-methyl-2-butene-1,4-sultone, 1-methyl-3-butene-1,4-sultone, 2-methyl-3-butene-1,4-sultone, 3-methyl-3-butene-1,4-sultone, and 4-methyl-3-butene-14-sultone.

Among these, 1,3-propanesultone, 1-fluoro-1,3-propanesultone, 2-fluoro-1,3-propanesultone, 3-fluoro-1,3-propanesultone, and 1-propene-1,3-sultone are more suitably used in view of easy availability and ability to contribute to formation of a stable film-like structure. The content of the cyclic sulfonate, which is not limited, is optional as long as the effects of the present disclosure are not significantly impaired, and is preferably 0.001% by mass or more and 3.0% by mass or less with respect to the electrolytic solution.

A content of the cyclic sulfonate equivalent to or higher than this lower limit can give a sufficient effect of improving the cycle characteristics to a non-aqueous electrolytic solution secondary battery. A content thereof equivalent to or lower than this upper limit can avoid increase in the production cost of a non-aqueous electrolytic solution secondary battery. The content of the cyclic sulfonate is more preferably 0.01% by mass or more, further preferably 0.1% by mass or more, particularly preferably 0.2% by mass or more, while more preferably 2.5% by mass or less, further preferably 2.0% by mass or less, particularly preferably 1.8% by mass or less.

The electrolytic solution of the present disclosure may further contain a polyethylene oxide that has a weight average molecular weight of 2,000 to 4,000 and has -OH, -OCOOH, or -COOH at an end.

The electrolytic solution, when containing such a compound, can improve the stability at the electrode interfaces to thereby improve the characteristics of an electrochemical device.

Examples of the polyethylene oxide include polyethylene oxide monool, polyethylene oxide carboxylate, polyethylene oxide diol, polyethylene oxide dicarboxylate, polyethylene oxide triol, and polyethylene oxide tricarboxylate. One of these may be used singly, or two or more of these may be used in combination.

In view of more favorable characteristics of an electrochemical device, preferred among these are a mixture of polyethylene oxide monool and polyethylene oxide diol and a mixture of polyethylene carboxylate and polyethylene dicarboxylate.

The polyethylene oxide having an excessively small weight average molecular weight may be easily oxidatively decomposed. The weight average molecular weight is more preferably 3,000 to 4,000.

The weight average molecular weight can be measured by gel permeation chromatography (GPC) in terms of polystyrene.

The content of the polyethylene oxide is preferably 1 × 10⁻⁶ to 1 × 10⁻² mol/kg in the electrolytic solution. An excessively large content of the polyethylene oxide may impair the characteristics of an electrochemical device.

The content of the polyethylene oxide is more preferably 5 × 10⁻⁶ mol/kg or more.

The electrolytic solution of the present disclosure may further contain additives, such as a fluorinated saturated cyclic carbonate, an unsaturated cyclic carbonate, an overcharge inhibitor, and other known aids. This can suppress deterioration of the characteristics of an electrochemical device.

Examples of the fluorinated saturated cyclic carbonate include the compounds represented by the general formula (A) described above. Preferred among these are fluoroethylene carbonate, difluoroethylene carbonate, monofluoromethylethylene carbonate, trifluoromethylethylene carbonate, and 2,2,3,3,3-pentafluoropropylethylene carbonate (4-(2,2,3,3,3-pentafluoro-propyl)-[1,3]dioxolan-2-one). One of the fluorinated saturated cyclic carbonates may be used singly, or two or more thereof may be used in any combination at any ratio.

The content of the fluorinated saturated cyclic carbonate is preferably 0.001 to 10% by mass, more preferably 0.01 to 5% by mass, further preferably 0.1 to 3% by mass, with respect to the electrolytic solution.

Examples of the unsaturated cyclic carbonate include vinylene carbonates, ethylene carbonates substituted with a substituent that has an aromatic ring, a carbon-carbon double bond, or a carbon-carbon triple bond, phenyl carbonates, vinyl carbonates, allyl carbonates, and catechol carbonates.

Examples of the vinylene carbonates include vinylene carbonate, methylvinylene carbonate, 4,5-dimethylvinylene carbonate, phenylvinylene carbonate, 4,5-diphenylvinylene carbonate, vinylvinylene carbonate, 4,5-divinylvinylene carbonate, allylvinylene carbonate, 4,5-diallylvinylene carbonate, 4-fluorovinylene carbonate, 4-fluoro-5-methylvinylene carbonate, 4-fluoro-5-phenylvinylene carbonate, 4-fluoro-5-vinylvinylene carbonate, 4-allyl-5-fluorovinylene carbonate, ethynylethylene carbonate, propargylethylene carbonate, methylvinylene carbonate, and dimethylvinylene carbonate.

Specific examples of the ethylene carbonates substituted with a substituent that has an aromatic ring, a carbon-carbon double bond, or a carbon-carbon triple bond include vinylethylene carbonate, 4,5-divinylethylene carbonate, 4-methyl-5-vinylethylene carbonate, 4-allyl-5-vinylethylene carbonate, ethynylethylene carbonate, 4,5-diethynylethylene carbonate, 4-methyl-5-ethynylethylene carbonate, 4-vinyl-5-ethynylethylene carbonate, 4-allyl-5-ethynylethylene carbonate, phenylethylene carbonate, 4,5-diphenylethylene carbonate, 4-phenyl-5-vinylethylene carbonate, 4-allyl-5-phenylethylene carbonate, allylethylene carbonate, 4,5-diallylethylene carbonate, 4-methyl-5-allylethylene carbonate, 4-methylene-1,3-dioxolan-2-one, 4,5-di methylene-1,3-dioxolan-2-one, and 4-methyl-5-allylethylene carbonate.

Among these, the unsaturated cyclic carbonate is preferably vinylene carbonate, methylvinylene carbonate, 4,5-dimethylvinylene carbonate, vinylvinylene carbonate, 4,5-vinylvinylene carbonate, allylvinylene carbonate, 4,5-diallylvinylene carbonate, vinylethylene carbonate, 4,5-divinylethylene carbonate, 4-methyl-5-vinylethylene carbonate, allylethylene carbonate, 4,5-diallylethylene carbonate, 4-methyl-5-allylethylene carbonate, 4-allyl-5-vinylethylene carbonate, ethynylethylene carbonate, 4,5-diethynylethylene carbonate, 4-methyl-5-ethynylethylene carbonate, and 4-vinyl-5-ethynylethylene carbonate. Particularly preferred are vinylene carbonate, vinylethylene carbonate, and ethynylethylene carbonate because of forming a more stable interface protecting film, and most preferred is vinylene carbonate.

The molecular weight of the unsaturated cyclic carbonate is not limited and is optional as long as the effects of the present disclosure are not significantly impaired. The molecular weight is preferably 50 or more and 250 or less. Within this range, the solubility of the unsaturated cyclic carbonate with respect to the electrolytic solution is likely to be ensured, and the effects of the present disclosure are likely to be sufficiently exhibited. The molecular weight of the unsaturated cyclic carbonate is more preferably 80 or more, and more preferably 150 or less.

A method for producing the unsaturated cyclic carbonate is not limited, and the unsaturated cyclic carbonate can be produced by a known method optionally selected.

One of the unsaturated cyclic carbonates may be used singly, or two or more thereof may be used in any combination at any ratio.

The content of the unsaturated cyclic carbonate is not limited and is optional as long as the effects of the present disclosure are not significantly impaired. The content of the unsaturated cyclic carbonate is preferably 0.001% by mass or more, more preferably 0.01% by mass or more, further preferably 0.1% by mass or more, based on 100% by mass of the electrolytic solution. The content is preferably 5% by mass or less, more preferably 4% by mass or less, further preferably 3% by mass or less. Within the range, an electrochemical device containing the electrolytic solution easily exhibits a sufficient effect of improving the cycle characteristics, and easily avoids a situation in which high-temperature storage characteristics deteriorate, a larger amount of gas is generated, and a discharge capacity retention decreases.

In addition to the non-fluorinated unsaturated cyclic carbonates mentioned above, a fluorinated unsaturated cyclic carbonate may also suitably be used as the unsaturated cyclic carbonate.

The fluorinated unsaturated cyclic carbonate is a cyclic carbonate having an unsaturated bond and a fluorine atom. The fluorinated unsaturated cyclic carbonate is not limited as long as the carbonate has one or more fluorine atoms. In particular, the fluorinated unsaturated cyclic carbonate has usually 6 or less fluorine atoms, preferably 4 or less fluorine atoms, most preferably 1 or 2 fluorine atoms.

Examples of the fluorinated unsaturated cyclic carbonate include a fluorinated vinylene carbonate derivative and a fluorinated ethylene carbonate derivative substituted with a substituent that has an aromatic ring or a carbon-carbon double bond.

Examples of the fluorinated vinylene carbonate derivative include 4-fluorovinylene carbonate, 4-fluoro-5-methylvinylene carbonate, 4-fluoro-5-phenylvinylene carbonate, 4-allyl-5-fluorovinylene carbonate, and **4-**fluoro-5-vinylvinylene carbonate.

Examples of the fluorinated ethylene carbonate derivative substituted with a substituent that has an aromatic ring or a carbon-carbon double bond include **4-**fluoro-4-vinylethylene carbonate, 4-fluoro-4-allylethylene carbonate, 4-fluoro-5-vinylethylene carbonate, 4-fluoro-5-allylethylene carbonate, 4,4-difluoro-4-vinylethylene carbonate, 4,4-difluoro-4-allylethylene carbonate, 4,5-difluoro-4-vinylethylene carbonate, 4,5-difluoro-4-allylethylene carbonate, **4-**fluoro-4,5-divinylethylene carbonate, 4-fluoro-4,5-diallylethylene carbonate, 4,5-difluoro-4,5-divinylethylene carbonate, 4,5-difluoro-4,5-diallylethylene carbonate, 4-fluoro-4-phenylethylene carbonate, 4-fluoro-5-phenylethylene carbonate, 4,4-difluoro-5-phenylethylene carbonate, and 4,5-difluoro-4-phenylethylene carbonate.

Among these, more suitably used as the fluorinated unsaturated cyclic carbonate are 4-fluorovinylene carbonate, 4-fluoro-5-methylvinylene carbonate, 4-fluoro-5-vinylvinylene carbonate, 4-allyl-5-fluorovinylene carbonate, 4-fluoro-4-vinylethylene carbonate, 4-fluoro-4-allylethylene carbonate, 4-fluoro-5-vinylethylene carbonate, 4-fluoro-5-allylethylene carbonate, 4,4-difluoro-4-vinylethylene carbonate, 4,4-difluoro-4-allylethylene carbonate, 4,5-difluoro-4-vinylethylene carbonate, 4,5-difluoro-4-allylethylene carbonate, 4-fluoro-4,5-divinylethylene carbonate, 4-fluoro-4,5-diallylethylene carbonate, 4,5-difluoro-4,5-divinylethylene carbonate, and 4,5-difluoro-4,5-diallylethylene carbonate, because of forming a stable interface protecting film.

The molecular weight of the fluorinated unsaturated cyclic carbonate is not limited and is optional as long as the effects of the present disclosure are not significantly impaired. The molecular weight is preferably 50 or more and 500 or less. Within this range, the solubility of the fluorinated unsaturated cyclic carbonate with respect to the electrolytic solution is likely to be ensured.

A method for producing the fluorinated unsaturated cyclic carbonate is not limited, and the fluorinated unsaturated cyclic carbonate can be produced by a known method optionally selected. The molecular weight is more preferably 100 or more, while more preferably 200 or less.

One of the fluorinated unsaturated cyclic carbonates may be used singly, or two or more thereof may be used in any combination at any ratio. The content of the fluorinated unsaturated cyclic carbonate is not limited and is optional as long as the effects of the present disclosure are not significantly impaired. The content of the fluorinated unsaturated cyclic carbonate is usually preferably 0.001% by mass or more, more preferably 0.01% by mass or more, further preferably 0.1% by mass or more, while preferably 5% by mass or less, more preferably 4% by mass or less, further preferably 3% by mass or less, based on 100% by mass of the electrolytic solution. Within this range, an electrochemical device containing the electrolytic solution easily exhibits a sufficient effect of improving the cycle characteristics, and easily avoids a situation in which high-temperature storage characteristics deteriorate, a larger amount of gas is generated, and a discharge capacity retention decreases.

The electrolytic solution of the present disclosure may contain a compound having a triple bond. The compound may be of any type as long as the compound has one or more triple bonds in the molecule.

Specific examples of the compound having a triple bond include the following compounds:
hydrocarbon compounds such as 1-pentyne, 2-pentyne, 1-hexyne, 2-hexyne, 3-hexyne, 1-heptyne, 2-heptyne, 3-heptyne, 1-octyne, 2-octyne, 3-octyne, 4-octyne, 1-nonyne, 2-nonyne, 3-nonyne, 4-nonyne, 1-dodecyne, 2-dodecyne, 3-dodecyne, 4-dodecyne, 5-dodecyne, phenyl acetylene, 1-phenyl-1-propyne, 1-phenyl-2-propyne, 1-phenyl-1-butyne, 4-phenyl-1-butyne, 4-phenyl-1-butyne, 1-phenyl-1-pentyne, 5-phenyl-1-pentyne, 1-phenyl-1-hexyne, 6-phenyl-1-hexyne, diphenyl acetylene, 4-ethynyl toluene, and dicyclohexyl acetylene;
monocarbonates such as 2-propynylmethyl carbonate, 2-propynylethyl carbonate, 2-propynylpropyl carbonate, 2-propynylbutyl carbonate, 2-propynylphenyl carbonate, 2-propynylcyclohexyl carbonate, di-2-propynylcarbonate, 1-methyl-2-propynylmethyl carbonate, 1,1-dimethyl-2-propynylmethyl carbonate, 2-butynylmethyl carbonate, 3-butynylmethyl carbonate, 2-pentynylmethyl carbonate, 3-pentynylmethyl carbonate, and 4-pentynylmethyl carbonate; dicarbonates such as 2-butyne-1,4-diol dimethyl dicarbonate, 2-butyne-1,4-diol diethyl dicarbonate, 2-butyne-1,4-diol dipropyl dicarbonate, 2-butyne-1,4-diol dibutyl dicarbonate, 2-butyne-1,4-diol diphenyl dicarbonate, and 2-butyne-1,4-diol dicyclohexyl dicarbonate;
monocarboxylates such as 2-propynyl acetate, 2-propynyl propionate, 2-propynyl butyrate, 2-propynyl benzoate, 2-propynyl cyclohexylcarboxylate, 1,1-dimethyl-2-propynyl acetate, 1,1-dimethyl-2-propynyl propionate, 1,1-dimethyl-2-propynyl butyrate, 1,1-dimethyl-2-propynyl benzoate, 1,1-dimethyl-2-propynyl cyclohexylcarboxylate, 2-butynyl acetate, 3-butynyl acetate, 2-pentynyl acetate, 3-pentynyl acetate, 4-pentynyl acetate, methyl acrylate, ethyl acrylate, propyl acrylate, vinyl acrylate, 2-propenyl acrylate, 2-butenyl acrylate, 3-butenyl acrylate, methyl methacrylate, ethyl methacrylate, propyl methacrylate, vinyl methacrylate, 2-propenyl methacrylate, 2-butenyl methacrylate, 3-butenyl methacrylate, methyl 2-propynoate, ethyl 2-propynoate, propyl 2-propynoate, vinyl 2-propynoate, 2-propenyl 2-propynoate, 2-butenyl 2-propynoate, 3-butenyl 2-propynoate, methyl 2-butynoate, ethyl 2-butynoate, propyl 2-butynoate, vinyl 2-butynoate, 2-propenyl 2-butynoate, 2-butenyl 2-butynoate, 3-butenyl 2-butynoate, methyl 3-butynoate, ethyl 3-butynoate, propyl 3-butynoate, vinyl 3-butynoate, 2-propenyl 3-butynoate, 2-butenyl 3-butynoate, 3-butenyl 3-butynoate, methyl 2-pentynoate, ethyl 2-pentynoate, propyl 2-pentynoate, vinyl 2-pentynoate, 2-propenyl 2-pentynoate, 2-butenyl 2-pentynoate, 3-butenyl 2-pentynoate, methyl 3-pentynoate, ethyl 3-pentynoate, propyl 3-pentynoate, vinyl 3-pentynoate, 2-propenyl 3-pentynoate, 2-butenyl 3-pentynoate, 3-butenyl 3-pentynoate, methyl 4-pentynoate, ethyl 4-pentynoate, propyl 4-pentynoate, vinyl 4-pentynoate, 2-propenyl 4-pentynoate, 2-butenyl 4-pentynoate, and 3-butenyl 4-pentynoate, fumarates, methyl trimethylacetate, and ethyl trimethylacetate;
dicarboxylates such as 2-butyne-1,4-diol diacetate, 2-butyne-1,4-diol dipropionate, 2-butyne-1,4-diol dibutyrate, 2-butyne-1,4-diol dibenzoate, 2-butyne-1,4-diol dicyclohexanecarboxylate, hexahydrobenzo[1,3,2]dioxathiolane-2-oxide (1,2-cyclohexane diol, 2,2-dioxide-1,2-oxathiolan-4-yl acetate, and 2,2-dioxide-1,2-oxathiolan-4-yl acetate;
oxalic acid diesters such as methyl 2-propynyl oxalate, ethyl 2-propynyl oxalate, propyl 2-propynyl oxalate, 2-propynyl vinyl oxalate, allyl 2-propynyl oxalate, di-2-propynyl oxalate, 2-butynyl methyl oxalate, 2-butynyl ethyl oxalate, 2-butynyl propyl oxalate, 2-butynyl vinyl oxalate, allyl 2-butynyl oxalate, di-2-butynyl oxalate, 3-butynyl methyl oxalate, 3-butynyl ethyl oxalate, 3-butynyl propyl oxalate, 3-butynyl vinyl oxalate, allyl 3-butynyl oxalate, and di-3-butynyl oxalate;
phosphine oxides such as methyl(2-propynyl) (vinyl)phosphine oxide, divinyl(2-propynyl)phosphine oxide, di(2-propynyl) (vinyl)phosphine oxide, di(2-propenyl)2(-propynyl)phosphine oxide, di (2-propynyl) (2-propenyl)phosphine oxide, di(3-butenyl) (2-propynyl)phosphine oxide, and di(2-propynyl) (3-butenyl)phosphine oxide;
phosphinates such as 2-propynyl methyl(2-propenyl)phosphinate, 2-propynyl 2-butenyl(methyl)phosphinate, 2-propynyl di(2-propenyl)phosphinate, 2-propynyl di(3-butenyl)phosphinate, 1,1-dimethyl-2-propynyl methyl(2-propenyl)phosphinate, 1,1-dimethyl-2-propynyl 2-butenyl(methyl)phosphinate, 1,1-dimethyl-2-propynyl di(2-propenyl)phosphinate, 1,1-dimethyl-2-propynyl di(3-butenyl)phosphinate, 2-propenyl methyl(2-propynyl)phosphinate, 3-butenyl methyl (2-propynyl)phosphinate, 2-propenyl di(2-propynyl)phosphinate, 3-butenyl di(2-propynyl)phosphinate, 2-propenyl 2-propynyl(2-propenyl)phosphinate, and 3-butenyl 2-propynyl(2-propenyl)phosphinate;
phosphonates such as methyl 2-propynyl 2-propenylphosphonate, methyl(2-propynyl) 2-butenylphosphonate, (2-propynyl) (2-propenyl) 2-propenylphosphonate, (3-butenyl) (2-propynyl) 3-butenylphosphonate, (1,1-dimethyl-2-propynyl) (methyl) 2-propenylphosphonate, (1,1-dimethyl-2-propynyl) (methyl) 2-butenylphosphonate, (1,1-dimethyl-2-propynyl) (2-propenyl) 2-propenylphosphonate, (3-butenyl) (1,1-dimethyl-2-propynyl) 3-butenylphosphonate, (2-propynyl) (2-propenyl) methylphosphonate, (3-butenyl) (2-propynyl) methylphosphonate, (1,1-dimethyl-2-propynyl) (2-propenyl) methylphosphonate, (3-butenyl) (1,1-dimethyl-2-propynyl) methylphosphonate, (2-propynyl) (2-propenyl) ethylphosphonate, (3-butenyl) (2-propynyl) ethylphosphonate, (1,1-dimethyl-2-propynyl) (2-propenyl) ethylphosphonate, and (3-butenyl) (1,1-dimethyl-2-propynyl) ethylphosphonate; and
phosphates such as (methyl) (2-propenyl) (2-propynyl) phosphate, (ethyl) (2-propenyl) (2-propynyl) phosphate, (2-butenyl) (methyl) (2-propynyl) phosphate, (2-butenyl) (ethyl) (2-propynyl) phosphate, (1,1-dimethyl-2-propynyl) (methyl) (2-propenyl) phosphate, (1,1-dimethyl-2-propynyl) (ethyl) (2-propenyl) phosphate, (2-butenyl) (1,1-dimethyl-2-propynyl) (methyl) phosphate, and (2-butenyl) (ethyl) (1,1-dimethyl-2-propynyl) phosphate.

Preferred among these are compounds having an alkynyloxy group because of more stably forming a negative electrode film in the electrolytic solution.

Furthermore, particularly preferred are compounds such as 2-propynylmethyl carbonate, di-2-propynyl carbonate, 2-butyne-1,4-diol dimethyl dicarbonate, 2-propynyl acetate, 2-butyne-1,4-diol diacetate, methyl 2-propynyl oxalate, and di-2-propynyl oxalate, in view of improvement in the storage characteristics.

One of the compounds having a triple bond may be used singly, or two or more thereof may be used in any combination at any ratio. The amount of the compound having a triple bond to be blended with respect to the total of the electrolytic solution of the present disclosure is not limited and is optional as long as the effects of the present disclosure are not significantly impaired. The compound is contained at a concentration of usually 0.01% by mass or more, preferably 0.05% by mass or more, more preferably 0.1% by mass or more, while usually 5% by mass or less, preferably 3% by mass or less, more preferably 1% by mass or less, with respect to the electrolytic solution of the present disclosure. When satisfying the above range, the compound further improves the effects such as output characteristics, load characteristics, cycle characteristics, and high-temperature storage characteristics.

In the electrolytic solution of the present disclosure, an overcharge inhibitor may be used, in order to effectively suppress burst or ignition of a battery in case of falling in a state of overcharge or the like of an electrochemical device including the electrolytic solution.

Examples of the overcharge inhibitor include aromatic compounds, including biphenyl, unsubstituted or alkyl-substituted terphenyl derivatives such as o-terphenyl, m-terphenyl, and p-terphenyl, partially hydrogenated products of unsubstituted or alkyl-substituted terphenyl derivatives, cyclohexylbenzene, **t-**butylbenzene, t-amylbenzene, diphenyl ether, dibenzofuran, diphenyl cyclohexane, 1,1,3-trimethyl-3-phenylindan, cyclopentylbenzene, cyclohexylbenzene, cumene, 1,3-diisopropylbenzene, 1,4-diisopropylbenzene, t-butylbenzene, t-amylbenzene, t-hexylbenzene, and anisole; partially fluorinated products of the aromatic compounds such as 2-fluorobiphenyl, 4-fluorobiphenyl, o-cyclohexylfluorobenzene, p-cyclohexylfluorobenzene, o-cyclohexylfluorobenzene, p-cyclohexylfluorobenzenefluorobenzene, fluorotoluene, and benzotrifluoride; fluorine-containing anisole compounds such as 2,4-difluoroanisole, 2,5-difluoroanisole, 1,6-difluoroanisole, 2,6-difluoroanisole, and 3,5-difluoroanisole; aromatic acetates such as 3-propylphenyl acetate, 2-ethylphenyl acetate, benzylphenyl acetate, methylphenyl acetate, benzyl acetate, and phenethylphenyl acetate; aromatic carbonates such as diphenyl carbonate and methylphenyl carbonate; toluene derivatives such as toluene and xylene, and unsubstituted or alkyl-substituted biphenyl derivatives such as 2-methylbiphenyl, 3-methylbiphenyl, 4-methylbiphenyl, and o-cyclohexylbiphenyl. Preferred among these are aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran, diphenyl cyclohexane, 1,1,3-trimethyl-3-phenylindan, 3-propylphenyl acetate, 2-ethylphenyl acetate, benzylphenyl acetate, methylphenyl acetate, benzyl acetate, diphenyl carbonate, and methylphenyl carbonate. One of these may be used singly, or two or more of these may be used in combination. When two or more of these are used in combination, particularly preferred is a combination of cyclohexylbenzene and t-butylbenzene or t-amylbenzene, or a combination of at least one oxygen-free aromatic compound selected from biphenyl, alkylbiphenyl, terphenyl, partially hydrogenated terphenyl, cyclohexylbenzene, t-butylbenzene, t-amylbenzene, and the like and at least one oxygen-containing aromatic compound selected from diphenyl ether, dibenzofuran, and the like, in view of a balance between the overcharge inhibiting characteristics and the high-temperature storage characteristics with a combination use of two or more thereof.

The electrolytic solution used in the present disclosure may contain a carboxylic anhydride (provided that the compound (6) is excluded). Preferred is a compound represented by the following general formula (10). A method for producing the carboxylic anhydride is not limited, and the carboxylic anhydride can be produced by a known method optionally selected.

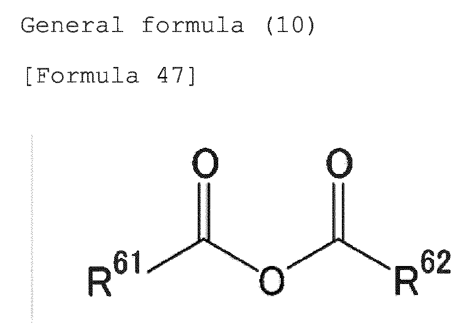

wherein R⁶¹ and R⁶² each independently represent a hydrocarbon group having 1 or more and 15 or less carbon atoms and optionally having a substituent.

The type of R⁶¹ and R⁶² is not limited as long as R⁶¹ and R⁶² each are a monovalent hydrocarbon group. For example, R⁶¹ and R⁶² may be an aliphatic hydrocarbon group or an aromatic hydrocarbon group, or may be a group having an aliphatic hydrocarbon group and an aromatic hydrocarbon group bonded. The aliphatic hydrocarbon group may be a saturated hydrocarbon group or may contain an unsaturated bond (carbon-carbon double bond or carbon-carbon triple bond). The aliphatic hydrocarbon group may be chain or cyclic. In the case of a chain group, it may be linear or branched chain. Further, the group may be a group having a chain group and a cyclic group bonded. R⁶¹ and R⁶² may be the same as or different from each other.

When the hydrocarbon group for R⁶¹ and R⁶² has a substituent, the type of the substituent is not limited unless not departing from the spirit of the present disclosure. Examples thereof include halogen atoms such as a fluorine atom, a chlorine atom, a bromine atom, and an iodine atom, and preferred is a fluorine atom. Alternatively, examples of the substituent other than the halogen atoms also include substituents having a functional group such as an ester group, a cyano group, a carbonyl group, or an ether group. Preferred are a cyano group and a carbonyl group. The hydrocarbon group for R⁶¹ and R⁶² may have only one of these substituents or may have two or more thereof. When R⁶¹ and R⁶² have two or more of the substituent, these substituents may be the same as or different from each other.

The hydrocarbon group for R⁶¹ and R⁶² each has usually one or more and usually 15 or less carbon atoms, preferably 12 or less carbon atoms, more preferably 10 or less carbon atoms, further preferably 9 or less carbon atoms. When R¹ and R² bind to each other to form a divalent hydrocarbon group, the divalent hydrocarbon group has usually 1 or more and usually 15 or less carbon atoms, preferably 13 or less carbon atoms, more preferably 10 or less carbon atoms, further preferably 8 or less carbon atoms. When the hydrocarbon group for R⁶¹ and R⁶² has a substituent containing a carbon atom, the total number of carbon atoms of the R⁶¹ or R⁶² including the substituent preferably satisfies the above range.

Next, specific examples of the acid anhydride represented by the general formula (10) will be described. In the following examples, the term "analog" refers to an acid anhydride obtainable by replacing part of the structure of an acid anhydride mentioned as an example by another structure without departing from the spirit of the present disclosure. Examples thereof include dimers, trimers, and tetramers each composed of a plurality of acid anhydrides, structural isomers such as those having a substituent that has the same number of carbon atoms but also has a branch, and those having a different site at which a substituent binds to the acid anhydride.

First, specific examples of an acid anhydride in which R⁶¹ and R⁶² are the same as each other will be described below.

Specific examples of an acid anhydride in which R⁶¹ and R⁶² are chain alkyl groups include acetic anhydride, propionic anhydride, butanoic anhydride, 2-methylpropionic anhydride, 2,2-dimethylpropionic anhydride, 2-methylbutanoic anhydride, 3-methylbutanoic anhydride, 2,2-dimethylbutanoic anhydride, 2,3-dimethylbutanoic anhydride, 3,3-dimethylbutanoic anhydride, 2,2,3-trimethylbutanoic anhydride, 2,3,3-trimethylbutanoic anhydride, 2,2,3,3-tetramethylbutanoic anhydride, 2-ethylbutanoic anhydride, and analogs thereof.

Specific examples of an acid anhydride in which R⁶¹ and R⁶² are cyclic alkyl groups include cyclopropanecarboxylic anhydride, cyclopentanecarboxylic anhydride, cyclohexanecarboxylic anhydride, and analogs thereof.

Specific examples of an acid anhydride in which R⁶¹ and R⁶² are alkenyl groups include acrylic anhydride, 2-methylacrylic anhydride, 3-methylacrylic anhydride, 2,3-dimethylacrylic anhydride, 3,3-dimethylacrylic anhydride, 2,3,3-trimethylacrylic anhydride, 2-phenylacrylic anhydride, 3-phenylacrylic anhydride, 2,3-diphenylacrylic anhydride, 3,3-diphenylacrylic anhydride, 3-butenoic anhydride, 2-methyl-3-butenoic anhydride, 2,2-dimethyl-3-butenoic anhydride, 3-methyl-3-butenoic anhydride, 2-methyl-3-methyl-3-butenoic anhydride, 2,2-dimethyl-3-methyl-3-butenoic anhydride, 3-pentenoic anhydride, 4-pentenoic anhydride, 2-cyclopentenecarboxylic anhydride, 3-cyclopentenecarboxylic anhydride, 4-cyclopentenecarboxylic anhydride, and analogs thereof.

Specific examples of an acid anhydride in which R⁶¹ and R⁶² are alkynyl groups include propynoic anhydride, 3-phenylpropynoic anhydride, 2-butynoic anhydride, 2-penthynoic anhydride, 3-butynoic anhydride, 3-penthynoic anhydride, 4-penthynoic anhydride, and analogs thereof.

Specific examples of an acid anhydride in which R⁶¹ and R⁶² are aryl groups include benzoic anhydride, 4-methylbenzoic anhydride, 4-ethylbenzoic anhydride, 4-tert-butylbenzoic anhydride, 2-methylbenzoic anhydride, 2,4,6-trimethylbenzoic anhydride, 1-naphthalenecarboxylic anhydride, 2-naphthalenecarboxylic anhydride, and analogs thereof.

Examples of an acid anhydride substituted with a fluorine atom are mainly listed below as examples of the acid anhydride in which R⁶¹ and R⁶² are substituted with a halogen atom. Acid anhydrides obtainable by replacing any or all of the fluorine atoms thereof with a chlorine atom, a bromine atom, or an iodine atom are also included in the exemplary compounds.

Examples of an acid anhydride in which R⁶¹ and R⁶² are halogen-substituted chain alkyl groups include fluoroacetic anhydride, difluoroacetic anhydride, trifluoroacetic anhydride, 2-fluoropropionic anhydride, 2,2-difluoropropionic anhydride, 2,3-difluoropropionic anhydride, 2,2,3-trifluoropropionic anhydride, 2,3,3-trifluoropropionic anhydride, 2,2,3,3-tetrapropionic anhydride, 2,3,3,3-tetrapropionic anhydride, 3-fluoropropionic anhydride, 3,3-difluoropropionic anhydride, 3,3,3-trifluoropropionic anhydride, perfluoropropionic anhydride, and analogs thereof.

Examples of an acid anhydride in which R⁶¹ and R⁶² are halogen-substituted cyclic alkyl groups include 2-fluorocyclopentanecarboxylic anhydride, 3-fluorocyclopentanecarboxylic anhydride, 4-fluorocyclopentanecarboxylic anhydride, and analogs thereof.

Examples of an acid anhydride in which R⁶¹ and R⁶² are halogen-substituted alkenyl groups include 2-fluoroacrylic anhydride, 3-fluoroacrylic anhydride, 2,3-difluoroacrylic anhydride, 3,3-difluoroacrylic anhydride, 2,3,3-trifluoroacrylic anhydride, 2-(trifluoromethyl)acrylic anhydride, 3-(trifluoromethyl)acrylic anhydride, 2,3-bis(trifluoromethyl)acrylic anhydride, 2,3,3-tris(trifluoromethyl)acrylic anhydride, 2-(4-fluorophenyl)acrylic anhydride, 3-(4-fluorophenyl)acrylic anhydride, 2,3-bis(4-fluorophenyl)acrylic anhydride, 3,3-bis(4-fluorophenyl)acrylic anhydride, 2-fluoro-3-butenoic anhydride, 2,2-difluoro-3-butenoic anhydride, 3-fluoro-2-butenoic anhydride, 4-fluoro-3-butenoic anhydride, 3,4-difluoro-3-butenoic anhydride, 3,3,4-trifluoro-3-butenoic anhydride, and analogs thereof.

Examples of an acid anhydride in which R⁶¹ and R⁶² are halogen-substituted alkynyl groups include 3-fluoro-2-propynoic anhydride, 3-(4-fluorophenyl)-2-propynoic anhydride, 3-(2,3,4,5,6-pentafluorophenyl)-2-propynoic anhydride, 4-fluoro-2-butynoic anhydride, 4,4-difluoro-2-butynoic anhydride, 4,4,4-trifluoro-2-butynoic anhydride, and analogs thereof.

Examples of an acid anhydride in which R⁶¹ and R⁶² are halogen-substituted aryl groups include 4-fluorobenzoic anhydride, 2,3,4,5,6-pentafluorobenzoic anhydride, 4-trifluoromethylbenzoic anhydride, and analogs thereof.

Examples of an acid anhydride in which R⁶¹ and R⁶² each has a substituent having a functional group such as an ester, a nitrile, a ketone, or an ether include methoxyformic anhydride, ethoxyformic anhydride, methyloxalic anhydride, ethyloxalic anhydride, 2-cyanoacetic anhydride, 2-oxopropionic anhydride, 3-oxobutanoic anhydride, 4-acetylbenzoic anhydride, methoxyacetic anhydride, 4-methoxybenzoic anhydride, and analogs thereof.

Subsequently, specific examples of an acid anhydride in which R⁶¹ and R⁶² are different from each other will be described below.

R⁶¹ and R⁶² may be in any combination of examples mentioned above and analogs thereof. The following gives representative examples.

Examples of a combination of chain alkyl groups include acetic propionic anhydride, acetic butanoic anhydride, butanoic propionic anhydride, and acetic 2-methylpropionic anhydride.

Examples of a combination of a chain alkyl group and a cyclic alkyl group include acetic cyclopentanoic anhydride, acetic cyclohexanoic anhydride, and cyclopentanoic propionic anhydride.

Examples of a combination of a chain alkyl group and an alkenyl group include acetic acrylic anhydride, acetic 3-methylacrylic anhydride, acetic 3-butenoic anhydride, and acrylic propionic anhydride.

Examples of a combination of a chain alkyl group and an alkynyl group include acetic propynoic anhydride, acetic 2-butynoic anhydride, acetic 3-butynoic anhydride, acetic 3-phenyl propynoic anhydride, and propionic propynoic anhydride.

Examples of a combination of a chain alkyl group and an aryl group include acetic benzoic anhydride, acetic 4-methylbenzoic anhydride, acetic 1-naphthalenecarboxylic anhydride, and benzoic propionic anhydride.

Examples of a combination of a chain alkyl group and a hydrocarbon group having a functional group include acetic fluoroacetic anhydride, acetic trifluoroacetic anhydride, acetic 4-fluorobenzoic anhydride, fluoroacetic propionic anhydride, acetic alkyloxalic anhydride, acetic 2-cyanoacetic anhydride, acetic 2-oxopropionic anhydride, acetic methoxyacetic anhydride, and methoxyacetic propionic anhydride.

Examples of a combination of cyclic alkyl groups include cyclopentanoic cyclohexanoic anhydride.

Examples of a combination of a cyclic alkyl group and an alkenyl group include acrylic cyclopentanoic anhydride, 3-methylacrylic cyclopentanoic anhydride, 3-butenoic cyclopentanoic anhydride, and acrylic cyclohexanoic anhydride.

Examples of a combination of a cyclic alkyl group and an alkynyl group include propynoic cyclopentanoic anhydride, 2-butynoic cyclopentanoic anhydride, and propynoic cyclohexanoic anhydride.

Examples of a combination of a cyclic alkyl group and an aryl group include benzoic cyclopentanoic anhydride, 4-methylbenzoic cyclopentanoic anhydride, and benzoic cyclohexanoic anhydride.

Examples of a combination of a cyclic alkyl group and a hydrocarbon group having a functional group include fluoroacetic cyclopentanoic anhydride, cyclopentanoic trifluoroacetic anhydride, cyclopentanoic 2-cyanoacetic anhydride, cyclopentanoic methoxyacetic anhydride, and cyclohexanoic fluoroacetic anhydride.

Examples of a combination of alkenyl groups include acrylic 2-methylacrylic anhydride, acrylic 3-methylacrylic anhydride, acrylic 3-butenoic anhydride, and 2-methylacrylic 3-methylacrylic anhydride.

Examples of a combination of an alkenyl group and an alkynyl group include acrylic propynoic anhydride, acrylic 2-butynoic anhydride, and 2-methylacrylic propynoic anhydride.

Examples of a combination of an alkenyl group and an aryl group include acrylic benzoic anhydride, acrylic 4-methylbenzoic anhydride, and 2-methylacrylic benzoic anhydride.

Examples of a combination of an alkenyl group and a hydrocarbon group having a functional group include acrylic fluoroacetic anhydride, acrylic trifluoroacetic anhydride, acrylic 2-cyanoacetic anhydride, acrylic methoxyacetic anhydride, and 2-methylacrylic fluoroacetic anhydride.

Examples of a combination of alkynyl groups include propynoic 2-butynoic anhydride, propynoic 3-butynoic anhydride, and 2-butynoic 3-butynoic anhydride.

Examples of a combination of an alkynyl group and an aryl group include benzoic propynoic anhydride, 4-methylbenzoic propynoic anhydride, and benzoic 2-butynoic anhydride.

Examples of a combination of an alkynyl group and a hydrocarbon group having a functional group include propynoic fluoroacetic anhydride, propynoic trifluoroacetic anhydride, propynoic 2-cyanoacetic anhydride, propynoic methoxyacetic anhydride, and 2-butynoic fluoroacetic anhydride.

Examples of a combination of aryl groups include benzoic 4-methylbenzoic anhydride, benzoic 1-naphthalenecarboxylic anhydride, and 4-methylbenzoic 1-naphthalenecarboxylic anhydride.

Examples of a combination of an aryl group and a hydrocarbon group having a functional group include benzoic fluoroacetic anhydride, benzoic trifluoroacetic anhydride, benzoic 2-cyanoacetic anhydride, benzoic methoxyacetic anhydride, and 4-methylbenzoic fluoroacetic anhydride.

Examples of a combination of hydrocarbon groups each having a functional group include fluoroacetic trifluoroacetic anhydride, fluoroacetic 2-cyanoacetic anhydride, fluoroacetic methoxyacetic anhydride, and trifluoroacetic 2-cyanoacetic anhydride.

Preferred among the above acid anhydrides forming the chain structures are acetic anhydride, propionic anhydride, 2-methylpropionic anhydride, cyclopentanecarboxylic anhydride, cyclohexanecarboxylic anhydride, acrylic anhydride, 2-methylacrylic anhydride, 3-methylacrylic anhydride, 2,3-dimethylacrylic anhydride, 3,3-dimethylacrylic anhydride, 3-butenoic anhydride, 2-methyl-3-butenoic anhydride, propynoic anhydride, 2-butynoic anhydride, benzoic anhydride, 2-methylbenzoic anhydride, 4-methylbenzoic anhydride, 4-tert-butylbenzoic anhydride, trifluoroacetic anhydride, 3,3,3-trifluoropropionic anhydride, 2-(trifluoromethyl)acrylic anhydride, 2-(4-fluorophenyl)acrylic anhydride, 4-fluorobenzoic anhydride, 2,3,4,5,6-pentafluorobenzoic anhydride, methoxyformic anhydride, and ethoxyformic anhydride. More preferred are acrylic anhydride, 2-methylacrylic anhydride, 3-methylacrylic anhydride, benzoic anhydride, 2-methylbenzoic anhydride, 4-methylbenzoic anhydride, 4-tert-butylbenzoic anhydride, 4-fluorobenzoic anhydride, 2,3,4,5,6-pentafluorobenzoic anhydride, methoxyformic anhydride, and ethoxyformic anhydride.

These compounds are preferred because these compounds can appropriately form a bond with lithium oxalate to form a film having excellent durability, thereby improving especially the charge and discharge rate characteristics after a durability test, input and output characteristics, and impedance characteristics.

The molecular weight of the carboxylic anhydride is not limited and is optional as long as the effects of the present disclosure are not significantly impaired. The molecular weight is usually 90 or more, preferably 95 or more, while usually 300 or less, preferably 200 or less. The carboxylic anhydride, when having a molecular weight within the above range, can suppress increase in a viscosity of an electrolytic solution and can appropriately improve the durability due to optimization of the film density.

A method for producing the carboxylic anhydride is also not limited, and the carboxylic anhydride can be produced by a known method optionally selected. Any one of the carboxylic anhydrides described above may be contained singly in the non-aqueous electrolytic solution of the present disclosure, or two or more thereof may be contained in any combination at any ratio.

The content of the carboxylic anhydride with respect to the electrolytic solution of the present disclosure is not limited, and is optional as long as the effects of the present disclosure are not significantly impaired. The carboxylic anhydride is desirably contained at a concentration of usually 0.01% by mass or more, preferably 0.1% by mass or more, while usually 5% by mass or less, preferably 3% by mass or less, with respect to the electrolytic solution of the present disclosure. When the content of the carboxylic anhydride is within the above range, the electrolytic solution easily exhibits an effect of improving the cycle characteristics and easily improves the battery characteristics because of having a suitable reactivity.

In the electrolytic solution of the present disclosure, known other aids may be used. Examples of the other aids include hydrocarbon compounds such as pentane, heptane, octane, nonane, decane, cycloheptane, benzene, furan, naphthalene, 2-phenylbicyclohexyl, cyclohexane, 2,4,8,10-tetraoxaspiro[5.5]undecane, and 3,9-divinyl-2,4,8,10-tetraoxaspiro[5.5]undecane;
fluorine-containing aromatic compounds such as fluorobenzene, difluorobenzene, hexafluorobenzene, benzotrifluoride, monofluorobenzene, 1-fluoro-2-cyclohexylbenzene, 1-fluoro-4-tert-butylbenzene, 1-fluoro-3-cyclohexylbenzene, 1-fluoro-2-cyclohexylbenzene, and fluorinated biphenyl;
carbonate compounds such as erythritan carbonate, spiro-bis-dimethylene carbonate, and methoxyethyl-methyl carbonate;
ether-based compounds such as dioxolane, dioxane, 2,5,8,11-tetraoxadodecane, 2,5,8,11,14-pentaoxapentadecane, ethoxymethoxyethane, trimethoxymethane, glyme, and ethylmonoglyme;
ketone-based compounds such as dimethyl ketone, diethyl ketone, and 3-pentanone;
acid anhydrides such as 2-allyl succinic anhydride;
ester compounds such as dimethyl oxalate, diethyl oxalate, ethyl methyl oxalate, di(2-propynyl)oxalate, methyl 2-propynyl oxalate, dimethyl succinate, di(2-propynyl)glutarate, methyl formate, ethyl formate, 2-propynyl formate, 2-butyne-1,4-diyl diformate, 2-propynyl methacrylate, and dimethyl malonate;
amide-based compounds such as acetamide, N-methyl formamide, N,N-dimethyl formamide, and N,N-dimethyl acetamide;
sulfur-containing compounds such as ethylene sulfate, vinylene sulfate, ethylene sulfite, methyl fluorosulfonate, ethyl fluorosulfonate, methyl methanesulfonate, ethyl methanesulfonate, busulfan, sulfolene, diphenyl sulfone, N,N-dimethylmethanesulfonamide, N,N-diethylmethanesulfonamide, methyl vinyl sulfonate, ethyl vinyl sulfonate, allyl vinyl sulfonate, propargyl vinyl sulfonate, methyl allyl sulfonate, ethyl allyl sulfonate, allyl allyl sulfonate, propargyl allyl sulfonate, 1,2-bis(vinylsulfonyloxy)ethane, propanedisulfonic anhydride, sulfobutyric anhydride, sulfobenzoic anhydride, sulfopropionic anhydride, ethanedisulfonic anhydride, methylene methanedisulfonate, 2-propynyl methanesulfonate, pentene sulfite, pentafluorophenyl methanesulfonate, propylene sulfate, propylene sulfite, propane sultone, butylene sulfite, butane-2,3-diyl dimethanesulfonate, 2-butyne-1,4-diyl dimethanesulfonate, 2-propynyl vinyl sulfonate, bis(2-vinylsulfonylethyl)ether, 5-vinyl-hexahydro-1,3,2-benzodioxathiol-2-oxide, 2-propynyl 2-(methanesulfonyloxy)propionate, 5,5-dimethyl-1,2-oxathiolan-4-one 2,2-dioxide, 3-sulfo-propionic anhydride, trimethylene methanedisulfonate, 2-methyl tetrahydrofuran, trimethylene methanedisulfonate, tetramethylene sulfoxide, dimethylene methanedisulfonate, difluoroethyl methyl sulfone, divinyl sulfone, 1,2-bis(vinylsulfonyl)ethane, methyl ethylenebissulfonate, ethyl ethylenebissulfonate, ethylene sulfate, and thiophene 1-oxide;
nitrogen-containing compounds such as 1-methyl-2-pyrrolidinone, 1-methyl-2-piperidone, 3-methyl-2-oxazolidinone, 1,3-dimethyl-2-imidazolidinone, N-methylsuccinimide, nitromethane, nitroethane, and ethylene diamine;
phosphorus-containing compounds such as trimethyl phosphite, triethyl phosphite, triphenyl phosphite, trimethyl phosphate, triethyl phosphate, triphenyl phosphate, dimethyl methyl phosphonate, diethyl ethyl phosphonate, dimethyl vinyl phosphonate, diethyl vinyl phosphonate, ethyl diethyl phosphonoacetate, methyl dimethyl phosphinate, ethyl diethyl phosphinate, trimethylphosphine oxide, triethylphosphine oxide, bis(2,2-difluoroethyl)2,2,2-trifluoroethyl phosphate, bis(2,2,3,3-tetrafluoropropyl)2,2,2-trifluoroethyl phosphate, bis(2,2,2-trifluoroethyl)methyl phosphate, bis(2,2,2-trifluoroethyl)ethyl phosphate, bis(2,2,2-trifluoroethyl)2,2-difluoroethyl phosphate, bis(2,2,2-trifluoroethyl)2,2,3,3-tetrafluoropropyl phosphate, tributyl phosphate, tris(2,2,2-trifluoroethyl)phosphate, tris(1,1,1,3,3,3-hexafluoropropan-2-yl) phosphate, trioctyl phosphate, 2-phenylphenyldimethyl phosphate, 2-phenylphenyldiethyl phosphate, (2,2,2-trifluoroethyl) (2,2,3,3-tetrafluoropropyl)methyl phosphate, methyl 2-(dimethoxyphosphoryl)acetate, methyl 2-(dimethylphosphoryl)acetate, methyl 2-(diethoxyphosphoryl)acetate, methyl 2-(diethylphosphoryl)acetate, methyl methylenebisphosphonate, ethyl methylenebisphosphonte, methyl ethylenebisphosphonate, ethyl ethylenebisphosphonate, methyl butylenebisphosphonate, ethyl butylenebisphosphonate, 2-propynyl 2-(dimethoxyphosphoryl)acetate, 2-propynyl 2-(dimethylphosphoryl)acetate, 2-propynyl 2-(diethoxyphosphoryl)acetate, 2-propynyl 2-(diethylphosphoryl)acetate, tris(trimethylsilyl)phosphate, tris(triethylsilyl)phosphate, tris(t-butyldimethylsilyl)phosphate, tris(trimethoxysilyl)phosphate, tris(trimethylsilyl)phosphite, tris(triethylsilyl)phosphite, tris(t-butyldimethylsilyl)phosphite, tris(trimethoxysilyl)phosphite, and trimethylsilyl polyphosphate;
boron-containing compounds such as tris(trimethylsilyl) borate and tris(trimethoxysilyl) borate; and
silane compounds such as dimethoxyaluminoxytrimethoxysilane, diethoxyaluminoxytriethoxysilane, dipropoxyaluminoxytriethoxysilane, dibutoxyaluminoxytrimethoxysilane, dibutoxyaluminoxytriethoxysilane, titanium tetrakis(trimethylsiloxide), titanium tetrakis(triethylsiloxide), and tetramethylsilane. One of these may be used singly, or two or more of these may be used in combination. Addition of these aids can improve the capacity retention characteristics after high-temperature storage and the cycle characteristics.

Preferred among these as the above other aids are phosphorus-containing compounds, and preferred are tris(trimethylsilyl)phosphate and tris(trimethylsilyl)phosphite.

The amount of the other aids to be blended is not limited, and is optional as long as the effects of the present disclosure are not significantly impaired. The amount of the other aids to be blended is preferably 0.01% by mass or more and 5% by mass or less based on 100% by mass of the electrolytic solution. The other aids, when the amount is within this range, can easily sufficiently exhibit the effects thereof and can easily avoid a situation in which the battery characteristics deteriorate, such as high-load discharge characteristics. The amount of the other aids to be blended is more preferably 0.1% by mass or more, further preferably 0.2% by mass or more, while more preferably 3% by mass or less, further preferably 1% by mass or less.

The electrolytic solution of the present disclosure may further contain, as an additive, an ether compound not corresponding to the fluorinated ether represented by the general formula (1), cyclic and chain carboxylate, a nitrogen-containing compound, a boron-containing compound, an organosilicon-containing compound, a fireproof agent (flame retardant), a surfactant, an additive for increasing the permittivity, an improver for cycle characteristics and rate characteristics, a sulfone-based compound, and the like to the extent that the effects of the present disclosure are not impaired.

The above ether compound is preferably a chain ether having 2 to 10 carbon atoms or a cyclic ether having 3 to 6 carbon atoms.

Examples of the chain ether having 2 to 10 carbon atoms include dimethyl ether, diethyl ether, di-n-butyl ether, dimethoxymethane, methoxyethoxymethane, diethoxymethane, dimethoxyethane, methoxyethoxyethane, diethoxyethane, ethylene glycol di-n-propyl ether, ethylene glycol di-n-butyl ether, diethylene glycol, diethylene glycol dimethyl ether, pentaethylene glycol, triethylene glycol dimethyl ether, triethylene glycol, tetraethylene glycol, tetraethylene glycol dimethyl ether, and diisopropyl ether.

Other fluorinated ether, except for the fluorinated ether represented by the above formula (1), may be contained as the above ether compound.

Examples of such a fluorinated ether include fluorinated ethers (I) represented by the following general formula (I):

Rf⁴-O-Rf⁵ (I)

wherein Rf⁴ and Rf⁵ are the same as or different from each other, and are each an alkyl group having 1 to 10 carbon atoms or a fluorinated alkyl group having 1 to 10 carbon atoms, provided that at least one of Rf³ and Rf⁴ is a fluorinated alkyl group and the fluorinated ether represented by the above formula (1) is excluded.

Incorporation of the fluorinated ether (I) can result in improvement in the flame retardancy of the electrolytic solution, as well as stability and safety at a high temperature and a high voltage.

At least one of Rf⁴ and Rf⁵ in the above general formula (I) is only required to be a fluorinated alkyl group having 1 to 10 carbon atoms, and both Rf³ and Rf⁴ are preferably fluorinated alkyl groups each having 1 to 10 carbon atoms from the viewpoint of allowing the electrolytic solution to be more improved in flame retardancy, and stability and safety at a high temperature and a high voltage. In this case, Rf³ and Rf⁴ may be the same as or different from each other.

In particular, more preferably, Rf⁴ and Rf⁵ are the same as or different from each other, Rf⁴ is a fluorinated alkyl group having 3 to 6 carbon atoms, and Rf⁵ is a fluorinated alkyl group having 2 to 6 carbon atoms.

An excessively small total number of carbon atoms in Rf⁴ and Rf⁵ leads to a too low boiling point of the fluorinated ether, and an excessively large number of carbon atoms in Rf⁴ or Rf⁵ leads to deterioration of the solubility of an electrolyte salt, starts to have an adverse effect on miscibility with other solvents, and also increases the viscosity and thus reduces rate characteristics. Advantageously Rf⁴ has 3 or 4 carbon atoms and Rf⁵ has 2 or 3 carbon atoms, because the boiling point and rate characteristics are excellent.

The above fluorinated ether (I) preferably has a fluorine content of 40 to 75% by mass. The fluorinated ether, when having a fluorine content in this range, is especially excellent in balance between non-flammability and miscibility. This range is preferred also in terms of favorable oxidation resistance and safety.

The lower limit of the above fluorine content is more preferably 45% by mass, further preferably 50% by mass, particularly preferably 55% by mass. The upper limit is more preferably 70% by mass, further preferably 66% by mass.

The fluorine content of the fluorinated ether (I) is a value calculated based on the structural formula of the fluorinated ether (I) by: {(Number of fluorine atoms × 19)/Molecular weight of fluorinated ether (I)} × 100(%).

Examples of Rf⁴ include CF₃CF₂CH₂-, CF₃CFHCF₂-, HCF₂CF₂CF₂-, HCF₂CF₂CH₂-, CF₃CF₂CH₂CH₂-, CF₃CFHCF₂CH₂-, HCF₂CF₂CF₂CF₂-, HCF₂CF₂CF₂CH₂-, HCF₂CF₂CH₂CH₂-, and HCF₂CF (CF₃) CH₂-. Examples of Rf⁵ include -CH₂CF₂CF₃, - CF₂CFHCF₃, -CF₂CF₂CF₂H, -CH₂CF₂CF₂H, -CH₂CH₂CF₂CF₃, - CH₂CF₂CFHCF₃, -CF₂CF₂CF₂CF₂H, -CH₂CF₂CF₂CF₂H, -CH₂CH₂CF₂CF₂H, -CH₂CF (CF₃) CF₂H, -CF₂CF₂H, -CH₂CF₂H, and -CF₂CH₃.

Specific examples of the above fluorinated ether (I) include HCF₂CF₂CH₂OCF₂CFHCF₃, CF₃CF₂CH₂OCF₂CFHCF₃ C₆F₁₃OCH₃, C₆F₁₃OC₂H₅, C₈F₁₇OCH₃, C₈F₁₇OC₂H₅, CF₃CFHCF₂CH (CH₃) OCF₂CFHCF₃, HCF₂CF₂OCH (C₂H₅)₂, HCF₂CF₂OC₄H₉, HCF₂CF₂OCH₂CH (C₂H₅)₂, and HCF₂CF₂OCH₂CH (CH₃)₂.

In particular, one containing HCF₂- or CF₃CFH- at one end or at each of both ends is excellent in polarization and can provide a high-boiling point fluorinated ether (I) .

The boiling point of the fluorinated ether (I) is preferably 67 to 120°C, more preferably 80°C or more, further preferably 90°C or more.

Examples of such a fluorinated ether (I) include one, or two or more, such as CF₃CH₂OCF₂CFHCF₃, CF₃CF₂CH₂OCF₂CFHCF₃, HCF₂CF₂CH₂OCF₂CFHCF₃, HCF₂CF₂CH₂OCH₂CF₂CF₂H, and CF₃CFHCF₂CH₂OCF₂CFHCF₃.

In particular, at least one selected from the group consisting of HCF₂CF₂CH₂OCF₂CFHCF₃ (boiling point 106°C) and CF₃CF₂CH₂OCF₂CFHCF₃ (boiling point 82°C) is preferred and HCF₂CF₂CH₂OCF₂CFHCF₃ (boiling point 106°C) is more preferred because of having the advantages of having a high boiling point and being favorable in miscibility with other solvents and in the solubility of an electrolyte salt.

Examples of the cyclic ether having 3 to 6 carbon atoms include 1,2-dioxane, 1,3-dioxane, 2-methyl-1,3-dioxane, 4-methyl-1,3-dioxane, 1,4-dioxane, meta-formaldehyde, 2-methyl-1,3-dioxolane, 1,3-dioxolane, 4-methyl-1,3-dioxolane, 2-(trifluoroethyl)dioxolane 2,2,-bis(trifluoromethyl)-1,3-dioxolane, and fluorinated compounds thereof.

Among these, the ether compound is preferably dimethoxymethane, diethoxymethane, ethoxymethoxymethane, ethylene glycol-n-propyl ether, ethylene glycol di-n-butyl ether, diethylene glycol dimethyl ether, or crown ether because the ability of solvation to lithium ions is high and the degree of ion dissociation is improved, particularly preferably dimethoxymethane, diethoxymethane, or ethoxymethoxymethane because the viscosity is low and a high ion conductivity is imparted.

Examples of the cyclic carboxylate include those having 3 to 12 carbon atoms in total in the structural formula. Specific examples thereof include gamma-butyrolactone, gamma-valerolactone, gamma-caprolactone, epsilon-caprolactone, and 3-methyl-y-butyrolactone. Particularly preferred among these is gamma-butyrolactone in view of improvement in the characteristics of an electrochemical device derived from improvement in the degree of dissociation of lithium ions.

The amount of the cyclic carboxylate to be blended as an additive is usually preferably 0.1% by mass or more, more preferably 1% by mass or more, based on 100% by mass of the solvent. When the amount is within this range, the cyclic carboxylate can improve the electric conductivity of the electrolytic solution and thus easily improve the large-current discharge characteristics of an electrochemical device. The amount of the cyclic carboxylate to be blended is preferably 10% by mass or less, more preferably 5% by mass or less. Setting such an upper limit may in this way allow the electrolytic solution to have a viscosity within an appropriate range, may enable reduction in the electric conductivity to be avoided, may suppress increase in the resistance of the negative electrode, and may allow an electrochemical device to have large-current discharge characteristics within a favorable range.

The cyclic carboxylate to be suitably used may also be a fluorinated cyclic carboxylate (fluorine-containing lactone). Examples of the fluorine-containing lactone include fluorine-containing lactones represented by the following formula (C): 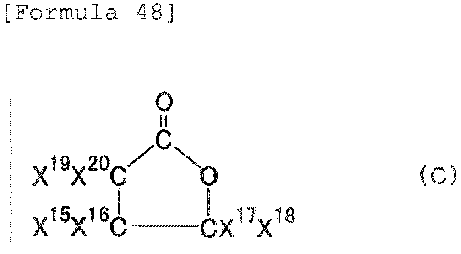 wherein X¹⁵ to X²⁰ are the same as or different from each other, and are each -H, -F, -Cl, -CH₃, or a fluorinated alkyl group; provided that at least one of X¹⁵ to X²⁰ is a fluorinated alkyl group.

Examples of the fluorinated alkyl group for X¹⁵ to X²⁰ include -CFH₂, -CF₂H, -CF₃, -CH₂CF₃, -CF₂CF₃, -CH₂CF₂CF₃, and -CF(CF₃)₂. Preferred are -CH₂CF₃ and -CH₂CF₂CF₃ in view of high oxidation resistance and having an effect of improving the safety.

As long as at least one of X¹⁵ to X²⁰ is a fluorinated alkyl group, only one site of X¹⁵ to X²⁰ or a plurality of sites thereof may be replaced by -H, -F, -Cl, -CH₃, or a fluorinated alkyl group. In view of favorable solubility of an electrolyte salt, one to three sites of X¹⁵ to X²⁰ are preferably substituted, one or two sites thereof are more preferably substituted.

The substituted site of the fluorinated alkyl group is not limited. In view of a favorable synthesizing yield, it is preferred that X¹⁷ and/or X¹⁸, in particular, X¹⁷ or X¹⁸ be a fluorinated alkyl group, especially -CH₂CF₃ or -CH₂CF₂CF₃. X¹⁵ to X²⁰ other than the fluorinated alkyl group is -H, -F, -Cl, or CH₃. In view of favorable solubility of an electrolyte salt, **-H** is preferred.

In addition to those represented by the formula, examples of the fluorine-containing lactone include fluorine-containing lactones represented by the following formula (D): 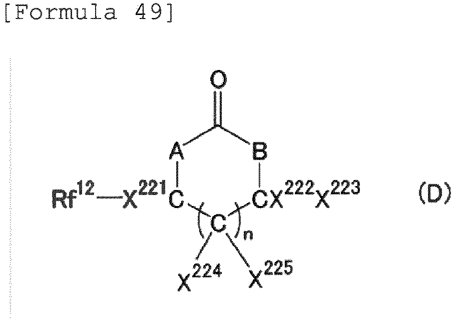 wherein either one of A or B is CX²²⁶X²²⁷, where X²²⁶ and X²²⁷ are the same as or different from each other, and are each -H, -F, -Cl, -CF₃, -CH₃, or an alkylene group in which a hydrogen atom is optionally replaced by a halogen atom and which optionally contains a hetero atom in the chain, and the other is an oxygen atom; Rf¹² is a fluorinated alkyl group or fluorinated alkoxy group optionally having an ether bond; X²²¹ and X²²² are the same as or different from each other, and are each -H, -F, -Cl, -CF₃, or CH₃; X²²³ to X²²⁵ are the same as or different from each other, and are each -H, -F, -Cl, or an alkyl group in which a hydrogen atom is optionally replaced by a halogen atom and which optionally contains a hetero atom in the chain; and n=0 or 1.

A preferred example of the fluorine-containing lactone represented by the formula (D) includes a 5-membered ring structure represented by the following formula (E): 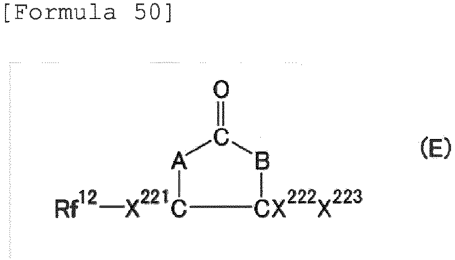
wherein A, B, Rf¹², X²²¹, X²²², and X²²³ are defined as in the formula (D), in view of easily synthesized and having favorable chemical stability. Further, in accordance with the combination of A and B, fluorine-containing lactones represented by the following formula (F) : 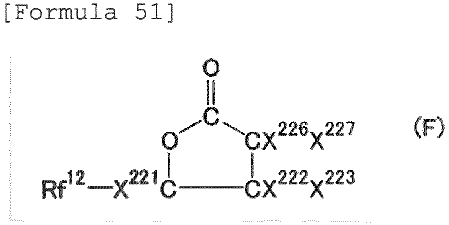
wherein Rf¹², X²²¹, X²²², X²²³, X²²⁶, and X²²⁷ are defined as in the formula (D); and fluorine-containing lactones represented by the following formula (G): 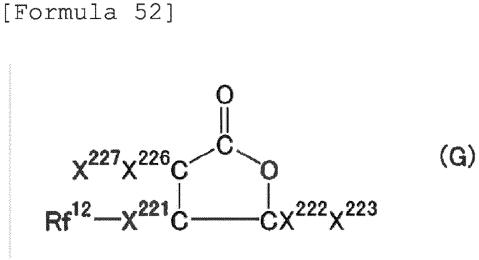
wherein Rf¹², X²²¹, X²²², X²²³, X²²⁶, and X²²⁷ are defined as in the formula (D) may be mentioned.

Among these, those represented by the following formulas: 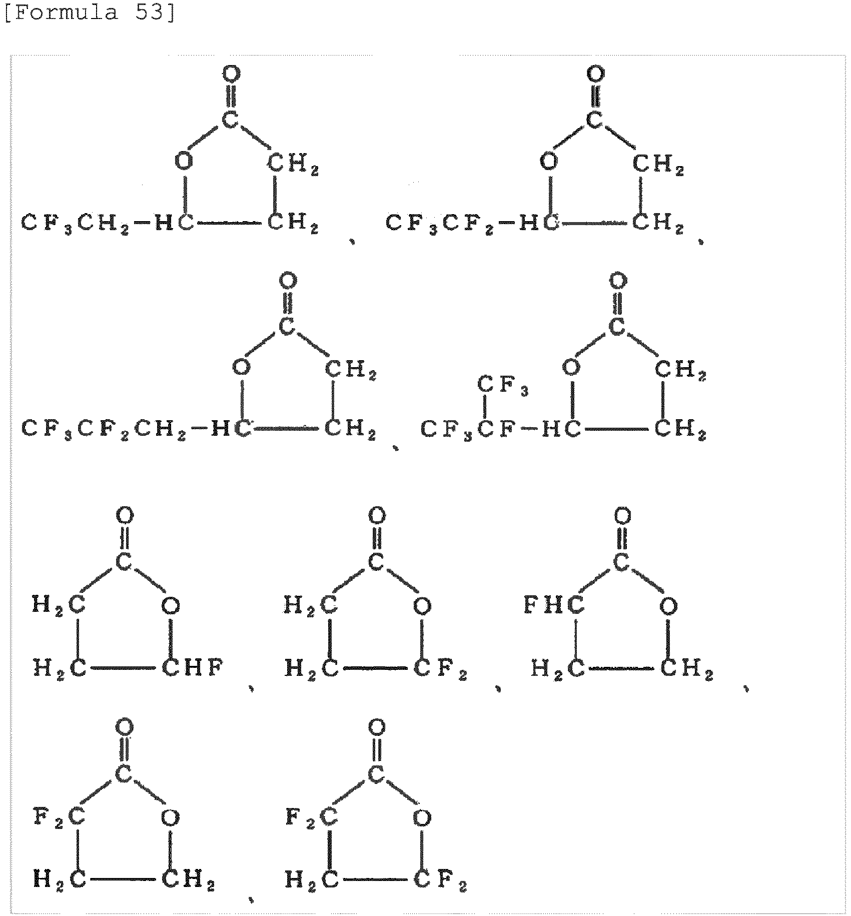 may be mentioned, because excellent characteristics such as high permittivity and high withstand voltage are particularly exerted, and other characteristics of the electrolytic solution in the present disclosure are improved, for example, good solubility of an electrolyte salt and reduction in the internal resistance.

Incorporation of a fluorinated cyclic carboxylate can result in effects of improving the ion conductivity, improving the safety, improving the stability at high temperature, and the like.

Examples of the chain carboxylate include those having 3 to 7 carbon atoms in total in the structural formula thereof. Specific examples thereof include methyl acetate, ethyl acetate, n-propyl acetate, isopropyl acetate, n-butyl acetate, isobutyl acetate, t-butyl acetate, methyl propionate, ethyl propionate, n-propyl propionate, isobutyl propionate, n-butyl propionate, methyl butyrate, isobutyl propionate, t-butyl propionate, methyl butyrate, ethyl butyrate, n-propyl butyrate, isopropyl butyrate, methyl isobutyrate, ethyl isobutyrate, n-propyl isobutyrate, and isopropyl isobutyrate.

Preferred among these are methyl acetate, ethyl acetate, n-propyl acetate, n-butyl acetate, methyl propionate, ethyl propionate, n-propyl propionate, isopropyl propionate, methyl butyrate, ethyl butyrate, and the like, in view of improvement in the ion conductivity owing to viscosity reduction.

Examples of the nitrogen-containing compound to be used include nitrile, fluorine-containing nitrile, carboxylic acid amide, fluorine-containing carboxylic acid amide, sulfonic acid amide and fluorine-containing sulfonic acid amide, acetamide, and formamide. 1-methyl-2-pyrrolidinone, 1-methyl-2-piperidone, 3-methyl-2-oxazilidinone, 1,3-dimethyl-2-imidazolidinone, and N-methylsuccinimide, and the like also may be used. However, the nitrile compounds represented by the general formulas (1a), (1b), and (1c) are not included in the above nitrogen-containing compounds.

Examples of the boron-containing compound include borates such as trimethyl borate and triethyl borate, boric acid ethers, and alkyl borates.

Examples of the organosilicon-containing compound include (CH₃)₄-Si, (CH₃)₃-Si-Si(CH₃)₃, and silicon oil.

Examples of the fireproof agent (flame retardant) include phosphates and phosphazene-based compounds. Examples of the phosphates include fluorine-containing alkyl phosphates, non-fluorine-containing alkyl phosphates, and aryl phosphates. Fluorine-containing alkyl phosphates are preferred among these because such phosphates can achieve a non-flammable effect in a small amount.

Examples of the phosphazene-based compounds include methoxypentafluorocyclotriphosphazene, phenoxypentafluorocyclotriphosphazene, dimethylaminopentafluorocyclotriphosphazene, diethylaminopentafluorocyclotriphosphazene, ethoxypentafluorocyclotriphosphazene, and ethoxyheptafluorocyclotetraphosphazene.

Specific examples of the fluorine-containing alkyl phosphates include fluorine-containing dialkyl phosphates disclosed in Japanese Patent Laid-Open No. 11-233141, cyclic alkyl phosphates disclosed in Japanese Patent Laid-Open No. 11-283669, and fluorine-containing trialkyl phosphates.

Preferred examples of the fireproof agent (flame retardant) include (CH₃O)₃P=O, (CF₃CH₂O)₃P=O, (HCF₂CH₂O)₃P=O, (CF₃CF₂CH₂)₃P=O, and (HCF₂CF₂CH₂)₃P=O.

The surfactant may be any of cationic surfactants, anionic surfactants, nonionic surfactants, and amphoteric surfactants. The surfactant preferably contains a fluorine atom because of giving favorable cycle characteristics and rate characteristics.

Preferred examples of such a surfactant containing a fluorine atom include fluorine-containing carboxylic acid salts represented by the following formula (30):

Rf⁶COO⁻M⁺ (30)

wherein Rf⁶ is a fluorine-containing alkyl group having 3 to 10 carbon atoms and optionally containing an ether bond; M⁺ is Li⁺, Na⁺, K⁺ or NHR'₃⁺, where R's are the same as or different from each other, and are each H or an alkyl group having 1 to 3 carbon atoms, and
fluorine-containing sulfonic acid salts represented by the following formula (40):

   Rf⁷SO₃⁻M⁺ (40)
wherein Rf⁷ is a fluorine-containing alkyl group having 3 to 10 carbon atoms and optionally containing an ether bond; M⁺ is Li⁺, Na⁺, K⁺ or NHR'₃⁺, where R's are the same as or different from each other, and are each H or an alkyl group having 1 to 3 carbon atoms.

The content of the surfactant is preferably 0.01 to 2% by mass relative to the electrolytic solution because the surface tension of the electrolytic solution can be reduced without deterioration in the charge and discharge cycle characteristics.

Examples of the additive for increasing the permittivity include sulfolane, methylsulfolane, γ-butyrolactone, and γ-valerolactone.

Examples of the improver for cycle characteristics and rate characteristics include methyl acetate, ethyl acetate, tetrahydrofuran, and 1,4-dioxane.

The electrolytic solution of the present disclosure may be combined with a polymer material and thereby formed into a gel-like (plasticized) gel electrolytic solution.

Examples of such a polymer material include conventionally known polyethylene oxide and polypropylene oxide, and modified products thereof (Japanese Patent Laid-Open Nos. 8-222270 and 2002-100405); polyacrylate-based polymers, polyacrylonitrile, and fluororesins such as polyvinylidene fluoride and vinylidene fluoride-hexafluoropropylene copolymers (Japanese Translation of PCT International Application Publication Nos. 4-506726 and 8-507407, and Japanese Patent Laid-Open No. 10-294131); and composites of any of these fluororesins and any hydrocarbon resin (Japanese Patent Laid-Open Nos. 11-35765 and 11-86630). In particular, polyvinylidene fluoride or a vinylidene fluoride-hexafluoropropylene copolymer is desirably used as a polymer material for a gel electrolyte.

The electrolytic solution of the present disclosure may also contain an ion conductive compound disclosed in Japanese Patent Application No. 2004-301934.

This ion conductive compound is an amorphous fluorine-containing polyether compound having a fluorine-containing group at a side chain and is represented by the formula (101):

A-(D)-B (101)

wherein D is represented by the formula (201):

   - (D1)ₙ-(FAE)ₙ-(AE)ₚ-(Y)_{q}- (201)
where D1 is an ether unit having a fluorine-containing ether group at a side chain and is represented by the formula (10a): 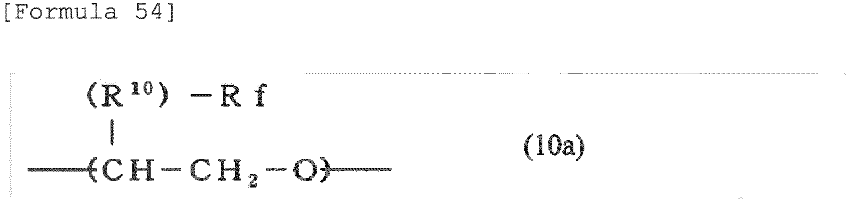
where Rf is a fluorine-containing ether group optionally having a crosslinkable functional group; and R¹⁰ is a group or a bond that bonds Rf and the main chain;
FAE is an ether unit having a fluorinated alkyl group at a side chain and is represented by the formula (10b): 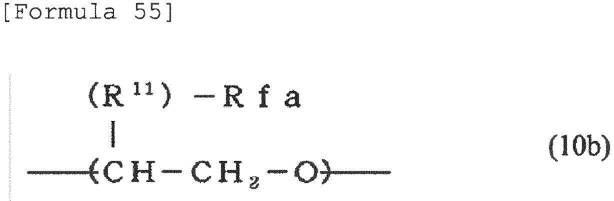
where Rfa is a hydrogen atom or a fluorinated alkyl group optionally having a crosslinkable functional group; and R¹¹ is a group or a bond that bonds Rfa and the main chain;
AE is an ether unit represented by the formula (10c): 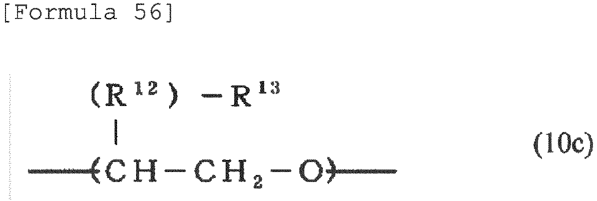
where R¹³ is a hydrogen atom, an alkyl group optionally having a crosslinkable functional group, an aliphatic cyclic hydrocarbon group optionally having a crosslinkable functional group, or an aromatic hydrocarbon group optionally having a crosslinkable functional group; and R¹² is a group or a bond that bonds R¹³ and the main chain;
Y is a unit containing at least one of the formulas (10d-1) to (10d-3): 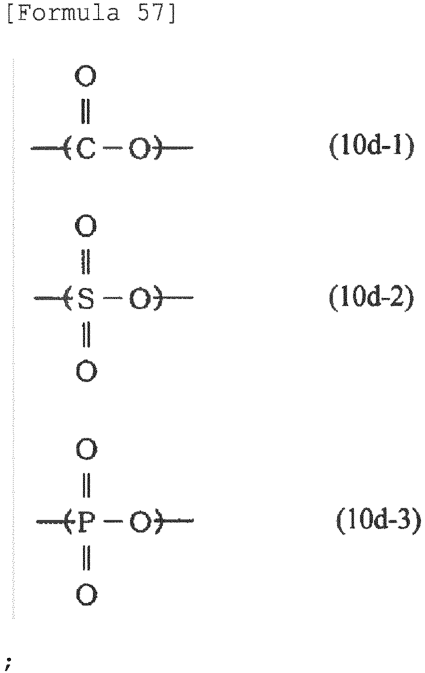
n is an integer of 0 to 200; m is an integer of 0 to 200; p is an integer of 0 to 10,000; q is an integer of 1 to 100; provided that n + m is not 0, and the bonding order of D1, FAE, AE, and Y is not specified;
A and B are the same as or different from each other, and are each a hydrogen atom, an alkyl group optionally containing a fluorine atom and/or a crosslinkable functional group, a phenyl group optionally containing a fluorine atom and/or a crosslinkable functional group, a -COOH group, -OR (where R is a hydrogen atom or an alkyl group optionally containing a fluorine atom and/or a crosslinkable functional group), an ester group, or a carbonate group (provided that, when an end of D is an oxygen atom, A and B are each none of a -COOH group, -OR, an ester group, and a carbonate group).

The electrolytic solution of the present disclosure may contain a sulfone-based compound. Preferred as the sulfone-based compound are a cyclic sulfone having 3 to 6 carbon atoms and a chain sulfone having 2 to 6 carbon atoms. The number of sulfonyl groups in one molecule is preferably 1 or 2.

Examples of the cyclic sulfone include monosulfone compounds such as trimethylene sulfones, tetramethylene sulfones, and hexamethylene sulfones; disulfone compounds such as trimethylene disulfones, tetramethylene disulfones, and hexamethylene disulfones.

More preferred among these are tetramethylene sulfones, tetramethylene disulfones, hexamethylene sulfones, and hexamethylene disulfones, particularly preferred are tetramethylene sulfones (sulfolanes), from the viewpoint of permittivity and viscosity.

The sulfolanes are preferably sulfolane and/or sulfolane derivatives (hereinafter, optionally abbreviated as "sulfolanes" including sulfolane). The sulfolane derivatives are preferably those in which one or more hydrogen atoms binding to any carbon atom constituting the sulfolane ring is replaced by a fluorine atom or an alkyl group.

Preferred among these are 2-methylsulfolane, 3-methylsulfolane, 2-fluorosulfolane, 3-fluorosulfolane, 2,2-difluorosulfolane, 2,3-difluorosulfolane, 2,4-difluorosulfolane, 2,5-difluorosulfolane, 3,4-difluorosulfolane, 2-fluoro-3-methylsulfolane, 2-fluoro-2-methylsulfolane, 3-fluoro-3-methylsulfolane, 3-fluoro-2-methylsulfolane, 4-fluoro-3-methylsulfolane, 4-fluoro-2-methylsulfolane, 5-fluoro-3-methylsulfolane, 5-fluoro-2-methylsulfolane, 2-fluoromethylsulfolane, 3-fluoromethylsulfolane, 2-difluoromethylsulfolane, 3-difluoromethylsulfolane, 2-trifluoromethylsulfolane, 3-trifluoromethylsulfolane, 2-fluoro-3-(trifluoromethyl)sulfolane, 3-fluoro-3-(trifluoromethyl)sulfolane, 4-fluoro-3-(trifluoromethyl)sulfolane, 3-sulfolene, 5-fluoro-3-(trifluoromethyl)sulfolane, and the like, in view of high ion conductivity and high input and output.

Examples of the chain sulfone include dimethyl sulfone, ethyl methyl sulfone, diethyl sulfone, n-propyl methyl sulfone, n-propyl ethyl sulfone, di-n-propyl sulfone, isopropyl methyl sulfone, isopropyl ethyl sulfone, diisopropyl sulfone, n-butyl methyl sulfone, n-butyl ethyl sulfone, t-butyl methyl sulfone, t-butyl ethyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, perfluoroethyl methyl sulfone, ethyl trifluoroethyl sulfone, ethyl pentafluoroethyl sulfone, di(trifluoroethyl) sulfone, perfluorodiethyl sulfone, fluoromethyl-n-propyl sulfone, difluoromethyl-n-propyl sulfone, trifluoromethyl-n-propyl sulfone, fluoromethyl isopropyl sulfone, difluoromethyl isopropyl sulfone, trifluoromethyl isopropyl sulfone, trifluoroethyl-n-propyl sulfone, trifluoroethyl isopropyl sulfone, pentafluoroethyl-n-propyl sulfone, pentafluoroethyl isopropyl sulfone, trifluoroethyl-n-butyl sulfone, trifluoroethyl-t-butyl sulfone, pentafluoroethyl-n-butyl sulfone, and pentafluoroethyl-t-butyl sulfone.

Preferred among these are dimethyl sulfone, ethyl methyl sulfone, diethyl sulfone, n-propylmethyl sulfone, isopropylmethyl sulfone, n-butyl methyl sulfone, t-butyl methyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, ethyl trifluoroethyl sulfone, ethyl pentafluoroethyl sulfone, trifluoromethyl-n-propyl sulfone, trifluoromethyl isopropyl sulfone, trifluoroethyl-n-butyl sulfone, trifluoroethyl-t-butyl sulfone, trifluoromethyl-n-butyl sulfone, trifluoromethyl-t-butyl sulfone, and the like, in view of high ion conductivity and high input and output.

The content of the sulfone-based compound is not limited, and is optional as long as the effects of the present disclosure are not significantly impaired. The content thereof is usually 0.3% by volume or more, preferably 0.5% by volume or more, more preferably 1% by volume or more, while usually 40% by volume or less, preferably 35% by volume or less, more preferably 30% by volume or less based on 100% by volume of the above solvent. When the content thereof is within the range, the sulfone-based compound easily achieves an effect of improving the cycle characteristics and the durability such as storage characteristics, brings the viscosity of a non-aqueous electrolytic solution within an appropriate range, can avoid decrease in the electric conductivity, and can bring the input and output characteristics and charge and discharge rate characteristics of a non-aqueous electrolytic solution secondary battery within appropriate ranges.

The electrolytic solution of the present disclosure also preferably contains, as an additive, at least one compound (11) selected from the group consisting of lithium fluorophosphates (provided that excluding LiPF₆) and lithium salts having a S=O group, from the viewpoint of improvement in the output characteristics.

When the compound (11) is used as an additive, a compound other than the compound (11) is preferably used as the electrolyte salt mentioned above.

Examples of the lithium fluorophosphates include lithium monofluorophosphate (LiPO₃F) and lithium difluorophosphate (LiPO₂F₂).

Examples of the lithium salt having a S=O group include lithium monofluorosulfonate (FSO₃Li), lithium methyl sulfate (CH₃OSO₃Li), lithium ethyl sulfate (C₂H₃OSO₃Li), and lithium 2,2,2-trifluoroethyl sulfate.

Preferred among these as the compound (11) are LiPO₂F₂, FSO₃Li, and C₂H₅OSO₃Li.

The content of the compound (11) is preferably 0.001 to 20% by mass, more preferably 0.01 to 15% by mass, further preferably, 0.1 to 10% by mass, particularly preferably 0.1 to 7% by mass, with respect to the electrolytic solution.

To the electrolytic solution of the present disclosure, other additive may be further added, as required. Examples of the other additive include metal oxides and glass.

The electrolytic solution of the present disclosure preferably contains 5 to 200 ppm of hydrogen fluoride (HF). Incorporation of HF can promote formation of a film of the additive mentioned above. If the content of HF is excessively small, the ability to form a film on the negative electrode tends to decrease, and the characteristics of an electrochemical device tend to deteriorate. If the content of HF is excessively large, the oxidation resistance of the electrolytic solution tends to decrease due to the influence of HF. The electrolytic solution of the present disclosure, even when containing HF in the content within the above range, causes no reduction in the recovery capacity ratio after high-temperature storage of an electrochemical device.

The content of HF is more preferably 10 ppm or more, further preferably 20 ppm or more. The content of HF is more preferably 100 ppm or less, further preferably 80 ppm or less, particularly preferably 50 ppm or less. The content of HF can be measured by neutralization titration.

The electrolytic solution of the present disclosure is preferably prepared by any method using the components mentioned above.

The electrolytic solution of the present disclosure has the feature of suppressing electrocrystallization of an alkali metal, and can be suitably applied to a secondary battery comprising an electrode having a negative electrode material containing a silicon element and a carbon element. A secondary battery comprising such a negative electrode, a positive electrode, and the electrolytic solution of the present disclosure is also provided as one of the present disclosure.

### <Negative electrode>

The negative electrode in the present disclosure suitably comprises a negative electrode material layer and a current collector.

The negative electrode material in the present disclosure contains a silicon element and a carbon element. In particular, Si and/or SiOa (0 < a < 2) and a carbon compound are preferably contained.

The "negative electrode material" in the present disclosure means a material contributing to conductivity, and indicates a negative electrode active material and/or a conductive aid described below in detail.

### (Negative electrode active material)

The negative electrode active material used in the present disclosure suitably contains silicon as a constituent element. Such incorporation of silicon as a constituent element can allow for production of a high-capacity battery.

Particles containing silicon are preferably silicon particles (Si), silicon oxide particles represented by general formula SiOa (0 < a < 2), particles having a structure in which fine particles of silicon are dispersed in a silicon-based compound, or any mixture thereof (hereinafter, these are sometimes collectively designated as "particles containing silicon".). Use of such particles provides a negative electrode mixture for a lithium ion secondary battery higher in initial charge and discharge efficiency, high in capacity and excellent in cycle characteristics.

In particular, at least one selected from the group consisting of Si and SiOa (0 < a < 2) is preferred.

The silicon oxide in the present disclosure is a collective name of amorphous silicon oxide, and the silicon oxide before disproportionation is represented by general formula SiOa (0 < a < 2). a is preferably 0.5 ≤ a ≤ 1.6, more preferably 0.8 ≤ a < 1.6, further preferably 0.8 ≤ a < 1.3.

This silicon oxide can be obtained by, for example, cooling/precipitating a silicon monoxide gas generated by heating a mixture of silicon dioxide and metal silicon.

Such particles having a structure in which fine particles of silicon are dispersed in a silicon-based compound can be obtained by, for example, performing a method of sintering a mixed product of fine particles of silicon with a silicon-based compound, or disproportionation reaction by heat treatment of silicon oxide particles before disproportionation, represented by general formula SiOa, in an inert non-oxidizing atmosphere of argon or the like at a temperature of 400°C or more, suitably 800 to 1100°C. The material obtained by the latter method is suitable because fine crystals of silicon are uniformly dispersed. The above disproportionation reaction can allow the size of nanoparticles of silicon to be 1 to 100 nm. Here, silicon oxide in particles having a structure in which nanoparticles of silicon are dispersed in the silicon oxide is desirably silicon dioxide.

It can be confirmed with a transmission electron microscope that nanoparticles (crystals) of silicon are dispersed in amorphous silicon oxide.

Physical properties of particles containing silicon can be appropriately selected depending on objective composite particles. For example, the average particle size is preferably 0.1 to 50 µm, and the lower limit is more preferably 0.2 µm or more, further preferably 0.5 µm or more. The upper limit is more preferably 30 µm or less, further preferably 20 µm or less. The average particle size in the present invention is expressed by a weight average particle size in particle size distribution measurement by laser diffractometry.

The BET specific surface area of the particles containing silicon is preferably 0.5 to 100 m²/g, more preferably 1 to 20 m²/g. A BET specific surface area of 0.5 m²/g or more does not cause a risk of deteriorating adhesiveness in application to an electrode and then deteriorating battery characteristics. A BET specific surface area of 100 m²/g or less does not cause a risk of increasing the proportion of silicon dioxide on a particle surface and then deteriorating the battery capacity in use as a negative electrode material for a lithium ion secondary battery.

The particles containing silicon above may also be covered with carbon, thereby providing conductivity and achieving improvement in battery characteristics. Examples of the method for providing conductivity include a method by mixing with particles having conductivity, such as graphite, a method by covering the surfaces of the particles containing silicon above, with a carbon film, and a combination method of both the methods. The method by covering with a carbon film is preferred, and the covering method is more preferably a chemical vapor deposition (CVD) method.

A carbon compound such as a graphite powder may be used together with Si and/or SiOa (0 < a < 2), as the negative electrode active material.

Examples of the carbon compound include natural graphite, artificial carbonaceous substances, artificial graphite substances, and carbonous materials obtained by heat treatment of carbonaceous substances {for example, natural graphite, coal-based coke, petroleum-based coke, coal-based pitch, petroleum-based pitch, or such pitch subjected to oxidization treatment, needle coke, pitch coke and carbon materials obtained by partial graphitization of such coke, pyrolyzed products of organic substances such as furnace black, acetylene black, Ketjen black, and pitch-based carbon fibers, carbonizable organic substances (for example, coal-tar pitch from soft pitch to hard pitch, or coal-based heavy oil such as dry-distilled liquefaction oil, directly distilled heavy oil such as atmospheric residue oil and vacuum residual oil, cracked-petroleum-based heavy oil, for example, ethylene tar in by-products generated in pyrolysis of crude oil, naphtha or the like, aromatic hydrocarbons such as acenaphthylene, decacyclene, anthracene, and phenanthrene, N-ring compounds such as phenazine and acridine, S-ring compounds such as thiophene and bithiophene, polyphenylenes such as biphenyl and terphenyl, polyvinyl chloride, polyvinyl alcohol, polyvinyl butyral, any product thereof subjected to insoluble treatment, nitrogen-containing organic polymers such as polyacrylonitrile and polypyrrole, sulfur-containing polythiophene, organic polymers such as polystyrene, natural polymers such as polysaccharides typified by cellulose, lignin, mannan, polygalacturonic acid, chitosan, and saccharose, thermoplastic resins such as polyphenylene sulfide and polyphenylene oxide, and thermosetting resins such as furfuryl alcohol resins, phenol-formaldehyde resins, and imide resins) and carbides thereof, or solutions in which such carbonizable organic substances are dissolved in low-molecular weight organic solvents such as benzene, toluene, xylene, quinoline, and n-hexane, and carbides thereof} in the range of 400 to 3200°C one or more times.

The average particle size of the carbon compound is, for example, preferably 1 to 100 µm, and the lower limit is more preferably 3 µm or more, further preferably 5 µm or more. The upper limit is more preferably 80 µm or less, further preferably 20 µm or less. The average particle size in the present disclosure is expressed by a weight average particle size in particle size distribution measurement by laser diffractometry.

The BET specific surface area of the carbon compound is preferably 0.1 to 50 m²/g, more preferably 1 to 20 m²/g. A BET specific surface area of 0.1 m²/g or more does not cause a risk of deteriorating adhesiveness in application to an electrode and then deteriorating battery characteristics. A BET specific surface area of 50 m²/g or less does not cause a risk of deteriorating the battery capacity in use as a negative electrode material for a lithium ion secondary battery.

The mass ratio between the particles containing silicon above and the carbon compound is preferably 1/99 to 99/1, more preferably 5/95 to 95/5, further preferably 10/90 to 90/10.

The mass ratio between Si and/or SiOa (0 < a < 2) above and the carbon compound is preferably 1/99 to 99/1, more preferably 5/95 to 95/5, further preferably 10/90 to 90/10.

The content of the negative electrode active material in the negative electrode material layer is preferably 80.0 to 99.9% by mass, more preferably 90.0 to 99.0% by mass based on the mass of the amount of the solid content in the negative electrode mixture.

The content of the particles containing silicon in the negative electrode material layer is preferably 20 to 40% by mass, more preferably 25 to 35% by mass based on the mass of the amount of the solid content in the negative electrode mixture.

The content of the carbon compound in the negative electrode material layer is preferably 40 to 60% by mass, more preferably 65 to 75% by mass based on the mass of the amount of the solid content in the negative electrode mixture.

### (Conductive Aid)

The negative electrode material layer may further include a conductive aid. In particular, when the negative electrode active material does not include the carbon compound, a conductive aid is preferably included.

The conductive aid to be used may be any known conductive material. Specific examples thereof include metal materials such as copper and nickel, and carbon compounds such as graphite, including natural graphite and artificial graphite, carbon black, including acetylene black, Ketjen black, channel black, furnace black, lamp black, and thermal black, and amorphous carbon, including needle coke, carbon nanotube, fullerene, and VGCF. One of these may be used singly, or two or more thereof may be used in any combination at any ratio.

The average particle size of the conductive aid is, for example, preferably 0.05 to 100 µm, and the lower limit is more preferably 0.1 µm or more, further preferably 0.15 µm or more. The upper limit is more preferably 10 µm or less, further preferably 5 µm or less. The average particle size in the present invention is expressed by a weight average particle size in particle size distribution measurement by laser diffractometry.

The BET specific surface area of the conductive aid is preferably 0.1 to 1,000 m²/g, more preferably 0.5 to 500 m²/g.

As described above, the carbon compound can be used as an active material or as a conductive aid.

The conductive aid to be used is contained in an amount of usually 0.01% by mass or more, preferably 0.1% by mass or more, more preferably 1% by mass or more, while usually 50% by mass or less, preferably 30% by mass or less, more preferably 15% by mass or less, in the negative electrode material layer. If the content thereof is smaller than this range, the electrical conductivity may become insufficient. In contrast, if the content thereof is larger than this range, the battery capacity may decrease.

### (Binder)

The negative electrode material layer suitably includes a binder.

The binder preferably contains a fluorine-containing copolymer containing a vinylidene fluoride (VdF) unit and a monomer unit other than VdF.

The other monomer may be a fluorinated monomer or a non-fluorinated monomer.

Examples of the fluorinated monomer (where VdF is excluded) include tetrafluoroethylene (TFE), vinyl fluoride, trifluoroethylene, chlorotrifluoroethylene (CTFE), fluoroalkyl vinyl ether, hexafluoropropylene (HFP), (perfluoroalkyl)ethylene, 2,3,3,3-tetrafluoropropene and trans-1,3,3,3-tetrafluoropropene.

The fluoroalkyl vinyl ether is preferably a fluoroalkyl vinyl ether having a fluoroalkyl group having 1 to 5 carbon atoms, more preferably at least one selected from the group consisting of perfluoro(methyl vinyl ether) (PMVE), perfluoro(ethyl vinyl ether) and perfluoro(propyl vinyl ether).

The fluorinated monomer is preferably at least one selected from the group consisting of TFE, CTFE, 2,3,3,3-tetrafluoropropene, HFP and fluoroalkyl vinyl ether, more preferably at least one selected from the group consisting of TFE and HFP, particularly preferably TFE.

The fluorinated monomer (where VdF is excluded) may or may not have a polar group.

Examples of the non-fluorinated monomer include non-fluorinated monomers each having no polar group, such as ethylene and propylene, and non-fluorinated monomers each having a polar group (hereinafter, sometimes referred to as "polar group-containing monomer").

When the non-fluorinated monomer to be used is one having a polar group, a polar group is introduced to the fluorine-containing copolymer and thus much more excellent adhesion between a coating layer and metal foil is obtained. The polar group is preferably at least one selected from the group consisting of a carbonyl group-containing group, an epoxy group, a hydroxy group, a sulfonic acid group, a sulfuric acid group, a phosphoric acid group, an amino group, an amide group and an alkoxy group, more preferably at least one selected from the group consisting of a carbonyl group-containing group, an epoxy group and a hydroxy group, further preferably a carbonyl group-containing group.

The above hydroxy group does not encompass a hydroxy group constituting one portion of the above carbonyl group-containing group. The above amino group is a monovalent functional group in which hydrogen is removed from ammonia, primary or secondary amine.

The above carbonyl group-containing group is a functional group having a carbonyl group (-C(=O)-). The above carbonyl group-containing group is preferably a group represented by general formula: -COOR (R represents a hydrogen atom, an alkyl group or a hydroxyalkyl group), or a carboxylic anhydride group, more preferably the group represented by general formula: -COOR. The alkyl group and the hydroxyalkyl group preferably each have 1 to 16, more preferably 1 to 6, further preferably 1 to 3 carbon atoms. Specific examples of the group represented by general formula: -COOR include -COOCH₂CH₂OH, - COOCH₂CH(CH₃)OH, -COOCH(CH₃)CH₂OH, -COOH, -COOCH₃, and - COOC₂H₅-

When the group represented by general formula: -COOR is -COOH or contains -COOH, -COOH may be a carboxylic acid salt such as a metal carboxylate salt or an ammonium carboxylate salt.

The above carbonyl group-containing group may be a group represented by

general formula : -X-COOR

(X is a group of atoms, having a main chain constituted from a number of atoms of 1 to 20 and having a molecular weight of 500 or less, and R represents a hydrogen atom, an alkyl group or a hydroxyalkyl group). The alkyl group and the hydroxyalkyl group preferably each have 1 to 16, more preferably 1 to 6, further preferably 1 to 3 carbon atoms.

The above amide group is preferably a group represented by general formula: -CO-NRR' (R and R' each independently represent a hydrogen atom, or a substituted or unsubstituted alkyl group.), or a bond represented by general formula: -CO-NR"- (R" represents a hydrogen atom, a substituted or unsubstituted alkyl group, or a substituted or unsubstituted phenyl group.).

Examples of the above polar group-containing monomer include hydroxyalkyl (meth)acrylates such as hydroxyethyl acrylate and 2-hydroxypropyl acrylate; alkylidene malonates such as dimethyl methylidene malonate; vinyl carboxy alkyl ethers such as vinyl carboxy methyl ether and vinyl carboxy ethyl ether; carboxyalkyl (meth)acrylates such as 2-carboxyethyl acrylate and 2-carboxyethyl methacrylate; (meth)acryloyloxyalkyldicalboxylates such as acryloyloxyethylsuccinic acid, acryloyloxypropylsuccinic acid, methacryloyloxyethylsuccinic acid, acryloyloxyethylphthalic acid, and methacryloyloxyethylphthalic acid; unsaturated dibasic acid monoesters such as maleic acid monomethyl ester, maleic acid monoethyl ester, citraconic acid monomethyl ester, and citraconic acid monoethyl ester; monomers (50) represented by general formula (50): 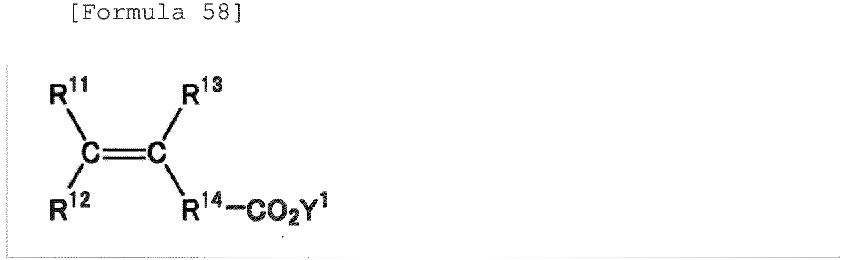
wherein R¹¹ to R¹³ each independently represent a hydrogen atom, or a hydrocarbon group having 1 to 8 carbon atoms; R¹⁴ represents a single bond or a hydrocarbon group having 1 to 8 carbon atoms; and Y¹ represents an inorganic cation and/or an organic cation; and
unsaturated dibasic acids such as maleic acid, maleic anhydride, citraconic acid, and citraconic anhydride.

The above polar group-containing monomer unit that can be contained in the fluorine-containing copolymer is preferably a unit based on the monomer (50) represented by the general formula (50).

In the general formula (50), Y1 represents an inorganic cation and/or an organic cation. Examples of the inorganic cation include cations, for example, H, Li, Na, K, Mg, Ca, Al, and Fe. Examples of the organic cation include cations, for example, NH₄, NH₃R¹⁵, NH₂R¹⁵₂, NHR¹⁵₃, and NR¹⁵₄ (R¹⁵ independently represents an alkyl group having 1 to 4 carbon atoms.). Y1 is preferably H, Li, Na, K, Mg, Ca, Al, or NH₄, more preferably H, Li, Na, K, Mg, Al, or NH₄, further preferably H, Li, Al, or NH₄, particularly preferably H. Specific examples of the inorganic cation and the organic cation are here described with symbols and valencies being omitted, for convenience purposes.

In the general formula (50), R¹¹ to R¹³ each independently represent a hydrogen atom, or a hydrocarbon group having 1 to 8 carbon atoms. The above hydrocarbon group is a monovalent hydrocarbon group. The above hydrocarbon group preferably has 4 or less carbon atoms. Examples of the above hydrocarbon group include alkyl groups, alkenyl groups, and alkynyl groups, in which the number of carbon atoms is as described above, and a methyl group or an ethyl group is preferred. R¹¹ and R¹² are each independently preferably a hydrogen atom, a methyl group or an ethyl group, and R¹³ is preferably a hydrogen atom or a methyl group.

In the general formula (50), R¹⁴ represents a single bond or a hydrocarbon group having 1 to 8 carbon atoms. The above hydrocarbon group is a divalent hydrocarbon group. The above hydrocarbon group preferably has 4 or less carbon atoms. Examples of the above hydrocarbon group include alkylene groups and alkenylene groups, in which the number of carbon atoms is as described above, and among these, at least one selected from the group consisting of a methylene group, an ethylene group, an ethylidene group, a propylidene group and an isopropylidene group is preferred and a methylene group is more preferred.

The monomer (50) is preferably at least one selected from the group consisting of (meth)acrylic acid and any salt thereof, vinyl acetic acid (3-butenoic acid) and any salt thereof, 3-pentenoic acid and any salt thereof, 4-pentenoic acid and any salt thereof, 3-hexenoic acid and any salt thereof, 4-heptenoic acid and any salt thereof, and 5-hexenoic acid and any salt thereof.

The other monomer is preferably at least one selected from the group consisting of TFE, CTFE, (meth)acrylic acid, 2,3,3,3-tetrafluoropropene, HFP, and a fluoroalkyl vinyl ether. The (meth)acrylic acid encompasses acrylic acid and methacrylic acid.

The content of the other monomer unit in the fluorine-containing copolymer is preferably 0.0001 to 50.0% by mol, more preferably 0.01% by mol or more, further preferably 0.10% by mol or more, and more preferably 45.0% by mol or less, further preferably 40.0% by mol or less, particularly preferably 35.0% by mol or less with respect to all the monomer units.

The content of the VdF unit in the fluorine-containing copolymer is 50.0 to 99.9999% by mol, more preferably 55.0% by mol or more, further preferably 60.0% by mol or more, particularly preferably 65.0% by mol or more, and more preferably 99.99% by mol or less, further preferably 99.90% by mol or less with respect to all the monomer units.

When the fluorine-containing copolymer contains a fluorinated monomer unit as the other monomer unit, the content of the fluorinated monomer unit is preferably 0.0001 to 50.0% by mol, more preferably 2.0% by mol or more, further preferably 3.0% by mol or more, particularly preferably 4.0% by mol or more, and more preferably 45.0% by mol or less, further preferably 40.0% by mol or less, particularly preferably 35.0% by mol or less with respect to all the monomer units.

When the fluorine-containing copolymer contains a fluorinated monomer unit as the other monomer unit, the content of the VdF unit in the fluorine-containing copolymer is 50.0 to 99.999% by mol, more preferably 55.0% by mol or more, further preferably 60.0% by mol or more, particularly preferably 65.0% by mol or more, and more preferably 98.0% by mol or less, further preferably 97.0% by mol or less, particularly preferably 96.0% by mol or less with respect to all the monomer units.

When the fluorine-containing copolymer contains a non-fluorinated monomer unit such as a polar group-containing monomer as the other monomer unit, the content of the non-fluorinated monomer unit is preferably 0.0001 to 50.0% by mol, more preferably 0.01% by mol or more, further preferably 0.10% by mol or more, and more preferably 5.0% by mol or less, further preferably 3.0% by mol or less, particularly preferably 1.5% by mol or less with respect to all the monomer units.

When the fluorine-containing copolymer contains a non-fluorinated monomer unit as the other monomer unit, the content of the VdF unit in the fluorine-containing copolymer is preferably 50.0 to 99.999% by mol, more preferably 95.0% by mol or more, further preferably 97.0% by mol or more, particularly preferably 98.5% by mol or more, and more preferably 99.99% by mol or less, further preferably 99.90% by mol or less with respect to all the monomer units.

The compositional feature of the fluorine-containing copolymer in the present disclosure can be measured by, for example, 19F-NMR measurement. When the fluorine-containing copolymer contains a polar group-containing monomer unit as the other monomer unit, the content of the polar group-containing monomer unit can be measured by, for example, acid-base titration of an acid group of carboxylic acid or the like in the case where the polar group is the acid group.

The weight average molecular weight (in terms of polystyrene) of the fluorine-containing copolymer is preferably 10,000 to 3,000,000, more preferably 30,000 or more, further preferably 50,000 or more, particularly preferably 200,000 or more, and more preferably 2,400,000 or less, further preferably 2,200,000 or less, particularly preferably 2,000,000 or less. The weight average molecular weight can be measured by gel permeation chromatography (GPC) with dimethyl formamide as a solvent.

The number average molecular weight (in terms of polystyrene) of the fluorine-containing copolymer is preferably 7,000 to 1,500,000, more preferably 21,000 or more, further preferably 35,000 or more, and more preferably 1,400,000 or less, further preferably 1,200,000 or less, particularly preferably 1,100,000 or less. The number average molecular weight can be measured by gel permeation chromatography (GPC) with dimethyl formamide as a solvent.

Examples of the fluorine-containing copolymer include a VdF/(meth)acrylic acid copolymer, a VdF/TFE copolymer, a VdF/HFP copolymer, a VdF/fluoroalkyl vinyl ether copolymer, a VdF/TFE/HFP copolymer, a VdF/2,3,3,3-tetrafluoro propene copolymer, a VdF/TFE/2,3,3,3-tetrafluoropropene copolymer, a VdF/TFE/(meth)acrylic acid copolymer, a VdF/HFP/(meth)acrylic acid copolymer, a VdF/CTFE copolymer, a VdF/TFE/4-pentenoic acid copolymer, a VdF/TFE/3-butenoic acid copolymer, a VdF/TFE/HFP/(meth)acrylic acid copolymer, a VdF/TFE/HFP/4-pentenoic acid copolymer, a VdF/TFE/HFP/3-butenoic acid copolymer, a VdF/TFE/2-carboxyethyl acrylate copolymer, a VdF/TFE/HFP/2-carboxyethyl acrylate copolymer, a VdF/TFE/acryloyloxyethylsuccinic acid copolymer, and a VdF/TFE/HFP/acryloyloxyethylsuccinic acid copolymer.

Among these, the fluorine-containing copolymer is preferably at least one selected from the group consisting of a VdF/TFE copolymer, a VdF/CTFE copolymer, a VdF/(meth)acrylic acid copolymer, a VdF/2,3,3,3-tetrafluoropropene copolymer, a VdF/HFP copolymer and a VdF/fluoroalkyl vinyl ether copolymer.

The VdF/TFE copolymer contains a VdF unit and a TFE unit. When the copolymer to be used is the VdF/TFE copolymer, not only the negative electrode mixture can be very easily formed, but also the negative electrode mixture, which is very excellent in slurry stability, is obtained and a coating layer very excellent in flexibility can be formed. The content of the VdF unit is preferably 50.0 to 95.0% by mol, more preferably 55.0% by mol or more, further preferably 60.0% by mol or more, and more preferably 92.0% by mol or less, further preferably 89.0% by mol or less with respect to all the monomer units in the VdF/TFE copolymer. The content of the TFE unit is preferably 50.0 to 5.0% by mol, more preferably 45.0% by mol or less, further preferably 40.0% by mol or less, and more preferably 8.0% by mol or more, further preferably 11.0% by mol or more with respect to all the monomer units in the VdF/TFE copolymer.

The VdF/TFE copolymer may contain a unit based on a monomer (where VdF and TFE are excluded) copolymerizable with VdF and TFE, in addition to the VdF unit and the TFE unit. The content of the unit based on a monomer copolymerizable with VdF and TFE is preferably 3.0% by mol or less with respect to all the monomer units in the VdF/TFE copolymer, from the viewpoint of electrolytic solution swelling resistance.

Examples of the monomer copolymerizable with VdF and TFE include the above fluorinated monomer and the above non-fluorinated monomer. The monomer copolymerizable with VdF and TFE is, in particular, preferably at least one selected from the group consisting of the fluorinated monomer and the polar group-containing monomer, more preferably at least one selected from the group consisting of HFP, 2,3,3,3-tetrafluoropropene and a monomer (4).

The weight average molecular weight (in terms of polystyrene) of the VdF/TFE copolymer is preferably 50,000 to 2,000,000, more preferably 80,000 to 1,700,000, further preferably 100,000 to 1,500,000.

The number average molecular weight (in terms of polystyrene) of the VdF/TFE copolymer is 35,000 to 1,400,000, more preferably 40,000 to 1,300,000, further preferably 50,000 to 1,200,000.

The VdF/CTFE copolymer contains a VdF unit and a CTFE unit. When the copolymer to be used is the VdF/CTFE copolymer, not only the negative electrode mixture can be very easily formed, but also a coating layer extremely tightly adhering with metal foil can be formed. The content of the VdF unit is preferably 80.0 to 98.0% by mol, more preferably 85.0% by mol or more, further preferably 90.0% by mol or more, and more preferably 97.5% by mol or less, further preferably 97.0% by mol or less with respect to all the monomer units in the VdF/CTFE copolymer. The content of the CTFE unit is preferably 20.0 to 2.0% by mol, more preferably 15.0% by mol or less, further preferably 10.0% by mol or less, and more preferably 2.5% by mol or more, further preferably 3.0% by mol or more with respect to all the monomer units in the VdF/CTFE copolymer.

The VdF/CTFE copolymer may contain a unit based on a monomer (where VdF and CTFE are excluded) copolymerizable with VdF and CTFE, in addition to the VdF unit and the CTFE unit. The content of the unit based on a monomer copolymerizable with VdF and CTFE is preferably 3.0% by mol or less with respect to all the monomer units in the VdF/CTFE copolymer from the viewpoint of electrolytic solution swelling resistance.

Examples of the monomer copolymerizable with VdF and CTFE include the above fluorinated monomer and the above non-fluorinated monomer. The monomer copolymerizable with VdF and CTFE is, in particular, preferably at least one selected from the group consisting of the fluorinated monomer and the polar group-containing monomer, more preferably at least one selected from the group consisting of TFE, HFP, 2,3,3,3-tetrafluoropropene and a monomer (4), further preferably TFE.

The weight average molecular weight (in terms of polystyrene) of the VdF/CTFE copolymer is preferably 50,000 to 2,000,000, more preferably 80,000 to 1,700,000, further preferably 100,000 to 1,500,000.

The number average molecular weight (in terms of polystyrene) of the VdF/CTFE copolymer is preferably 35,000 to 1,400,000, more preferably 40,000 to 1,300,000, further preferably 50,000 to 1,200,000.

The VdF/(meth)acrylic acid copolymer contains a VdF unit and a (meth)acrylic acid unit. When the copolymer to be used is the VdF/(meth)acrylic acid copolymer, not only the negative electrode mixture can be very easily formed, but also a coating layer extremely tightly adhering with metal foil can be formed. The content of the (meth)acrylic acid unit is preferably 0.0001 to 5.0% by mol, more preferably 0.01 to 3.0% by mol, further preferably 0.10 to 1.5% by mol with respect to all the monomer units.

The content of the VdF unit in the VdF/(meth)acrylic acid copolymer is preferably 95.0 to 99.9999% by mol, more preferably 97.0 to 99.99% by mol, further preferably 98.5 to 99.90% by mol with respect to all the monomer units.

The weight average molecular weight (in terms of polystyrene) of the VdF/(meth)acrylic acid copolymer is preferably 50,000 to 3,000,000, more preferably 80,000 or more, further preferably 100,000 or more, particularly preferably 200,000 or more, and more preferably 2,400,000 or less, further preferably 2,200,000 or less, particularly preferably 2,000,000 or less.

The number average molecular weight (in terms of polystyrene) of the VdF/(meth)acrylic acid copolymer is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less.

The VdF/2,3,3,3-tetrafluoropropene copolymer contains a VdF unit and a 2,3,3,3-tetrafluoropropene unit. When the copolymer to be used is the VdF/2,3,3,3-tetrafluoropropene copolymer, not only the negative electrode mixture can be very easily formed, but also a coating layer very excellent in flexibility and conductivity can be formed. The content of the VdF unit is preferably 50.0 to 98.0% by mol, more preferably 55.0% by mol or more, further preferably 60.0% by mol or more, particularly preferably 65.0% by mol or more, and more preferably 97.0% by mol or less, further preferably 96.0% by mol or less with respect to all the monomer units in the VdF/2,3,3,3-tetrafluoropropene copolymer. The content of the 2,3,3,3-tetrafluoropropene unit is preferably 2.0 to 50.0% by mol, more preferably 3.0% by mol or more, further preferably 4.0% by mol or more, and more preferably 45.0% by mol or less, further preferably 40.0% by mol or less, particularly preferably 35.0% by mol or less with respect to all the monomer units in the VdF/TFE copolymer.

The VdF/2,3,3,3-tetrafluoropropene copolymer may contain a unit based on a monomer (where VdF and 2,3,3,3-tetra fluoropropene are excluded) copolymerizable with VdF and 2,3,3,3-tetrafluoropropene, in addition to the VdF unit and the 2,3,3,3-tetrafluoropropene unit. The content of the unit based on a monomer copolymerizable with VdF and 2,3,3,3-tetrafluoropropene is preferably 3.0% by mol or less with respect to all the monomer units in the VdF/2,3,3,3-tetrafluoropropene copolymer, from the viewpoint of electrolytic solution swelling resistance.

Examples of the monomer copolymerizable with VdF and 2,3,3,3-tetrafluoropropene include the above fluorinated monomer and the above non-fluorinated monomer. The monomer copolymerizable with VdF and 2,3,3,3-tetrafluoropropene is, in particular, preferably at least one selected from the group consisting of the fluorinated monomer and the polar group-containing monomer, more preferably at least one selected from the group consisting of TFE, HFP and the monomer (50).

The weight average molecular weight (in terms of polystyrene) of the VdF/2,3,3,3-tetrafluoropropene copolymer is preferably 10,000 to 2,000,000, more preferably 30,000 to 1,700,000, further preferably 5,000 to 1,500,000.

The number average molecular weight (in terms of polystyrene) of the VdF/2,3,3,3-tetrafluoropropene copolymer is preferably 7,000 to 1,400,000, more preferably 21,000 to 1,300,000, further preferably 35,000 to 1,200,000.

The VdF/HFP copolymer contains a VdF unit and a HFP unit. When the copolymer to be used is the VdF/HFP copolymer, not only the negative electrode mixture can be very easily formed, but also a coating layer extremely tightly adhering with metal foil can be formed. The content of the VdF unit is preferably 80.0 to 98.0% by mol, more preferably 83.0% by mol or more, further preferably 85.0% by mol or more, and more preferably 97.0% by mol or less, further preferably 96.0% by mol or less with respect to all the monomer units in the VdF/HFP copolymer. The content of the HFP unit is preferably 20.0 to 2.0% by mol, more preferably 17.0% by mol or less, further preferably 15.0% by mol or less, and more preferably 3.0% by mol or more, further preferably 4.0% by mol or more with respect to all the monomer units in the VdF/HFP copolymer.

The VdF/HFP copolymer may contain a unit based on a monomer (where VdF and HFP are excluded) copolymerizable with VdF and HFP, in addition to the VdF unit and the HFP unit. The content of the unit based on a monomer copolymerizable with VdF and HFP is preferably 3.0% by mol or less with respect to all the monomer units in the VdF/HFP copolymer from the viewpoint of electrolytic solution swelling resistance.

Examples of the monomer copolymerizable with VdF and HFP include the above fluorinated monomer and the above non-fluorinated monomer. The monomer copolymerizable with VdF and HFP is, in particular, preferably at least one selected from the group consisting of the fluorinated monomer and the polar group-containing monomer, more preferably at least one selected from the group consisting of TFE, 2,3,3,3-tetrafluoropropene and the monomer (50), further preferably the monomer (50).

The weight average molecular weight (in terms of polystyrene) of the VdF/HFP copolymer is preferably 50,000 to 2,000,000, more preferably 80,000 to 1,700,000, further preferably 100,000 to 1,500,000.

The number average molecular weight (in terms of polystyrene) of the VdF/HFP copolymer is preferably 35,000 to 1,400,000, more preferably 40,000 to 1,300,000, further preferably 50,000 to 1,200,000.

The VdF/fluoroalkyl vinyl ether copolymer contains a VdF unit and a fluoroalkyl vinyl ether unit. The content of the VdF unit is preferably 80.0 to 98.0% by mol, more preferably 83.0% by mol or more, further preferably 85.0% by mol or more, and more preferably 97.0% by mol or less, further preferably 96.0% by mol or less with respect to all the monomer units in the VdF/fluoroalkyl vinyl ether copolymer. The content of the fluoroalkyl vinyl ether unit is preferably 20.0 to 2.0% by mol, more preferably 17.0% by mol or less, further preferably 15.0% by mol or less, and more preferably 3.0% by mol or more, further preferably 4.0% by mol or more with respect to all the monomer units in the VdF/fluoroalkyl vinyl ether copolymer.

The VdF/fluoroalkyl vinyl ether copolymer may contain a unit based on a monomer (where VdF and fluoroalkyl vinyl ether are excluded) copolymerizable with VdF and fluoroalkyl vinyl ether, in addition to the VdF unit and the fluoroalkyl vinyl ether unit. The content of the unit based on a monomer copolymerizable with VdF and fluoroalkyl vinyl ether is preferably 3.0% by mol or less with respect to all the monomer units in the VdF/fluoroalkyl vinyl ether copolymer from the viewpoint of electrolytic solution swelling resistance.

Examples of the monomer copolymerizable with VdF and fluoroalkyl vinyl ether include the above fluorinated monomer and the above non-fluorinated monomer. The monomer copolymerizable with VdF and fluoroalkyl vinyl ether is, in particular, preferably at least one selected from the group consisting of the fluorinated monomer and the polar group-containing monomer, more preferably at least one selected from the group consisting of TFE, 2,3,3,3-tetrafluoropropene and a monomer (4), further preferably the monomer (50).

The weight average molecular weight (in terms of polystyrene) of the VdF/fluoroalkyl vinyl ether copolymer is preferably 50,000 to 2,000,000, more preferably 80,000 to 1,700,000, further preferably 100,000 to 1,500,000.

The number average molecular weight (in terms of polystyrene) of the VdF/fluoroalkyl vinyl ether copolymer is preferably 35,000 to 1,400,000, more preferably 40,000 to 1,300,000, further preferably 50,000 to 1,200,000.

The binder preferably further contains polyvinylidene fluoride (PVdF). PVdF is a polymer containing a VdF unit, and is a polymer different from the above fluorine-containing copolymer. PVdF may be a VdF homopolymer composed of only a VdF unit, or may be a polymer containing a VdF unit and a unit based on a monomer copolymerizable with VdF.

The monomer copolymerizable with VdF in PVdF above is preferably a monomer different from tetrafluoroethylene (TFE). In other words, PVdF preferably contains no TFE unit.

Examples of the monomer copolymerizable with VdF in PVdF above include a fluorinated monomer and a non-fluorinated monomer, and a fluorinated monomer is preferred. Examples of the above fluorinated monomer include vinyl fluoride, trifluoroethylene, chlorotrifluoroethylene (CTFE), fluoroalkyl vinyl ether, hexafluoropropylene (HFP), (perfluoroalkyl)ethylene, 2,3,3,3-tetrafluoropropene, and trans-1,3,3,3-tetrafluoropropene. Examples of the above non-fluorinated monomer include ethylene and propylene.

The monomer copolymerizable with VdF in PVdF above is preferably at least one fluorinated monomer selected from the group consisting of CTFE, fluoroalkyl vinyl ether, HFP and 2,3,3,3-tetrafluoropropene, more preferably at least one fluorinated monomer selected from the group consisting of CTFE, HFP and fluoroalkyl vinyl ether.

The content of the monomer unit copolymerizable with VdF in PVdF above is preferably 0 to 5.0% by mol, more preferably 0 to 3.0% by mol with respect to all the monomer units. The content of the fluorinated monomer unit copolymerizable with VdF in PVdF above is preferably less than 5.0% by mol, more preferably less than 3.0% by mol, further preferably less than 1.0% by mol with respect to all the monomer units.

The compositional feature of PVdF in the present disclosure can be measured by, for example, ¹⁹F-NMR measurement.

PVdF above may have a polar group. The above polar group is not limited as long as it is a functional group having polarity, and is preferably at least one selected from the group consisting of a carbonyl group-containing group, an epoxy group, a hydroxy group, a sulfonic acid group, a sulfuric acid group, a phosphoric acid group, an amino group, an amide group and an alkoxy group, more preferably at least one selected from the group consisting of a carbonyl group-containing group, an epoxy group and a hydroxy group, further preferably a carbonyl group-containing group. The above hydroxy group does not encompass a hydroxy group constituting one portion of the above carbonyl group-containing group. The above amino group is a monovalent functional group in which hydrogen is removed from ammonia, primary or secondary amine.

The above carbonyl group-containing group is a functional group having a carbonyl group (-C(=O)-). The above carbonyl group-containing group is preferably a group represented by general formula: -COOR (R represents a hydrogen atom, an alkyl group or a hydroxyalkyl group), or a carboxylic anhydride group, more preferably the group represented by general formula: -COOR. The alkyl group and the hydroxyalkyl group preferably each have 1 to 16, more preferably 1 to 6, further preferably 1 to 3 carbon atoms. Specific examples of the group represented by general formula: -COOR include -COOCH₂CH₂OH, - COOCH₂CH(CH₃)OH, -COOCH(CH₃)CH₂OH, -COOH, -COOCH₃, and - COOC₂H₅. When the group represented by general formula: - COOR is -COOH or contains -COOH, -COOH may be a carboxylic acid salt such as a metal carboxylate salt or an ammonium carboxylate salt.

The above carbonyl group-containing group may be a group represented by general formula: -X-COOR (preferably, X has a main chain constituted from a number of atoms of 2 to 15, and a group of atoms, represented by X, has a molecular weight of 350 or less. R represents a hydrogen atom, an alkyl group or a hydroxyalkyl group). The alkyl group and the hydroxyalkyl group preferably each have 1 to 16, more preferably 1 to 6, further preferably 1 to 3 carbon atoms.

The above amide group is preferably a group represented by general formula: -CO-NRR' (R and R' each independently represent a hydrogen atom, or a substituted or unsubstituted alkyl group.), or a bond represented by general formula: -CO-NR"- (R" represents a hydrogen atom, a substituted or unsubstituted alkyl group, or a substituted or unsubstituted phenyl group.).

The above polar group can be introduced into PVdF by polymerization of VdF and a monomer having the above polar group (hereinafter, referred to as "polar group-containing monomer"), or can be introduced into PVdF by reaction of PVdF and a compound having the above polar group, and VdF and the above polar group-containing monomer are preferably polymerized from the viewpoint of productivity.

When VdF and the above polar group-containing monomer are polymerized, PVdF containing a VdF unit and a polar group-containing monomer unit is obtained. In other words, PVdF preferably contains the above polar group-containing monomer unit. The content of the above polar group-containing monomer unit is preferably 0.001 to 5.0% by mol, more preferably 0.01 to 3.0% by mol, further preferably 0.10 to 1.5% by mol with respect to all the monomer units.

The content of the polar group-containing monomer unit in PVdF in the present disclosure can be measured by, for example, acid-base titration of an acid group of carboxylic acid or the like in the case where the polar group is the acid group.

Examples of the above polar group-containing monomer include hydroxyalkyl (meth)acrylates such as hydroxyethyl acrylate and 2-hydroxypropyl acrylate; unsaturated monobasic acids such as (meth)acrylic acid, crotonic acid, vinyl acetic acid (3-butenoic acid), 3-pentenoic acid, 4-pentenoic acid, 3-hexenoic acid, and 4-heptenoic acid; unsaturated dibasic acids such as maleic acid, maleic anhydride, citraconic acid, and citraconic anhydride; alkylidene malonates such as dimethyl methylidene malonate; vinyl carboxy alkyl ethers such as vinyl carboxy methyl ether and vinyl carboxy ethyl ether; carboxyalkyl (meth)acrylates such as 2-carboxyethyl acrylate and 2-carboxyethyl methacrylate; (meth)acryloyloxyalkyldicalboxylates such as acryloyloxyethylsuccinic acid, methacryloyloxyethylsuccinic acid, acryloyloxyethylphthalic acid, acryloyloxypropylsuccinic acid, and methacryloyloxyethylphthalic acid; and unsaturated dibasic acid monoesters such as maleic acid monomethyl ester, maleic acid monoethyl ester, citraconic acid monomethyl ester, and citraconic acid monoethyl ester.

When the above polar group is introduced into PVdF by reacting PVdF and a compound having the above polar group, the compound having the above polar group, to be used, can be the above polar group-containing monomer, or a silane-based coupling agent or a titanate-based coupling agent having a reactive group with PVdF and a hydrolyzable group. The above hydrolyzable group is preferably an alkoxy group. When the coupling agent is used, addition to PVdF can be made by reaction with PVdF dissolved or swollen in a solvent.

PVdF to be used can also be one obtained by subjecting PVdF to partial hydrogen fluoride removal treatment with a base and further reacting PVdF subjected to partial hydrogen fluoride removal treatment, with an oxidant. Examples of the above oxidant include hydrogen peroxide, hypochlorite, palladium halide, chromium halide, alkali metal permanganate, a peracid compound, alkyl peroxide, and alkyl persulfate.

The content of the VdF unit in PVdF is preferably more than 95.0% by mol, more preferably more than 97.0% by mol, further preferably more than 99.0% by mol with respect to all the monomer units. The content of the VdF unit in PVdF is preferably 95.0 to 99.999% by mol, more preferably 97.0% by mol or more, further preferably 98.5% by mol or more, and more preferably 99.99% by mol or less, further preferably 99.90% by mol or less with respect to all the monomer units.

The weight average molecular weight (in terms of polystyrene) of PVdF is preferably 50,000 to 3,000,000, more preferably 80,000 or more, further preferably 100,000 or more, particularly preferably 200,000 or more, and more preferably 2,400,000 or less, further preferably 2,200,000 or less, particularly preferably 2,000,000 or less. The weight average molecular weight can be measured by gel permeation chromatography (GPC) with N,N-dimethyl formamide as a solvent. The weight average molecular weight of PVdF may be 1,000,000 or more, or may be 1,500,000 or more.

The number average molecular weight (in terms of polystyrene) of PVdF is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less.

The number average molecular weight can be measured by gel permeation chromatography (GPC) with dimethyl formamide as a solvent.

The melting point of PVdF is preferably 100 to 240°C. The above melting point can be determined as a temperature relative to the local maximum value in a heat-of-fusion curve with a temperature rise at a rate of 10°C/min, with a differential scanning calorimetry (DSC) apparatus.

When the binder contains PVdF and the fluorine-containing copolymer, the mass ratio (PVdF/fluorine-containing copolymer) between PVdF and the fluorine-containing copolymer in the binder is preferably 99/1 to 1/99, more preferably 97/3 to 3/97, further preferably 95/5 to 5/95, especially preferably 90/10 to 10/90, particularly preferably 85/15 to 15/85, most preferably 80/20 to 40/60.

The binder may include a further polymer other than PVdF and the fluorine-containing copolymer. Examples of the further polymer include poly methacrylate, polymethyl methacrylate, polyacrylonitrile, polyimide, polyamide, polyamideimide, polycarbonate, styrene rubber, and butadiene rubber.

The content of the fluorine-containing copolymer in the binder, based on the mass of the binder, is preferably 1% by mass or more, more preferably 3% by mass or more, further preferably 5% by mass or more, particularly preferably 10% by mass or more, most preferably 15% by mass or more, and may be 100% by mass or less.

The content of the binder in the negative electrode mixture prepared in formation of the negative electrode material layer is preferably 0.1 to 20% by mass, more preferably 0.2 to 10% by mass, further preferably 0.5 to 7% by mass based on the mass of the solid content in the negative electrode mixture.

### (Solvent)

The above negative electrode mixture preferably contains a solvent. Examples of the solvent include water or an organic solvent, and an organic solvent is preferred because the possibility of moisture remaining in a negative electrode material layer can be significantly decreased in the case where the negative electrode material layer is formed with the negative electrode mixture.

Examples of the organic solvent may include low-boiling-point general-purpose organic solvents, for example, nitrogen-containing organic solvents such as N-methyl-2-pyrrolidone, N,N-dimethyl acetamide, and dimethyl formamide; ketone-based solvents such as acetone, methyl ethyl ketone, cyclohexanone, and methyl isobutyl ketone; ester-based solvents such as ethyl acetate and butyl acetate; ether-based solvents such as tetrahydrofuran and dioxane; β-alkoxypropionamides such as β-methoxy-N,N-dimethylpropionamide, β-n-butoxy-N,N-dimethylpropionamide, and β-n-hexyloxy-N,N-dimethylpropionamide; and any mixed solvents of the above solvents.

The organic solvent to be used can be a solvent represented by general formula (60).

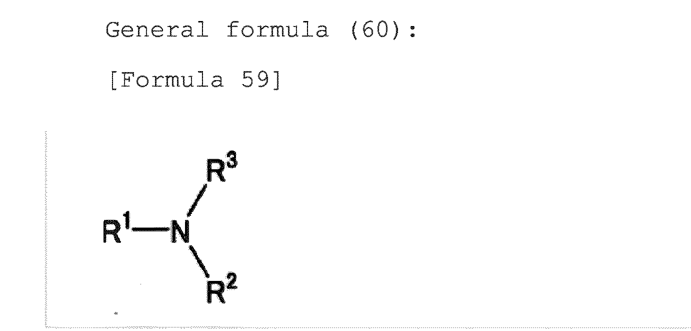

wherein R¹, R² and R³ are each independently H or a monovalent substituent, provided that the total number of carbon atoms in R¹, R² and R³ is 6 or more, at least one of R¹, R² and R³ is an organic group having a carbonyl group, and any two of R¹, R² and R³ optionally bind to form a ring.

The solvent represented by the general formula (60) is preferably at least one selected from the group consisting of 3-methoxy-N,N-dimethylpropanamide, N-ethyl-2-pyrrolidone (NEP), N-butyl-2-pyrrolidone (NBP), acryloylmorpholine, N-cyclohexyl-2-pyrrolidone, N-vinyl-2-pyrrolidone, 3-butoxy-N,N-dimethylpropanamide, N,N,N',N'-tetraethylurea, N,N-dimethylacetamide, N-octyl-2-pyrrolidone and N,N-diethyl acetamide.

The solvent is, in particular, preferably water, or at least one selected from the group consisting of N,N-dimethyl formamide, N,N-dimethyl acetamide, N-methyl-2-pyrrolidone, and a solvent represented by general formula (1), more preferably at least one selected from the group consisting of N,N-dimethyl formamide, N,N-dimethyl acetamide, N-methyl-2-pyrrolidone, 3-methoxy-N,N-dimethylpropanamide, N-ethyl-2-pyrrolidone (NEP), N-butyl-2-pyrrolidone (NBP), acryloylmorpholine, N-cyclohexyl-2-pyrrolidone, N-vinyl-2-pyrrolidone, 3-butoxy-N,N-dimethylpropanamide, N,N,N',N'-tetraethylurea, N,N-dimethylacetamide, N-octyl-2-pyrrolidone and N,N-diethyl acetamide, further preferably at least one selected from the group consisting of N-methyl-2-pyrrolidone, N,N-dimethyl acetamide, 3-methoxy-N,N-dimethylpropanamide, N-ethyl-2-pyrrolidone and N-butyl-2-pyrrolidone, particularly preferably at least one selected from the group consisting of N-methyl-2-pyrrolidone and N,N-dimethyl acetamide, from the viewpoint that the coating property is excellent.

The amount of the solvent in the negative electrode mixture is determined in consideration of the coating property of a current collector, formation of a thin film after drying, and the like. The ratio between the binder and the solvent is usually 0.5:99.5 to 20:80 on the mass ratio.

### (Further Component)

The negative electrode mixture of the present disclosure may further contain a further component such as a leveling agent or a reinforcing material.

The above negative electrode mixture can be prepared by, for example, mixing the binder and the solvent, and then adding the negative electrode active material or the like to the resulting mixture and further mixing the resultant. The resulting negative electrode mixture is uniformly applied to a current collector such as metal foil or a metal net, dried, and, if necessary, pressed to form a thin negative electrode material layer on the current collector, thereby providing a thin film electrode. Alternatively, the negative electrode mixture may be prepared by mixing the negative electrode active material, the binder, and the like in advance and then adding the solvent.

The negative electrode in the present disclosure comprises a negative electrode material layer and a current collector. The negative electrode material layer is formed with the above negative electrode mixture, and may be provided on one side or both sides of the current collector.

Examples of the current collector included in the negative electrode in the present disclosure include metal foils or metal nets, such as iron, stainless steel, copper, aluminum, nickel, and titanium, and carbon materials such as a carbon cloth and carbon paper, and among these, copper foil is preferred.

The negative electrode in the present disclosure can be suitably produced by a production method in which the negative electrode mixture of the present disclosure is applied to the current collector. After the negative electrode mixture is applied, furthermore a coating film may be dried and optionally subjected to heat treatment, and the resulting coating film dried may be pressed.

In the case of a metal material, the current collector may be in the form of metal foil, metal cylinder, metal coil, metal plate, expanded metal, punched metal, metal foam, or the like. In the case of a carbon material, the current collector may be in the form of carbon plate, carbon thin film, carbon cylinder, or the like. Preferred among these is a metal foil. The thin film may be in the form of mesh, as appropriate. The thin film may have any thickness, and the thickness is usually 1 µm or more, preferably 3 µm or more, more preferably 5 µm or more, while usually 1 mm or less, preferably 100 µm or less, more preferably 50 µm or less. If the thin film is thinner than the above range, the strength thereof required for a current collector may become insufficient. In contrast, if the thin film is thicker than this range, the handleability may be impaired.

The thickness of the negative electrode plate is designed in accordance with the positive electrode plate used and is not limited. The thickness of the mixture layer excluding the thickness of the metal foil of the core material is desirably usually 15 µm or more, preferably 20 µm or more, more preferably 30 µm or more, while usually 300 µm or less, preferably 280 µm or less, more preferably 250 µm or less.

### <Positive Electrode>

The positive electrode is suitably composed of a positive electrode active material layer containing a positive electrode active material and a current collector.

The positive electrode active material is not limited as long as the material can electrochemically occlude and release alkali metal ions. A preferred example thereof includes a material containing an alkali metal and at least one transition metal. Specific examples thereof include an alkali metal-containing transition metal composite oxide, and an alkali metal-containing transition metal phosphate compound.

Particularly preferred among these as the positive electrode active material is an alkali metal-containing transition metal composite oxide that generates a high voltage. Examples of the alkali metal ion include a lithium ion, a sodium ion, and a potassium ion. In a preferred aspect, the alkali metal ion may be a lithium ion. In other words, in the present aspect, the alkali metal ion secondary battery is a lithium ion secondary battery.

Examples of the alkali metal-containing transition metal composite oxide include
lithium-manganese spinel composite oxides represented by

   the formula (3-1) : MaMn_{2-b}M¹_{b}O₄
wherein M is at least one metal selected from the group consisting of Li, Na, and K; 0.9 ≤ a; 0 ≤ b ≤ 1.5; M¹ is at least one metal selected from the group consisting of Fe, Co, Ni, Cu, Zn, Al, Sn, Cr, V, Ti, Mg, Ca, Sr, B, Ga, In, Si, and Ge;
lithium-nickel composite oxides represented by

   the formula (3-2): MNi_{1-c}M²_{c}O₂
wherein M is at least one metal selected from the group consisting of Li, Na, and K; 0 ≤ c ≤ 0.5; M² is at least one metal selected from the group consisting of Fe, Co, Mn, Cu, Zn, Al, Sn, Cr, V, Ti, Mg, Ca, Sr, B, Ga, In, Si, and Ge; or
lithium-cobalt composite oxides represented by

   the formula (3-3): MCo_{1-d}M³_{d}O₂
wherein M is at least one metal selected from the group consisting of, Li, Na, and K; 0 ≤ d ≤ 0.5; M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na, and K, more preferably Li or Na, further preferably Li.

In view of enabling a high-output secondary battery having a high energy density to be provided, preferred among these are MCoO₂, MMnO₂, MNiO₂, MMn₂O₄, MNi_{0.8}CO_{0.15}Al_{0.05}O₂, MNi_{1/3}CO_{1/3}Mn_{1/3}O₂, and the like. A compound represented by the following formula (3-4) is preferred:

MNiₕCoᵢMnⱼM⁵ₖO₂ (3-4)

wherein M is, M⁵ represents at least one selected from the group consisting of Fe, Cu, Zn, Al, Sn, Cr, V, Ti, Mg, Ca, Sr, B, Ga, In, Si, and Ge, (h + i + j + k) = 1.0, 0 ≤ h ≤ 1.0, 0 ≤ i ≤ 1.0, 0 ≤ j ≤ 1.5, and 0 ≤ k < 0.2.

Examples of the alkali metal-containing transition metal phosphate compound include a compound represented by the following formula (70):

MₑM⁴_{f}(PO₄)_{g}

wherein M is at least one metal selected from the group consisting of Li, Na, and K, M⁴ represents at least one selected from the group consisting of V, Ti, Cr, Mn, Fe, Co, Ni, and Cu, 0.5 ≤ e ≤ 3, 1 ≤ f ≤ 2, and 1 ≤ g ≤ 3. In the above, M is preferably one metal selected from the group consisting of Li, Na, and K, more preferably Li or Na, further preferably Li.

The transition metal of the lithium-containing transition metal phosphate compound is preferably V, Ti, Cr, Mn, Fe, Co, Ni, Cu, and the like. Specific examples thereof include iron phosphates such as LiFePO₄, Li₃Fe₂(PO₄)₃, and LiFeP₂O₇, cobalt phosphates such as LiCoPO₄, and those obtained by substituting some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si.

The lithium-containing transition metal phosphate compound is preferably one having an olivine-type structure.

Other examples of the positive electrode active material include MFePO₄, MNi_{0.8}Co_{0.2}O₂, M_{1.2}Fe_{0.4}Mn_{0.4}O₂, MNi_{0.5}Mn_{1.5}O₄, MV₃O₆, and M₂MnO₃. Particularly, positive electrode active materials such as MNi_{0.3}Mn_{1.5}O₄ are preferred because the crystal structure thereof does not collapse in the case where a secondary battery is operated at a voltage higher than 4.4 V or a voltage of 4.6 V or higher. Accordingly, an electrochemical device such as the secondary battery including the positive electrode material containing the positive electrode active material exemplified above is preferred, because the remaining capacity is unlikely to decrease, the resistance increase rate is unlikely to change even under storage at a high temperature, and additionally the battery performance does not deteriorate even in operation at a high voltage.

Other examples of the positive electrode active material also include solid solution materials of M₂MnO₃ and MM⁶O₂, wherein M is at least one metal selected from the group consisting of Li, Na, and K, and M⁶ is a transition metal such as Co, Ni, Mn, Fe, or the like.

Examples of the solid solution material include an alkali metal manganese oxide represented by the general formula Mx[Mn_{(1-y)}M⁷_{y}]O_{z}. M in the formula here is at least one metal selected from the group consisting of Li, Na, and K, and M⁷ comprises M and at least one metal element other than Mn including one or two or more elements selected from the group consisting of Co, Ni, Fe, Ti, Mo, W, Cr, Zr, and Sn, for example. The x, y, and z values in the formula are in the ranges of 1 < x < 2, 0 ≤ y < 1, and 1.5 < z < 3, respectively. Preferred among these are manganese-containing solid solution materials obtained by solutionizing LiNiO₂ or LiCoO₂ in Li₂MnO₃ as a base, for example, Li_{1.2}Mn_{0.5}Co_{0.14}Ni_{0.14}O₂, because of enabling an alkali metal ion secondary battery having a high energy density to be provided.

Incorporation of lithium phosphate in the positive electrode active material is preferred because continuous charge characteristics are improved. Use of lithium phosphate is not limited, and the positive electrode active material and the lithium phosphate are preferably mixed for use. The lower limit of the amount of lithium phosphate to be used is preferably 0.1% by mass or more, more preferably 0.3% by mass or more, further preferably 0.5% by mass or more, and the upper limit thereof is preferably 10% by mass or less, more preferably 8% by mass or less, further preferably 5% by mass or less, with respect to the total of the positive electrode active material and lithium phosphate.

One with a substance having a compositional feature different from that of the positive electrode active material attached to a surface of the positive electrode active material may be used. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

Such a substance attached to the surface may be attached to a surface of the positive electrode active material by, for example, a method of dissolving or suspending the substance in a solvent, impregnating and adding the solution or suspension into the positive electrode active material, and drying the material; a method of dissolving or suspending a precursor of the substance attached to the surface in a solvent, impregnating and adding the solution or suspension into the positive electrode active material, and cause a reaction between the material and the precursor by heating or the like; a method of adding the substance to a precursor of the positive electrode active material and simultaneously sintering the materials; or the like. In the case of attaching carbon, for example, a carbonaceous material in the form of activated carbon may be mechanically attached to the surface afterward.

The lower limit of the amount of the substance attached to the surface is preferably 0.1 ppm or more, more preferably 1 ppm or more, further preferably 10 ppm or more, and the upper limit thereof is preferably 20% or less, more preferably 10% or less, further preferably 5% or less, in terms of mass, with respect to the positive electrode active material. The substance attached to the surface can suppress oxidation reaction of the electrolytic solution on the surface of the positive electrode active material, improving the battery life. However, an excessively small amount of the substance attached may fail to sufficiently provide this effect, and an excessively large amount thereof may hinder the entrance and exit of lithium ions, thereby increasing the resistance.

Examples of the shape of particles of the positive electrode active material include a bulky shape, a polyhedral shape, a spherical shape, an ellipsoidal shape, a plate shape, a needle shape, and a pillar shape, as conventionally used. Primary particles may agglomerate to form secondary particles.

The tap density of the positive electrode active material is preferably 0.5 g/cm³ or more, more preferably 0.8 g/cm³ or more, further preferably 1.0 g/cm³ or more. If the positive electrode active material has a tap density falling below the lower limit, the amount of a dispersion medium required may increase as well as the amounts of a conductive material and a binder required may increase in formation of the positive electrode active material layer. Then, the packing ratio of the positive electrode active material in the positive electrode active material layer is limited to result in limitation on the battery capacity in some cases. Use of a composite oxide powder having a high tap density enables a positive electrode active material layer having a high density to be formed. Generally the tap density is preferably as high as possible and has no particular upper limit. An excessively high tap density may cause diffusion of lithium ions through the electrolytic solution as the medium in the positive electrode active material layer to be a rate-controlling factor, and then, the load characteristics may be more likely to deteriorate. Accordingly, the upper limit thereof is preferably 4.0 g/cm³ or less, more preferably 3.7 g/cm³ or less, further preferably 3.5 g/cm³ or less.

In the present disclosure, the tap density is determined as a powder packing density (tap density) g/cm³ when 5 to 10 g of the positive electrode active material powder is packed into a 10-ml glass graduated cylinder and the cylinder is tapped 200 times with a stroke of about 20 mm.

The particles of the positive electrode active material have a median size d50 (or a secondary particle size when the primary particles agglomerate to form secondary particles) of preferably 0.3 µm or more, more preferably 0.5 µm or more, further preferably 0.8 µm or more, most preferably 1.0 µm or more, while preferably 30 µm or less, more preferably 27 µm or less, further preferably 25 µm or less, most preferably 22 µm or less. The median size falling below the lower limit may fail to provide a product having a high tap density. The median size greater than the upper limit may prolong diffusion of lithium in the particles. Thus, the battery performance may deteriorate, or in formation of the positive electrode for a battery, i.e., when the active material and components such as a conductive material and a binder are formed into slurry by adding a solvent and the slurry is applied in the form of a thin film, there occur problems such as generation of streaks. Mixing two or more positive electrode active materials having different median sizes d50 can further improve packability in formation of the positive electrode.

In the present disclosure, the median size d50 is measured using a known laser diffraction/scattering particle size distribution measurement apparatus. In the case of using LA-920 manufactured by Horiba, Ltd. as the particle size distribution analyzer, the dispersion medium used in the measurement is a 0.1% by mass sodium hexametaphosphate aqueous solution, the measurement refractive index is set to 1.24 after 5-minute ultrasonic dispersion, and then measurement is performed.

When the primary particles agglomerate to form secondary particles, the average primary particle size of the positive electrode active material is preferably 0.05 µm or more, more preferably 0.1 µm or more, further preferably 0.2 µm or more. The upper limit thereof is preferably 5 µm or less, more preferably 4 µm or less, further preferably 3 µm or less, most preferably 2 µm or less. When the average primary particle size is larger than the upper limit, it is difficult to form spherical secondary particles. Then, the powder packability may be adversely affected, the specific surface area may significantly decrease, and thus the battery performance such as output characteristics is highly likely to deteriorate. In contrast, when the average primary particle size falls below the lower limit, crystals are usually insufficiently grown, causing problems such as poor charge and discharge reversibility in some cases.

In the present disclosure, the primary particle size is measured by scanning electron microscopic (SEM) observation. Specifically, the primary particle size is determined by selecting 50 primary particles in a photograph at a magnification of 10,000×, measuring the maximum length between the left and right boundary lines of each primary particle along the horizontal line, and then, calculating the average value of the maximum lengths.

The BET specific surface area of the positive electrode active material is preferably 0.1 m²/g or more, more preferably 0.2 m²/g or more, further preferably 0.3 m²/g or more. The upper limit thereof is preferably 50 m²/g or less, more preferably 40 m²/g or less, further preferably 30 m²/g or less. If the BET specific surface area is smaller than this range, the battery performance is likely to deteriorate. If the BET specific surface area is larger than this range, the tap density is less likely to increase, and a problem may be likely to occur in the coating property in formation of the positive electrode active material layer.

In the present disclosure, the BET specific surface area is defined by a value measured by single point BET nitrogen adsorption method by a gas flow method using a surface area analyzer (e.g., fully automatic surface area measurement device, Ohkura Riken Co., Ltd.), a sample pre-dried in nitrogen stream at 150°C for 30 minutes, and then a nitrogen-helium gas mixture with the nitrogen pressure relative to the atmospheric pressure being accurately adjusted to 0.3.

When the secondary battery of the present disclosure is used as a large-size lithium ion secondary battery for hybrid vehicles or distributed generation, high output is required. Thus, the particles of the positive electrode active material are preferably mainly composed of secondary particles.

The particles of the positive electrode active material preferably include 0.5 to 7.0% by volume of fine particles having an average secondary particle size of 40 µm or less and having an average primary particle size of 1 µm or less. Incorporation of fine particles having an average primary particle size of 1 µm or less enlarges the contact area with the electrolytic solution and can accelerate diffusion of lithium ions between the electrode and the electrolytic solution, resulting in improvement in the output performance of the battery.

A method for producing the positive electrode active material to be used is a common method as a method for producing an inorganic compound. In particular, for production of a spherical or ellipsoidal active material, various methods can be contemplated. Such a method is exemplified in which a raw material substance of transition metal is dissolved or crushed and dispersed in a solvent such as water, the pH of the solution or dispersion is adjusted under stirring to form a spherical precursor, the precursor is recovered and, if necessary, dried, then, a Li source such as LiOH, Li₂CO₃, or LiNO₃ is added thereto, and the mixture is sintered at a high temperature, thereby providing an active material.

For production of the positive electrode, one of the positive electrode active materials described above may be used singly, or two or more such materials each having a different compositional feature may be used in any combination at any ratio. Preferred examples of the combination in this case include a combination of LiCoO₂ and LiMn₂O₄ or one in which part of Mn may be replaced by a different transition metal or the like, such as LiNi_{0.33}CO_{0.33}Mn_{0.33}O₂, and a combination with LiCoO₂ or one in which part of Co may be replaced by a different transition metal.

The content of the positive electrode active material is preferably 50 to 99.5% by mass, more preferably 80 to 99% by mass with respect to positive electrode mixture, in view of a high battery capacity. The content of the positive electrode active material in the positive electrode active material layer is preferably 80% by mass or more, more preferably 82% by mass or more, particularly preferably 84% by mass or more. The upper limit is preferably 99% by mass or less, more preferably 98% by mass or less. An excessively small content of the positive electrode active material in the positive electrode active material layer may cause an insufficient electric capacity. In contrast, an excessively large content thereof may cause insufficient strength of the positive electrode.

The positive electrode mixture preferably further contains a binder, a thickening agent, a conductive material, a solvent, and the like.

The binder to be used may be any material that is safe against a solvent to be used in production of the electrode and the electrolytic solution. Examples thereof include resin polymers such as polyethylene, polypropylene, polyethylene terephthalate, polymethyl methacrylate, aromatic polyamide, chitosan, alginic acid, polyacrylic acid, polyimide, cellulose, and nitro cellulose; rubbery polymers such as SBR (styrene-butadiene rubber), isoprene rubber, butadiene rubber, fluoroelastomers, NBR (acrylonitrile-butadiene rubber), and ethylene-propylene rubber; styrene-butadiene-styrene block copolymers and hydrogenated products thereof; thermoplastic elastomeric polymers such as EPDM (ethylene-propylene-diene terpolymers), styrene-ethylene-butadiene-styrene copolymers, and styrene-isoprene-styrene block copolymers and hydrogenated products thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride, polytetrafluoroethylene, vinylidene fluoride copolymer, and tetrafluoroethylene-ethylene copolymers; and polymer compositional features having ion conductivity of alkali metal ions (especially, lithium ions). One of these may be used singly, or two or more thereof may be used in any combination at any ratio.

The content of the binder, as the proportion of the binder in the positive electrode active material layer, is usually 0.1% by mass or more, preferably 1% by mass or more, further preferably 1.5% by mass or more, while usually 80% by mass or less, preferably 60% by mass or less, further preferably 40% by mass or less, most preferably 10% by mass or less. An excessively low proportion of the binder may fail to sufficiently hold the positive electrode active material and cause insufficient mechanical strength of the positive electrode, and the battery performance such as cycle characteristics may deteriorate. In contrast, an excessively high proportion thereof may cause reduction in battery capacity and conductivity.

Examples of the thickening agent include carboxymethyl cellulose, methyl cellulose, hydroxymethyl cellulose, ethyl cellulose, polyvinyl alcohol, oxidized starch, monostarch phosphate, casein, polyvinylpyrrolidone, and salts thereof. One of these may be used singly, or two or more thereof may be used in any combination at any ratio.

The proportion of the thickening agent with respect to the active material is in the range of usually 0.1% by mass or more, preferably 0.2% by mass or more, more preferably 0.3% by mass or more, while usually 5% by mass or less, preferably 3% by mass or less, more preferably 2% by mass or less. If the proportion falls below this range, the coating property may significantly deteriorate. If the proportion exceeds this range, the proportion of the active material in the positive electrode active material layer decreases, and there may be problems such as decrease in the capacity of the battery and increase in the resistance between the positive electrode active materials.

The conductive material to be used may be any known conductive material. Specific examples thereof include metal materials such as copper and nickel, and carbon materials such as graphite, including natural graphite and artificial graphite, carbon black, including acetylene black, Ketjen black, channel black, furnace black, lamp black, and thermal black, and amorphous carbon, including needle coke, carbon nanotube, fullerene, and VGCF. One of these may be used singly, or two or more thereof may be used in any combination at any ratio. The conductive material to be used is contained in an amount of usually 0.01% by mass or more, preferably 0.1% by mass or more, more preferably 1% by mass or more, while usually 50% by mass or less, preferably 30% by mass or less, more preferably 15% by mass or less, in positive electrode active material layer. If the content thereof is smaller than this range, the electrical conductivity may become insufficient. In contrast, if the content thereof is larger than this range, the battery capacity may decrease.

The type of solvent for forming a slurry is not limited as long as the solvent can dissolve or disperse therein the positive electrode active material, the conductive material, and the binder, as well as a thickening agent used as appropriate. The solvent may be either an aqueous solvent or an organic solvent. Examples of the aqueous solvent include water and solvent mixtures of an alcohol and water. Examples of the organic solvent include aliphatic hydrocarbons such as hexane; aromatic hydrocarbons such as benzene, toluene, xylene, and methyl naphthalene; heterocyclic compounds such as quinoline and pyridine; ketones such as acetone, methyl ethyl ketone, and cyclohexanone; esters such as methyl acetate and methyl acrylate; amines such as diethylene triamine and N,N-dimethylaminopropylamine; ethers such as diethyl ether, propylene oxide, and tetrahydrofuran (THF); amides such as N-methylpyrrolidone (NMP), dimethyl formamide, and dimethyl acetamide; and aprotic polar solvents such as hexamethylphospharamide and dimethyl sulfoxide.

Examples of the material of the current collector for a positive electrode include metal materials including metals such as aluminum, titanium, tantalum, stainless steel, and nickel, and alloys thereof; and carbon materials such as carbon cloth and carbon paper. Preferred among these are metal materials, especially aluminum or an alloy thereof.

In the case of a metal material, the current collector may be in the form of metal foil, metal cylinder, metal coil, metal plate, expanded metal, punched metal, metal foam, or the like. In the case of a carbon material, the current collector may be in the form of carbon plate, carbon thin film, carbon cylinder, or the like. Preferred among these is a metal foil. The thin film may be in the form of mesh, as appropriate. The thin film may have any thickness, and the thickness is usually 1 µm or more, preferably 3 µm or more, more preferably 5 µm or more, while usually 1 mm or less, preferably 100 µm or less, more preferably 50 µm or less. If the thin film is thinner than the above range, the strength thereof may become insufficient required for a current collector. In contrast, if the thin film is thicker than this range, the handleability may be impaired.

Application of a conductive aid on the surface of the current collector is also preferred from the viewpoint of reduction in the electric contact resistance between the current collector and the positive electrode active material layer. Examples of the conductive aid include carbon and noble metals such as gold, platinum, and silver.

The ratio between the thicknesses of the current collector and the positive electrode active material layer is not limited. The value (thickness of positive electrode active material layer on one side immediately before injection of electrolytic solution)/(thickness of current collector) is in the range of preferably 20 or less, more preferably 15 or less, most preferably 10 or less, while preferably 0.5 or more, more preferably 0.8 or more, most preferably 1 or more. If the value exceeds this range, the current collector may generate heat due to Joule heating during high-current-density charge and discharge. If the value falls below this range, the ratio by volume of the current collector to the positive electrode active material increases, and the battery capacity may decrease.

The positive electrode may be produced by a usual method. An example of the production method includes a method in which the positive electrode active material is mixed with the above binder, thickening agent, conductive material, solvent, and the like to form a slurry-like positive electrode mixture, and then this mixture is applied to a current collector, dried, and pressed so as to enhance the density.

The density can be enhanced with a manual press, a roll press, or the like. The density of the positive electrode active material layer is in the range of preferably 1.5 g/cm³ or more, more preferably 2 g/cm³ or more, further preferably 2.2 g/cm³ or more, while preferably 5 g/cm³ or less, more preferably 4.5 g/cm³ or less, further preferably 4 g/cm³ or less. If the density exceeds this range, the permeability of the electrolytic solution toward the vicinity of the interface between the current collector and the active material decreases, charge and discharge characteristics deteriorate particularly at a high current density, and thus, high output may not be provided. If the density falls below the range, the electrical conductivity between the active materials may decrease, the battery resistance may increase, and thus, high output may not be provided.

In use of the electrolytic solution of the present disclosure, from the viewpoint of improvement in the stability at high output and high temperature, the area of the positive electrode active material layer is preferably large relative to the outer surface area of an external case of the battery. Specifically, the sum of the electrode areas of the positive electrode is preferably 15 times or more, more preferably 40 times or more, larger than the surface area of the external case of the secondary battery. The outer surface area of an external case of the battery herein, for a bottomed square shape, refers to the total area calculated from the dimensions of length, width, and thickness of the case portion into which a power-generating element is packed except for a protruding portion of a terminal. The outer surface area of an external case of the battery herein, for a bottomed cylindrical shape, refers to the geometric surface area of an approximated cylinder of the case portion into which a power-generating element is packed except for a protruding portion of a terminal. The sum of the electrode areas of the positive electrode herein is the geometric surface area of the positive electrode mixture layer opposite to a mixture layer including the negative electrode active material. For structures including positive electrode mixture layers formed on both sides with a current collector foil interposed therebetween, the sum of electrode areas of the positive electrode is the sum of the areas calculated on the respective sides.

The thickness of the positive electrode plate is not limited. From the viewpoint of a high capacity and high output, the thickness of the mixture layer on one side of the current collector excluding the thickness of the metal foil of the core material is, as the lower limit, preferably 10 µm or more, more preferably 20 µm or more, while preferably 500 µm or less, more preferably 450 µm or less.

There may be used a positive electrode plate onto a surface of which a substance having a compositional feature different from the positive electrode plate is attached. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

### <Separator>

The secondary battery of the present disclosure preferably further comprises a separator.

The material or shape of the separator is not limited and known one may be used as long as the separator is stable to the electrolytic solution and excellent in a liquid-retaining ability. In particular, it is preferred to use a separator in the form of a porous sheet or a nonwoven fabric for which a resin, a glass fiber, inorganic matter, or the like formed of a material stable to the electrolytic solution of the present disclosure and which has excellent liquid-retaining ability.

Examples of the material of a resin or glass-fiber separator that can be used include polyolefins such as polyethylene and polypropylene, aromatic polyamide, polytetrafluoroethylene, polyether sulfone, and glass filters. One of these materials may be used singly or two or more of these may be used in any combination at any ratio, for example, in the form of a polypropylene/polyethylene bilayer film or a polypropylene/polyethylene/polypropylene trilayer film. Among these, the above separator is preferably a porous sheet or a nonwoven fabric formed from a polyolefin such as polyethylene or polypropylene as the raw material, in view of favorable permeability of the electrolytic solution and a favorable shut-down effect.

The separator may have any thickness, and the thickness is usually 1 µm or more, preferably 5 µm or more, further preferably 8 µm or more, while usually 50 µm or less, preferably 40 µm or less, further preferably 30 µm or less. If the separator is excessively thinner than the above range, the insulation and mechanical strength may decrease. If the separator is excessively thicker than the above range, not only the battery performance such as rate characteristics may deteriorate but also an energy density of the whole electrolytic solution battery may decrease.

When a separator which is a porous one such as a porous sheet or a nonwoven fabric is used, the separator may have any porosity. The porosity is usually 20% or more, preferably 35% or more, further preferably 45% or more, while usually 90% or less, preferably 85% or less, more preferably 75% or less. If the porosity is excessively smaller than the above range, the film resistance may increase, and the rate characteristics tends to deteriorate. If the porosity is excessively larger than the above range, the mechanical strength of the separator may decrease, and the insulation tends to decrease.

The separator may have any average pore size, and the average pore size is usually 0.5 µm or less, preferably 0.2 µm or less, while usually 0.05 µm or more. If the average pore size exceeds the above range, short circuits easily occur. If the average pore size falls below the above range, the film resistance may increase, and the rate characteristics may deteriorate.

Meanwhile, examples of the inorganic matter to be used include oxides such as alumina and silicon dioxide, nitrides such as aluminum nitride and silicon nitride, and sulfates such as barium sulfate and calcium sulfate, each in the form of particles or fibers.

The separator is used in the form of a thin film such as a nonwoven fabric, a woven fabric, or a microporous film. The thin film form to be used suitably has a pore size of 0.01 to 1 µm and a thickness of 5 to 50 µm. Other than the above separate thin film form, a separator may be used in which a composite porous layer containing particles of the above inorganic matter is formed on a surface layer of the positive electrode and/or negative electrode using a resin binder. For example, alumina particles having a 90% particle size of smaller than 1 µm may be employed to form a porous layer on both the surfaces of the positive electrode using fluororesin as a binder.

### <Battery Design>

The electrode group may have either a laminate structure including the above positive electrode plate and negative electrode plate with the above separator interposed therebetween, or a wound structure including the above positive electrode plate and negative electrode plate wound in a spiral form with the above separator interposed therebetween. The proportion of the volume of the electrode group in the battery internal volume (hereinafter, referred to as an electrode group occupancy) is usually 40% or more, preferably 50% or more, while usually 90% or less, preferably 80% or less.

If the electrode group occupancy falls below the above range, the battery capacity is lowered. If the electrode group occupancy exceeds the above range, the void space is small, and the battery temperature elevates. Thereby the members expand and the vapor pressure of the liquid component of the electrolyte increases to raise the internal pressure. This may deteriorate characteristics of the battery such as charge and discharge repeatability and high-temperature storage and may further actuate a gas-releasing valve for releasing the internal pressure to the outside.

The current collecting structure is not limited. In order to more effectively improve the high-current-density charge and discharge characteristics by the electrolytic solution of the present disclosure, the current collecting structure is preferably configured to reduce the resistance at wiring portions and joint portions. When the internal resistance is reduced in this manner, effects due to use of the electrolytic solution of the present disclosure are particularly favorably exerted.

In an electrode group having the above laminate structure, suitably used is a structure formed by bundling the metal core portions of the respective electrode layers to weld the bundled portions to a terminal. When an electrode has a large area, the internal resistance increases. Thus, a plurality of terminals may be suitably provided in the electrode so as to reduce the resistance. In an electrode group having the wound structure, a plurality of lead structures may be provided on each of the positive electrode and the negative electrode and bundled to a terminal to thereby reduce the internal resistance.

The material of the external case is not limited as long as the material is stable to an electrolytic solution to be used. Specific examples thereof include metals such as nickel-plated steel plates, stainless steel, aluminum and aluminum alloys, and magnesium alloys, or a layered film (laminate film) of a resin and aluminum foil. From the viewpoint of weight reduction, a metal such as aluminum or an aluminum alloy or a laminate film is suitably used.

Examples of an external case including metal include one having a sealed-up structure formed by welding the metal by laser welding, resistance welding, or ultrasonic welding, or one having a caulking structure provided using the metal via a resin gasket. Examples of an external case including a laminate film include ones having a sealed-up structure formed by hot-melting resin layers. A resin different from the resin of the laminate film may be interposed between the resin layers in order to improve the sealability. In particular, in the case of forming a sealed-up structure by hot-melting the resin layers with current collecting terminals interposed therebetween, metal and resin are to be bonded. Thus, the resin to be interposed between the resin layers to be used is suitably a resin having a polar group or a modified resin having a polar group introduced therein.

The secondary battery of the present disclosure may have any shape and examples thereof include a cylindrical shape, a square shape, a laminate shape, a coin shape, and a large-size shape. The shapes and the constitutions of the positive electrode, the negative electrode, and the separator may be changed for use in accordance with the shape of each of the battery.

### Examples

Next, the present disclosure will be described with reference to Examples, but the present disclosure is not intended to be limited to these Examples.

Unless otherwise specified in the following Examples, "parts" and "%" represent "parts by mass" and "% by mass", respectively.

Fluorinated ethers (A-1) to (A-3) used are shown below.
(A-1) HCF₂CF₂OCH₂CF₂CF₂H
(A-2) HCF₂CF₂OCH₂CF₂CF₃
(A-3) HCF₂CF₂OCH₂CF₃

Additives used are shown below.
VC: Vinylene carbonate
Succinic anhydride
Maleic anhydride
Adiponitrile
FEC: Fluoroethylene carbonate
VEC: Vinylethylene carbonate
DFEC: Difluoroethylene carbonate
CH₃CH₂OSO₃Li
FSO₃Li
Et₂NSO₃Li
(CF₃CH₂)₂NSO₃L
(CF₃CH₂) (CH₃) NSO₃Li
(CNCH₂)₂NSO₃Li
Tristrimethylsilyl phosphate
Tristriethylsilyl phosphate
Tris-t-butyldimethylsilyl phosphate
Tristrimethylsilyl phosphite
Tristriethylsilyl phosphite
Tris-t-butyldimethylsilyl phosphite

### (Example 1)

### [Preparation of Electrolytic Solution]

A basic electrolytic solution was obtained by mixing ethylene carbonate(EC), ethyl methyl carbonate (EMC) and dimethyl carbonate (DMC) so that the volume ratio was 30/40/30, and adding LiPF₆ to this mixture so that the concentration was 1.0 mol/L.

To the basic electrolytic solution was added 0.001% by mass of ether fluoride (A-1), and mixed to prepare a non-aqueous electrolytic solution.

### [Production of Negative Electrode]

Mixed were 94% by mass of a negative electrode active material including a silicon oxide powder (SiO) (average particle size 20 µm, BET specific surface area 2.7 m²/g) and a graphite powder (average particle size 5 µm, BET specific surface area 20 m²/g) (mass ratio: 30/70), and 6% by mass of polyvinylidene fluoride (PVdF) as a binder, and furthermore N-methyl-2-pyrrolidone (NMP) was added and mixed to form a slurry. The resulting slurry was applied to a negative electrode current collector composed of 15-µm thick copper foil, and dried. The resultant was cut to a predetermined electrode size, and rolled with roll press, to produce a negative electrode in which a negative electrode material layer was formed on a negative electrode current collector.

### [Production of Positive Electrode]

Added were 97 parts by mass of LiNi_{0.8}Mn_{0.1}Co_{0.1}O₂ (NMC811) as a positive electrode active material, 1.5 parts by mass of acetylene black as a conductive aid, and 1.5 parts by mass of polyvinylidene fluoride (8% by mass NMP solution) as a binder, and mixed by a disperser to form a slurry. The resulting slurry was applied to 20-µm thick aluminum foil, and dried. The foil was then rolled with a press and cut to provide a piece including a coated portion (positive electrode material layer) having a width of 50 mm and a length of 30 mm and an uncoated portion having a width of 5 mm and a length of 9 mm as a positive electrode.

### [Production of Battery]

The negative electrode produced, comprising a negative electrode material layer on one side, was cut to provide a piece including a coated portion(negative electrode material layer) having a width of 52 mm and a length of 32 mm and an uncoated portion having a width of 5 mm and a length of 9 mm as a negative electrode.

The above positive electrode was faced to the negative electrode with a 20-µm thick microporous polyethylene film (separator) interposed therebetween. The non-aqueous electrolytic solution provided above was injected therein, and the non-aqueous electrolytic solution was made to sufficiently permeate into the separator and the like. Thereafter, the assembly was sealed, then pre-charged, and aged to thereby produce an aluminum laminate cell (lithium ion secondary battery).

### (Measurement of Battery Characteristics)

### [Cycle Characteristics]

The resulting aluminum laminate cell was subjected to constant-current constant-voltage charging to 4.2 V at 25°C and a current corresponding to 0.2 C (hereinafter, denoted by CC/CV charging) (0.1 C cutting), and discharged to 3 V at a constant current of 0.2 C. This was counted as one cycle, and three cycles were carried out. Thereafter, CC/CV charging (0.1 C cutting) to 4.2 V at 45°C and a current corresponding to 1.0 C was performed and then discharging to 3 V at a constant current of 1.0 C was performed. This was counted as one cycle, and the initial discharge capacity was determined from the discharge capacity. The cycles were again performed, and the discharge capacity after the 300th cycle was measured. The proportion of the discharge capacity after the 300th cycle to the initial discharge capacity was determined. This value was defined as the capacity retention (%). Capacity retention (%) = (discharge capacity after 300th cycle)/(initial discharge capacity at 1.0 C) × 100

The result was expressed as a relative value under the assumption that the result in Comparative Example 1 was 1.

### [IV Resistance]

The above battery was charged up to a SOC of 50% and discharged at a rate of 1, 3, or 5 C, and the voltage drop (V) here was measured. The resistance value was calculated from the slope by the expression V = IR from the resulting voltage value and current value. A relative value to a value of 1 in Comparative Example 1 was described in the attached table in Examples.

The above SOC indicates a state of charging and a SOC of 100% corresponds to a capacity in charging to 4.2 V. For example, a SOC of 50% indicates the half of the capacity at a SOC of 100%.

### [Amount of LiF]

The battery tested was disassembled, the negative electrode was taken out, and a predetermined amount of water was added. After stirring, the solution was filtrated and the solution after filtration was subjected to ion chromatography to calculate the amount of F, and the resulting value was converted to the amount of LiF.

### (Examples 2 to 37)

Each non-aqueous electrolytic solution was prepared and furthermore each battery was produced to perform each evaluation in the same manner as in Example 1 except that the type and the amount of addition of each additive in the electrolytic solution were changed as shown in Table 1.

The results are shown in Table 1.

### (Comparative Example 1)

A non-aqueous electrolytic solution was prepared and furthermore a battery was produced to perform each evaluation in the same manner as in Example 1 except that no additives were used.

The results are shown in Table 1.

### (Comparative Example 2)

A non-aqueous electrolytic solution was prepared and furthermore a battery was produced to perform each evaluation in the same manner as in Example 1 except that the additives were changed as shown in Table 1.

The results are shown in Table 1.

**[Table 1]**

| | Additive ① | Concentration (mass%) | Additive ② | Concentration (mass%) | Additive ③ | Concentration (mass%) | Battery characteristics | | Analysis |
|---|---|---|---|---|---|---|---|---|---|
| | | | | | | | Cycle characteristic (relative value to 1 in Comparative Example 1) | IV resistance (relative value to 1 in Comparative Example 1) | Amount of LiF (mg/cm2) |
| Example 1 | A-1 | 0.001 | - | - | - | - | 1.48 | 0.68 | 3.21 |
| Example 2 | A-1 | 0.01 | - | - | - | - | 1.49 | 0.67 | 3.31 |
| Example 3 | A-1 | 0.05 | - | - | - | - | 1.50 | 0.66 | 3.35 |
| Example 4 | A-1 | 0.1 | - | - | - | - | 1.51 | 0.64 | 3.34 |
| Example 5 | A-1 | 0.5 | - | - | - | - | 1.53 | 0.63 | 3.45 |
| Example 6 | A-1 | 1.0 | - | - | - | - | 1.54 | 0.61 | 3.50 |
| Example 7 | A-1 | 3.0 | - | - | - | - | 1.55 | 0.60 | 3.60 |
| Example 8 | A-1 | 5.0 | - | - | - | - | 1.45 | 0.70 | 3.71 |
| Example 9 | A-1 | 9.0 | - | - | - | - | 1.41 | 0.72 | 3.82 |
| Example 10 | A-2 | 1.0 | - | - | - | - | 1.51 | 0.63 | 3.49 |
| Example 11 | A-2 | 3.0 | - | - | - | - | 1.52 | 0.62 | 3.58 |
| Example 12 | A-3 | 1.0 | - | - | - | - | 1.49 | 0.64 | 3.46 |
| Example 13 | A-3 | 3.0 | - | - | - | - | 1.50 | 0.65 | 3.56 |
| Example 14 | A-1 | 1.0 | VC | 1.0 | - | - | 1.62 | 0.60 | 3.51 |
| Example 15 | A-1 | 1.0 | VC | 3.0 | - | - | 1.64 | 0.61 | 3.51 |
| Example 16 | A-1 | 3.0 | VC | 1.0 | - | - | 1.65 | 0.60 | 3.61 |
| Example 17 | A-1 | 3.0 | Succinic anhydride | 1.0 | - | - | 1.61 | 0.60 | 3.60 |
| Example 18 | A-1 | 3.0 | Maleic anhydride | 1.0 | - | - | 1.62 | 0.61 | 3,61 |
| Example 19 | A-1 | 3.0 | Adiponitrile | 1.0 | - | - | 160 | 0.60 | 3.59 |
| Example 20 | A-1 | 3.0 | FEC | 1.0 | - | - | 1.65 | 0.81 | 3.60 |
| Example 21 | A-1 | 3.0 | VEC | 1.0 | - | - | 1.62 | 0.61 | 3.60 |
| Example 22 | A-1 | 3.0 | DFEC | 1.0 | - | - | 1.62 | 0.60 | 3.61 |
| Example 23 | A-1 | 3.0 | CH3CH2OSO3Li | 1.0 | - | - | 1.55 | 0.52 | 3.62 |
| Example 24 | A-1 | 3.0 | FSO3Li | 1.0 | - | - | 1.56 | 0.53 | 3.61 |
| Example 25 | A-1 | 3.0 | Et2NSO3Li | 1.0 | - | - | 1.55 | 0.49 | 3.61 |
| Example 26 | A-1 | 3.0 | (CF3CH2)2NSO3Li | 1.0 | - | - | 1.55 | 0.49 | 3.60 |
| Example 27 | A-1 | 3.0 | (CF3CH2)(CH3)NSO3Li | 1.0 | - | - | 1.54 | 0.49 | 3.59 |
| Example 28 | A-1 | 3.0 | (CNCH2)2NSO3Li | 1.0 | - | - | 1.56 | 0.49 | 3.60 |
| Example 29 | A-1 | 3.0 | Tristrimethylsilyl phosphate | 1.0 | - | - | 1.55 | 0.52 | 3.60 |
| Example 30 | A-1 | 3.0 | Tristriethylsilyl phosphate | 1.0 | - | - | 1.55 | 0.51 | 3.60 |
| Example 31 | A-1 | 3.0 | Tris-t-bulyldimethylsilyl phosphate | 1.0 | - | - | 1.56 | 0.50 | 3.61 |
| Example 32 | A-1 | 3.0 | Tristrimethylsilyl phosphite | 1.0 | - | - | 1.54 | 0.50 | 3.61 |
| Example 33 | A-1 | 3.0 | Tristriethylsilyl phosphite | 1.0 | - | - | 1.56 | 0.51 | 3.60 |
| Example 34 | A-1 | 3.0 | Tris-t-butyldimethylsilyl phosphite | 1.0 | - | - | 1.54 | 0.52 | 3.59 |
| Example 35 | A-1 | 3.0 | VC | 1.0 | FEC | 1 | 1.68 | 0.58 | 3.60 |
| Example 36 | A-1 | 3.0 | VC | 1.0 | FEC | 2 | 1.70 | 0.57 | 3.60 |
| Example 37 | A-1 | 3.0 | VC | 1.0 | FEC | 3 | 1.71 | 0.57 | 3.61 |
| Comparative Example 1 | - | - | - | - | - | - | 1.00 | 1.00 | 2.65 |
| Comparative Example 2 | A-1 | 11.0 | - | - | - | - | 1.01 | 1.02 | 5.50 |

It was revealed from Examples in Table 1 that use of an electrolytic solution obtained in Examples led to improvement of the cycle characteristics of a secondary battery and suppression of an increase in IV resistance.

### Industrial Applicability

Secondary batteries using the electrolytic solution of the present disclosure can be used as various power supply such as a portable power supply and a power source for automobiles.

## Claims

1. An electrolytic solution for use in a battery comprising an electrode having a negative electrode material containing a silicon element and a carbon element, wherein the electrolytic solution comprises less than 10% by mass of a fluorinated ether represented by the following general formula (1):
HCF₂CF₂-O-R (1)
wherein R is a fluorinated alkyl group.

2. The electrolytic solution according to claim 1, wherein the fluorinated ether represented by the general formula (1) is at least one fluorinated ether selected from the group consisting of fluoroethers represented by the following general formulas (2) to (4):
HCF₂CF₂-O-CH₂CF₂CF₂H (2)
HCF₂CF₂-O-CH₂CF₂CF₃ (3)
HCF₂CF₂-O-CH₂CF₃ (4).

3. The electrolytic solution according to claim 1 or 2, wherein the negative electrode material contains Si and/or SiOa (0 < a < 2), and a carbon compound.

4. A secondary battery comprising the electrolytic solution according to claim 1 or 2.

5. The secondary battery according to claim 4, wherein the negative electrode material contains Si and/or SiOa (0 < a < 2), and a carbon compound.
